# EUROPEAN PATENT SPECIFICATION

(11) **EP 0 627 143 B1**
(45) Date of publication and mention of the grant of the patent: **30.12.1998**
(21) Application number: 93919758.8
(22) Date of filing: 18.08.1993
(51) Int. Cl.: H04L 12/24, H04M 3/24

(54) **MANAGEMENT IN TELECOM AND OPEN SYSTEMS**
MANAGEMENT IN TELECOM UND OFFENEN SYSTEMEN
GESTION DE SYSTEMES DE TELECOMMUNICATIONS ET DE SYSTEMES OUVERTS

(30) Priority: 28.08.1992 SE 9202488; 05.02.1993 SE 9300363
(43) Date of publication of application: 07.12.1994
(60) Divisional application: 97117274.7
(73) Proprietor: TELEFONAKTIEBOLAGET LM ERICSSON, 126 25 Stockholm (SE)
(72) Inventor: CAREBRAND, Per-Arne, S-118 42 Stockholm (SE); SVEDBERG, Johan, S-115 24 Stockholm (SE); FANTENBERG, Johan, S-112 47 Stockholm (SE); TALLDAL, Björn, S-161 46 Bromma (SE); PALSSON, Martin, S-146 45 Tullinge (SE); GILANDER, Anders, S-195 54 Märsta (SE); SELLSTEDT, Patrik, S-124 71 Bandhagen (SE); STRÖMBERG, Stefan, S-141 52 Huddinge (SE)
(74) Representative: Rosenquist, Per Olof
(86) International application number: SE9300687
(87) International publication number: WO9406232

(56) References cited:
- EP-A- 0 442 809
- US-A- 4 782 506
- US-A- 4 903 263

## Description

### Technical field

The present invention relates to a management network with at least one managing system and at least one managed system for telecom or open systems, in which said managed system includes physical and/or logical resources, which by the managing system are considered and managed as managed objects in the form of data images of the resources, and in which the managing system for its operations directed towards the managed system utilizes an information model of the managed system, which includes a description of all managed objects adapted to the mode of operation of the managing system.

With a "management network with at least one managing system and at least one managed system" is meant that the management network can include at least one managing system which can manage one or more managed systems, which likewise can form part of the management network.

With an open system is meant a system of the kind, which is defined in Reference Model of Open Systems Interconnection (OSI) for CCITT Applications, Rec. X.123.

To perform management activities in a management domain there must be at least one manager which is responsible for the management of the resources. A resource is something which includes concepts and ability of the domain. An example of a domain is a telecom network, where the resources are switches, trunks etc. and management units are e.g. operator tools and managing systems for the network.

For operation of telephone networks each individual company has used a number of different systems for operation and maintenance. CCITT has developed a standard model for operation and maintenance. CCITT has developed a standard model for operation and maintenance in telephone networks, called TMN (Telecommunication Management Networks). The basic principle of TMN is to indicate an organised network structure, which admits connection of various managing systems to telecom equipment. This is achieved by use of standardised protocols and interfaces. The telephone companies and other operators will require that future telecom networks are adapted to TMN.

CCITT has a recommendation for this under developement, the M.3000-serie.

TMN considers all network nodes as network elements (NE). These network elements are made as telephone switches and transmission or transport network products.

The functional structure of TMN comprises
- management functions (OSF, Operations Support Functions), which manage application programmes available for users, such as management functions for "Business Management" and service and network administration;
- data communication functions (DCF; Data Communications Functions), which manage data communication between the managing systems OSS and the managed systems NE;
- mediation functions (MF, Mediation Functions), which convert information (between e.g. managed objects), manage data, concentrate, reduce and edit, make decisions relating to e.g. threshold limits and store data, which identify equipment and networks;
- network element functions (NEF, Network Element Functions), which manage telecom processes as switching functions and transmission, and take part in management processes for telecommunication, as fault localisation and protection connections;
- functions for interface adaption (QAF, Q-Adapter Functions), which perform conversion of interfaces from non standard to standard;
- work station functions (WSF, Work Station Functions), which constitute the user terminals of TMN, show information and assist management technicians to manage the network.

TMN includes also an interface, called Q3. Q3 is besides being a communication protocol also an information model, which comprises data schemes, operations and notifications. The exact details of the Q3 interface and its protocols appear from the CCITT recommendations Q961 and Q962.

TMN considers all physical and logical objects as managed objects, which in TMN are referred to as MO (Managed Objects), a denomination which will be used alternately also here henceforth. Managed objects are data images of such physical or logical resources as wires, circuits, signal terminals, transmission routes, events logs, alarm reports etc..

A specific relationship occurs between a resource and a managed object. A resource can be related to one or more MO or none at all. On the other hand an MO can be related to one or more resources or none at all. This relationship is important if an MO is affected by some form of operation or maintenance activity. A MO must not be removed before the functions to which it is subordinated have themselves been removed. This information model is based upon object orientation and the relation concept.

The managing system (OSS- Operation Support system) treats network elements and subordinated managing systems as a collection of managed objects in an imagined data base MIB (Management Information Base). These managed objects are constituted by instances of an MO class, such as a number of signal terminals of the same type. Each terminal will thus constitute an instance of the class signal terminals.

In TMN exists also the concept MIM (Management Information Model), which refers collectively to all information related to managed objects. MIM is a model of all attributes, relations, operations and notifications referable to managed objects. To be able to search for MO-instances a management information tree MIT (Management Information Tree) is used. This tree structure starts in the network and indicates network elements and subscribers or equipment.

For operation and maintenance each seperate unit or resource, of which information is required, or the operation of which is influenced from the outside of the system, is represented by a managed object. Each information exchange referable to the management of operations or units, which must be influenced or which must report something (such as set up of data, assignement of name, or management of alarms) is done in the form of operations on, or notes from managed objects.

A managed object includes attributes and can also have a relation to other managed objects. A number of different operations can be directed towards a managed object and events can be generated by such objetcs.

Below an account of deficiencies of TMN will be given.

Network elements and subordinated managing systems are managed by a managing system by means of operations towards the managed objects in the managed systems and supervision of notifications transmitted by the managed system.

Allowed operations towards managed objects in the managed system are determined by an information model of the managed system, together with the notifications, which can be transmitted. The information model states:
- which classes of managed objects that are defined,
- which operations the managed objects in these classes accept,
- which notifications that the managed objects are expected to transmit,
- how many instances which can be created or removed, in each class of managed objects,
- dependences between managed objects, e.g. that one managed object requires existence of another one,
- dependences in a managed object, e.g. that a specific attribute value of one attribute is only allowded if another attribute is set to a specific value or if the managed object only can be removed if it is in a specific state,
- the purpose and intention with managed objects and their notifications.

To be meaningful the managing system must know the information model of the managed system. This is in TMN called "shared management knowledge".

At a change of the information model the management model must be updated in accordance with this change. In conventional systems these changes are made by:
- Definition of the new information model. This is made by specifiations for managed objects written as GDMO/ASN.1 templates (GDMO - Guidelines for the definition of Managed Objects according to CCITT rec. X.722 ISO/IEC 10165-4) and ER-diagrams (Entity-Relationship diagrams) for the managed objects. The specifications for the managed objects state formally (machine readable) syntax (e.g. operations and notifications) for the managed object.

All other parts of the information model, as dependences, the number of instances etc., are stated informally as comments in natural language.
- Implementation and verification of the new information model in the managing system and the managed system.
- Confirmation of that the managing system and the managed systems are adapted to the same information model by performing accepted test sequences.
- Updating of the network consisting of the managing system and the managed system with this new version of the information model.

That just mentioned above results in a number of problems:

Firstly, the developement of managing systems and managed systems must be coordinated, which leads to higher developement costs and/or a delayed introduction of new services on the market.

Secondly, the abscence of formalism with respect to the specifications of the managed systems, makes implementation, verification and acceptance of both managing system and managed systems to a difficult and time demanding task, since the interpretation of the specifications is open to discussion.

Thirdly, updating of networks must be planned and carried out carefully, as there are dependences between different versions of the managing systems and managed systems. This involves a delayed introduction of new services in the network.

The purpose of management according to the TMN model is to be a framework for standardisation of management for telecom networks and open systems. The management structure strongly influences the management paradigm for new system architectures. There are strong reasons to assume the management paradigm according to the TMN model for the whole management and not only for domains subjected to standardization. The main reason for this is that it is desirable to be able to develop and design management functions in a uniform way.

### Summary of the invention

Generally, a first aim of the present invention is to provide a new architecture for management functions, admitting
- cost effective design of management functions,
- less need for coordination and planning of updates of management functions and resources,
- effective support of complex processes, such as network management,
- that the management technology can be developed separately in relation to the resource technology,
- that competence of different kinds can be utilized optimally, i.e. an expert on e.g. the resource domain should focus his efforts to this domain, whereas a person knowing how to design mangement, should be busy with this.

According to a first aspect of the invention this aim, as well as other aims which will appear from the description given below, is attained in that the management network defined by way of introduction besides the managed system comprises a generic manager and a representation of the management information model, where the performance of the generic manager during operation is determined by this model representation.

According to a second aspect said aims are attained in that, in the management network in question, there is implemented in the managed system a representation of the management information model as instances of a special class of managed objects.

According to a third aspect said aims are attained in that the management network in question is characterized in that
the management information model has a specification in the form of a decidable representation of the management information model, said management information model defining
- which states of interest from a management point of view the managed system can assume,
- which operations that can be accepted by the managed system,
- which operations that can be directed towards a managed system in a specific state,
- which state the managed system achieves when it is subjected to a specific operation,
wherein by a decidable representation is meant that the above definitions are expressed in a machine interpretable language, allowing the above properties of them to be decided from the specification, and in that,
for defining the state of a certain managed system, there are defined
- instances of managed objects able to exist,
- attributes of these objects and
- possible values of these attributes.

According to a fourth aspect said aims are attained in that the management network in question is characterized by a generic manager, which includes functions which enable an external user to interact with the managed system by manipulating representations of the management information model of the managed system.

Various advantageous embodiments of the invention have obtained the characterizing features stated in the respective dependent claims.

By the separation of the managing system the following advantages are achieved:
- the generic manager can be reused for more management functions for more applications in the managed system;
- the generic manager is not influenced by changes in the information model;
- heterogenous networks with a managed system in different versions and with different functions can be managed by one and the same generic manager.

The advantages of the implementation of a representation of the information model in the managed system is the following:
- The representation is always stored in a node in the network.
- The representation always is in accordance with the model of the managed system.
- Easy management of the shared management knowledge.
- Easy management of updates of the system and network.
- Updates of system and network can be made without operation disturbances. No timeslots will appear in which the managing system and the managed system have different opinions with respect to which information model that is valid.

A number of advantages follow from making a specification of the information model in the form of a decidable representation of the information model.
- The generic manager can be made more powerful since it can predict the new state of the managed system after a specific operation, and it can also suggest which operations that are allowed in a specific state.
- The implementation and verification of the managed system as well as management applications are simplified as the expected performance is well specified. Generation of a large part of the implementation code from the specification is also enabled.
- The robustness during operation is improved as only operations leading to allowed state transitions in the managed system can be accepted.
- Early emulation and evaluation of the information model is simplified, which makes the specification task simpler.
- The management model can be formed to be more robust and easy to use by admitting a rather free sequence of operations but still guaranteeing a complete configuration of the managed system, before the configuration is put into an operational state.

### Description of the drawings.

A number of embodiments of the invention will now be described below in greater detail with reference to the enclosed drawings, on which
Figure 1 illustrates in a block diagram one of the basic principles of the invention,
Figure 2 is a flow chart of the imlementation of one of the block units in Figure 1,
Figure 3 is a block diagram of the architecture of the management network according to the invention,
Figure 4 is a block diagram of one of the units in Figure 3,
Figure 5 is a view intended to illustrate a controlling managing system view of one resource,
Figure 6 is a view illustrating the relation between type and instance level,
Figure 7 and 8 are views which illustrate how several units on an instance level share a common unit on a type level in a first and second system, respectively,
Figure 9 is a view which illustrates a controlling managing system view of both systems according to Figure 7 and 8,
Figure 10 is a view which illustrates an example of an information model, which is stored in a type unit,
Figure 11 describes an operation which the controlling managing system can perform by interpretation of the resource representation in Figure 10,
Figure 12 illustrates a change of the information model,
Figure 13 illustrates an example of an operation which violates the information models in fig 10 as well as fig 12, and which never would be directed towards the managed system,
Figure 14 in a block diagram illustrates how old and new technology can coexist in a management domain with two controlling managing systems,
Figure 15 in a block diagram shows a managing system unit comprised in a framework, which is obtained by the invention principle illustrated in Figure 1,
Figure 16 is a view, which illustrates cooperation between a human user and a representation of a resource,
Figure 17 in a similar view as in fig 16 illustrates such an invalid cooperation,
Figure 18 illustrates how resource representations are organised in a data structure,
Figure 19 for the purpose of illustration very schematically shows the general design of a model driven system consisting of a managing system and a managed system,
Figure 20 schematically shows two object types of different classes,
Figure 21 in a similar view as in fig 20 shows the properties of a special object type used when practising the invention,
Figure 22 illustrates schematically the connection between "normal" object classes and objects of the special object type for the formation of a management information model,
Figure 23 illustrates different moments during code generating in connection with the creation of the information model,
Figures 24-29 illustrate moments for enabling interpretation of the information from a special object class in the managed system,
Figures 30-40 are definitions in pseudo-code, where

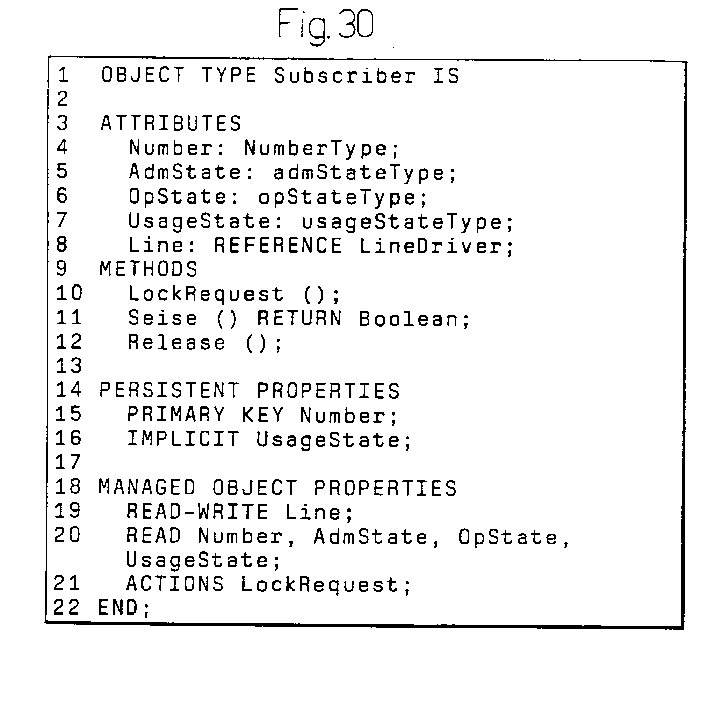

Figure 30 is a definition of a managed object,

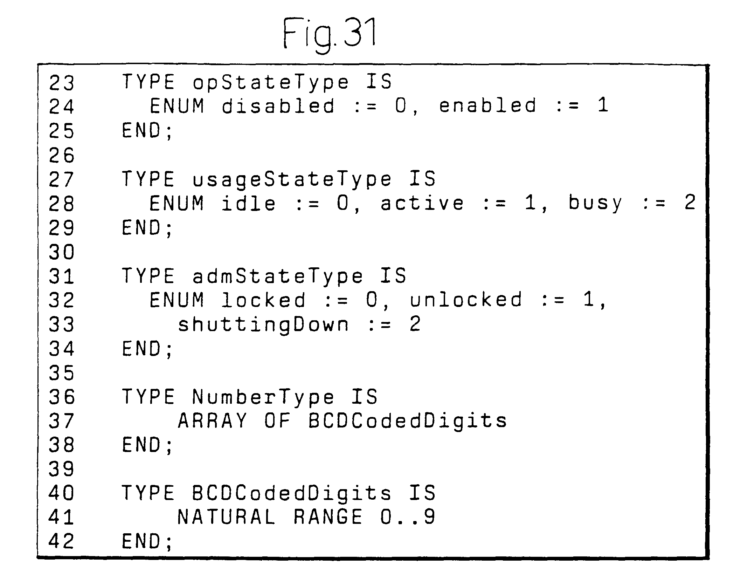

Figure 31 shows how potential attribute values are determined by the attribute type,

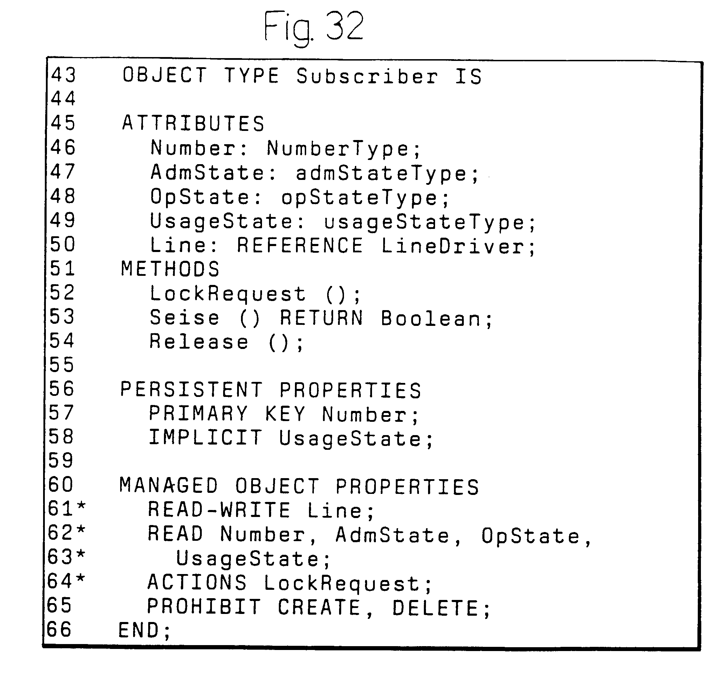

Figure 32 is a definition of operations,

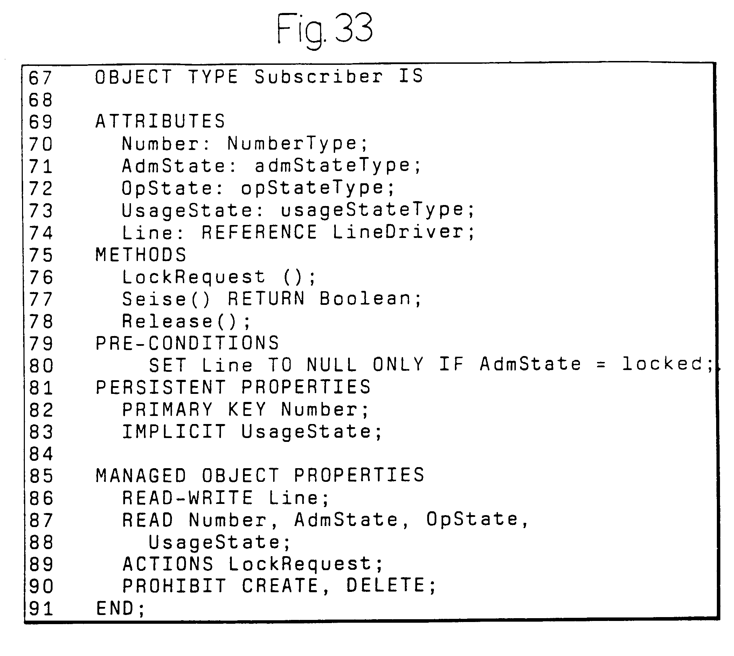

Figure 33 states examples of preconditions,

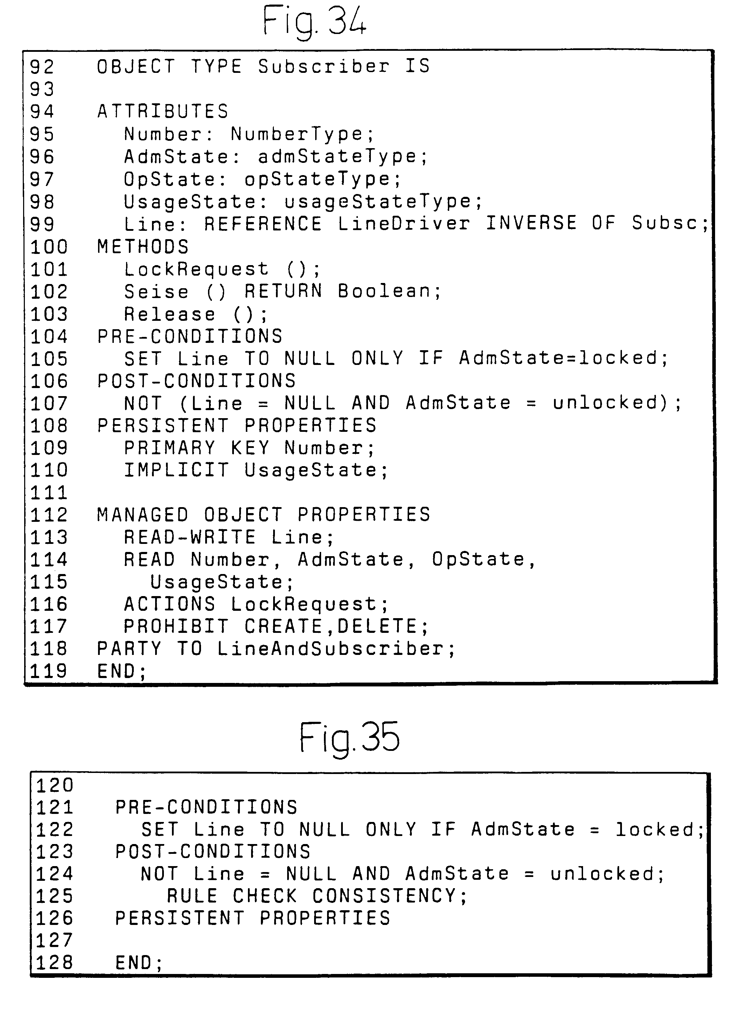

Figure 34 states examples of end conditions,
Figure 35 states examples of end conditions where a managed system checks the consistency,

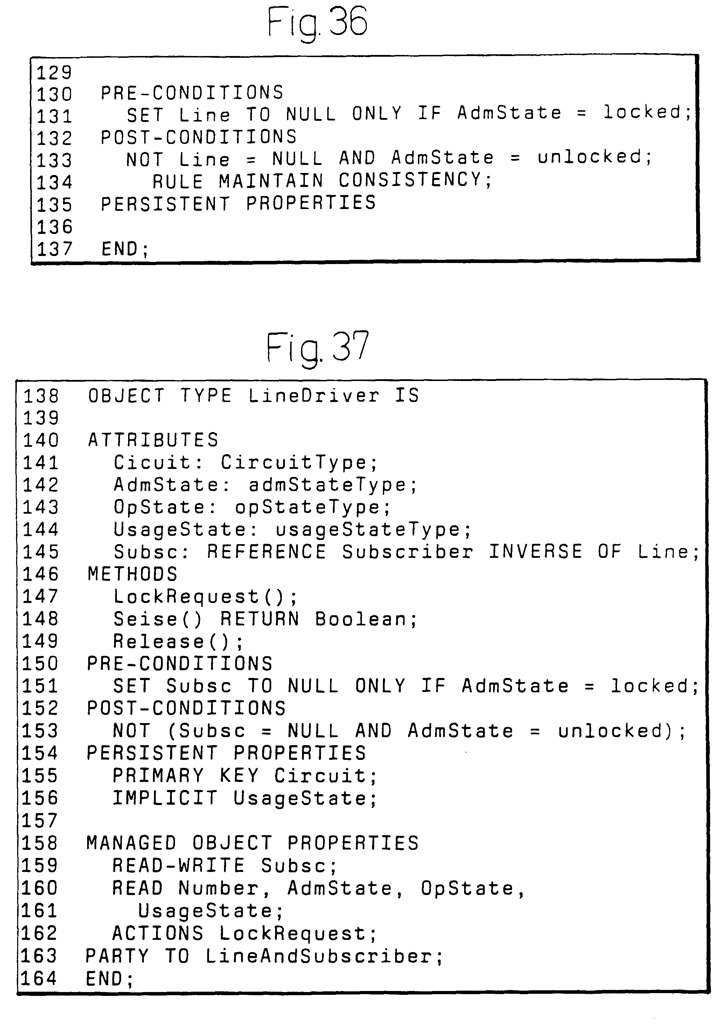

Figure 36 states examples of end conditions where the managed system keeps the consistency,
Figure 37 is a defintion of an object called LineDriver,

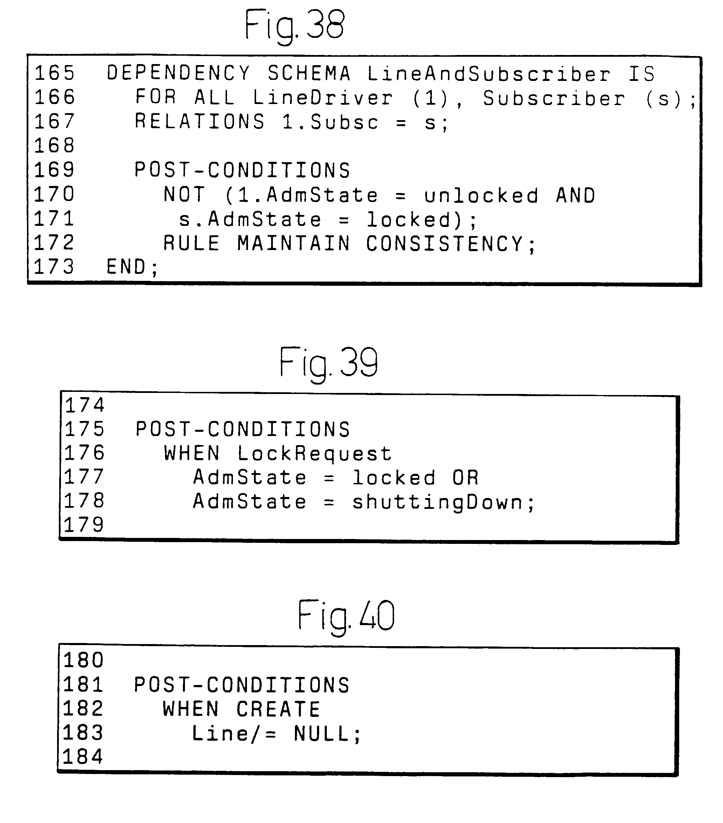

Figure 38 states an example of a dependency scheme,
Figure 39 states an example of an end condition, which is connected to a method,
Figure 40 states an example of an end condition, which is conected to a create-operation,

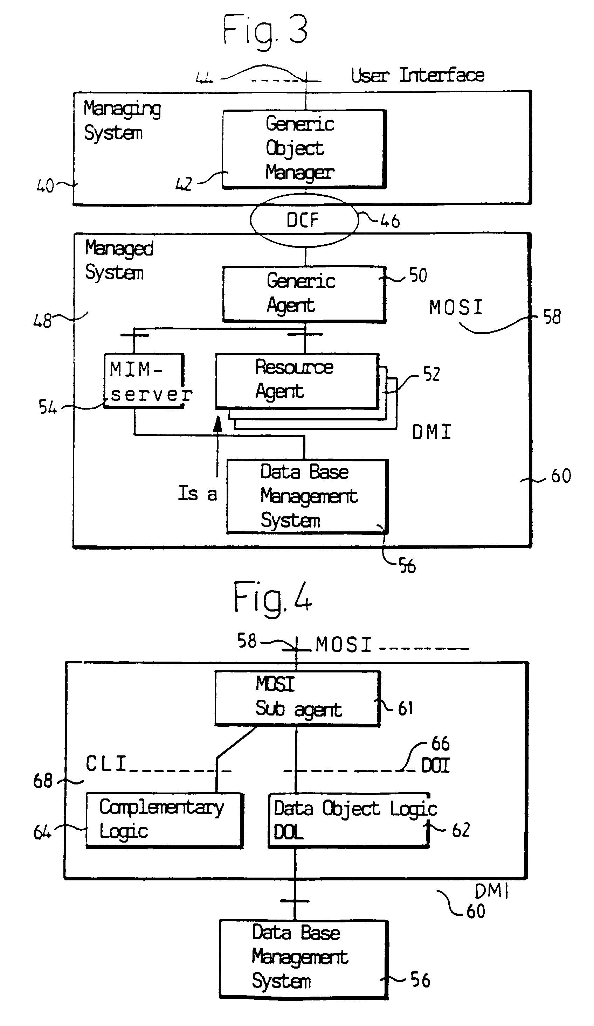

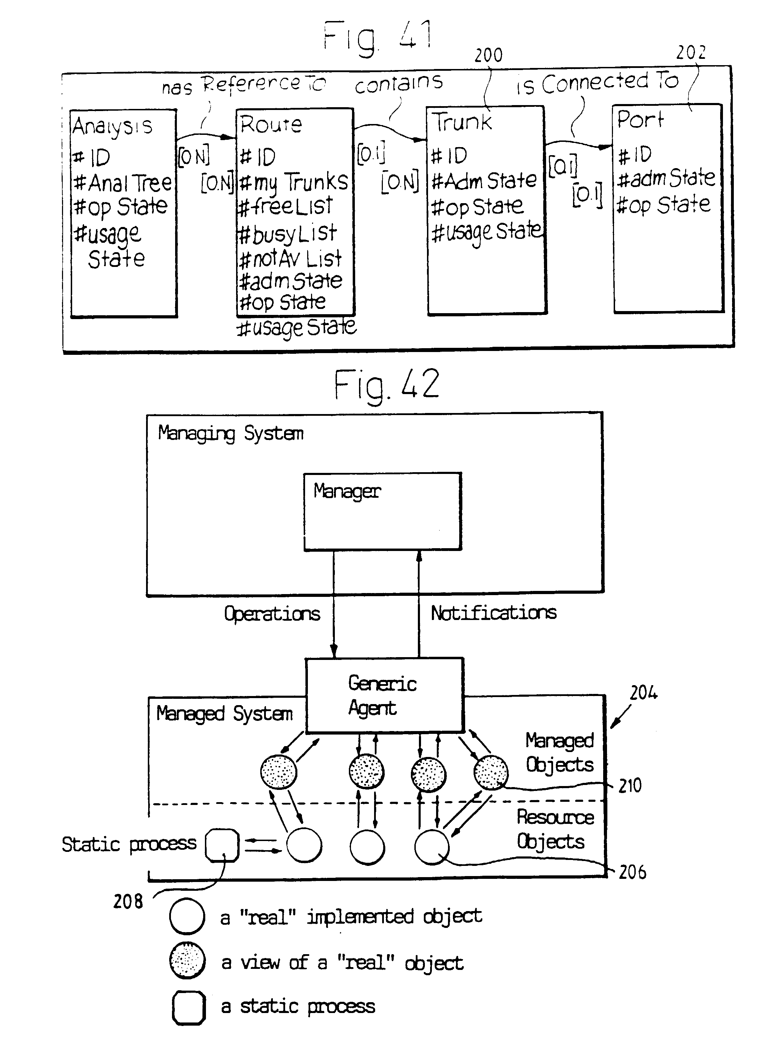

Figures 41-44 in block and functional diagrams recapitulate applicable parts of what has earlier been described with respect to the invention and its various aspects, particularly with reference to Figure 3 and 4,

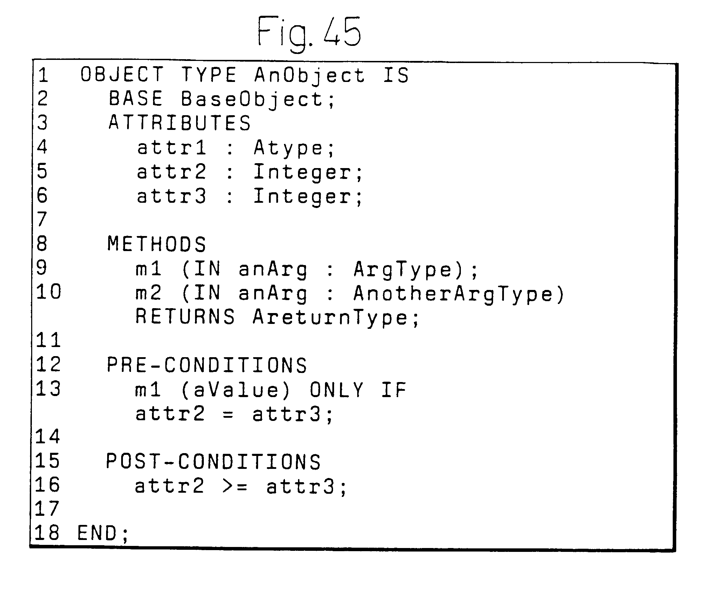

Figure 45 gives examples of syntax for the specification of types of managed objects with attributes, methods and pre and end conditions,

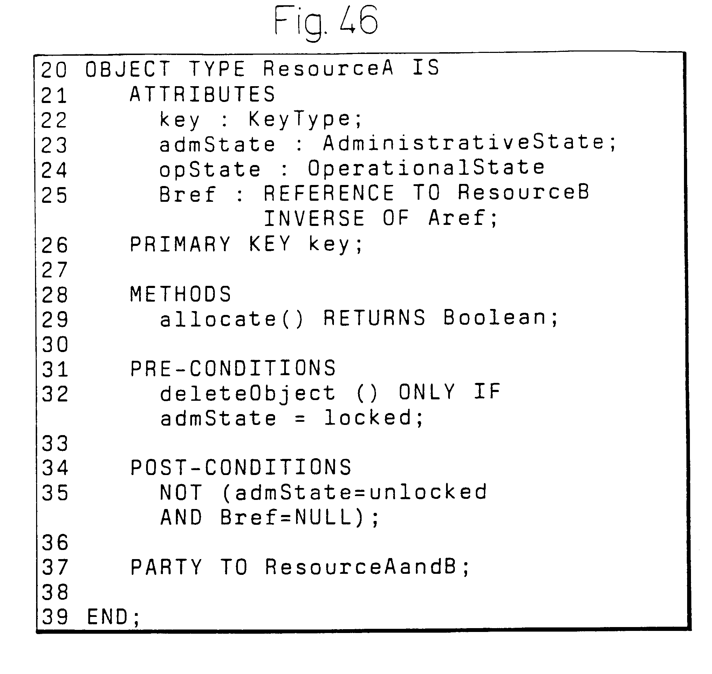

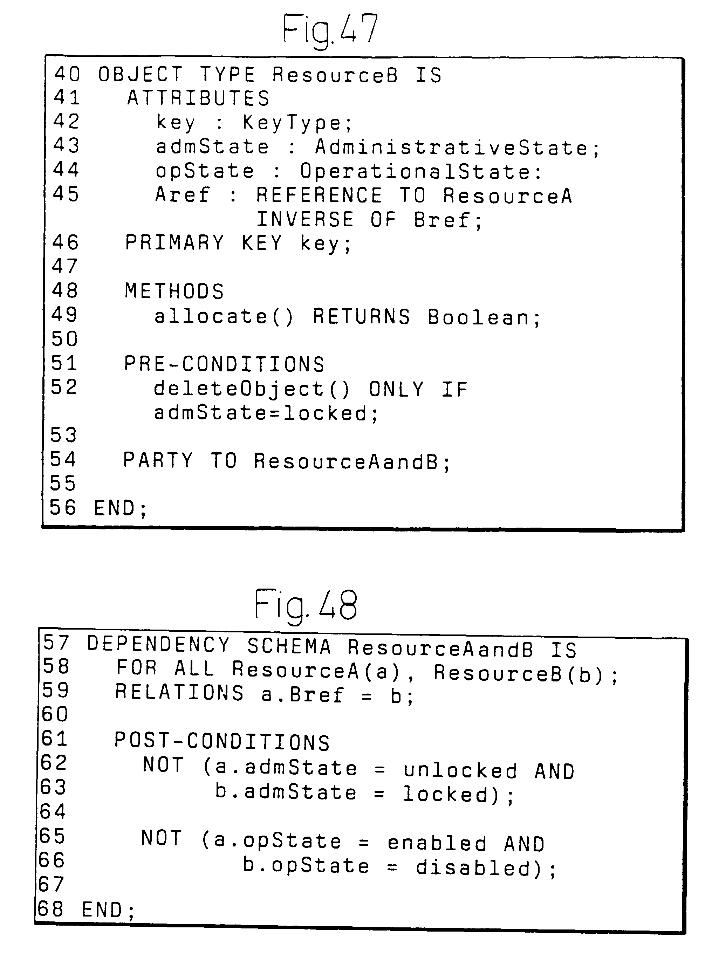

Figures 46 and 47 specify with the use of the same syntax two different object types,
Figure 48 likewise with the same syntax specifies dependences between the object types according to Figure 46 and 47,

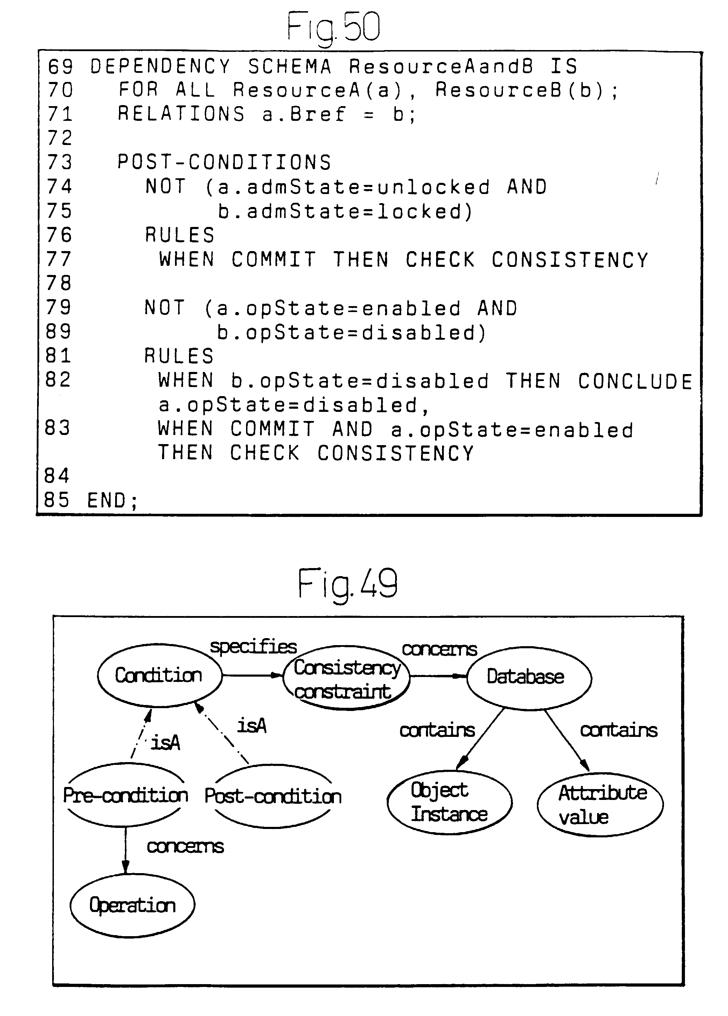

Figure 49 shows in a block diagram form a concept model, which illustrates relations between end/preconditions and the concepts on which they are applicable,
Figure 50 gives examples with the use of the same syntax as in Figures 45-47 of a specification of implementation mechanisms to keep dependences between object types according to Figure 46 and 47,

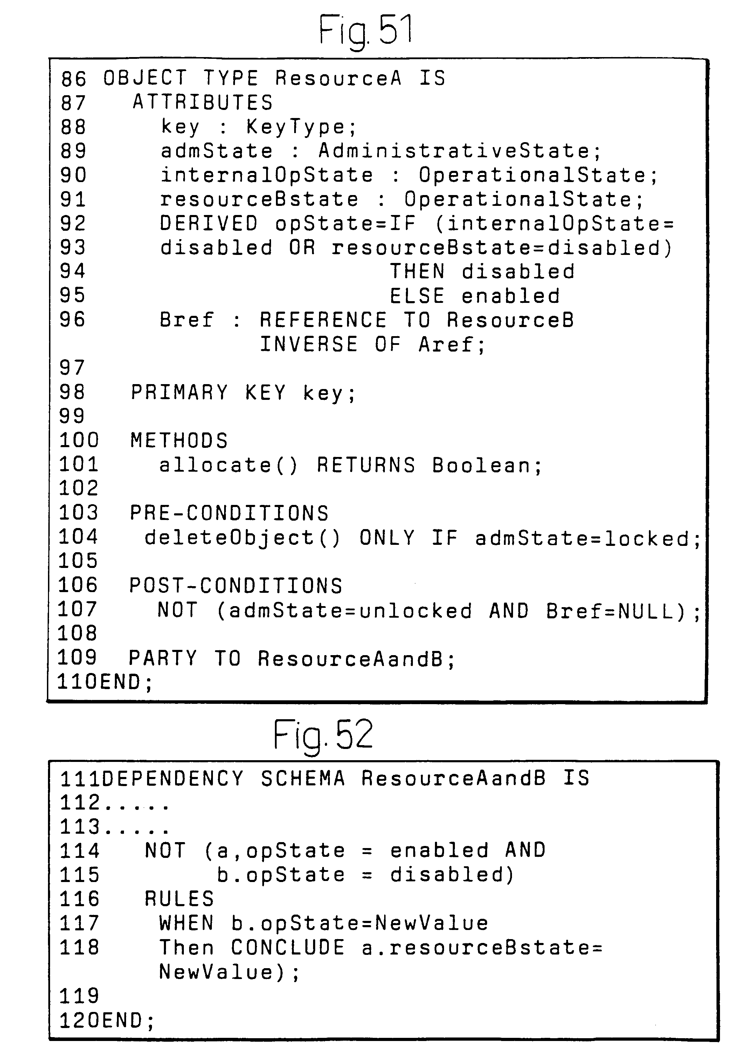

Figure 51 likewise with the same syntax specifies an attribute in the object type according to Figure 46 as an attribute derived from an attribute in the related object type according to Figure 47,
Figure 52 specifies the propagation from the one attribute to the other one in Figure 51,

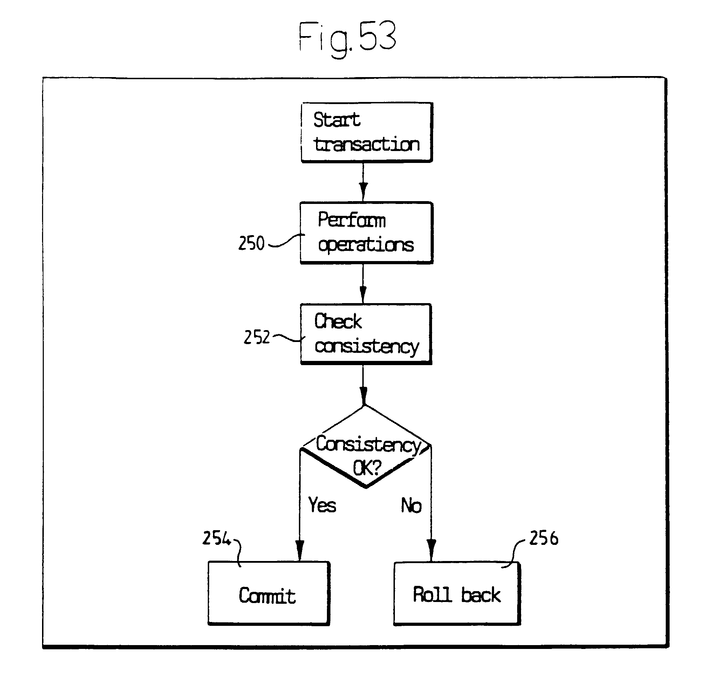

Figure 53 shows in a flow chart form the steps of a transaction with an incorporated consistency check,

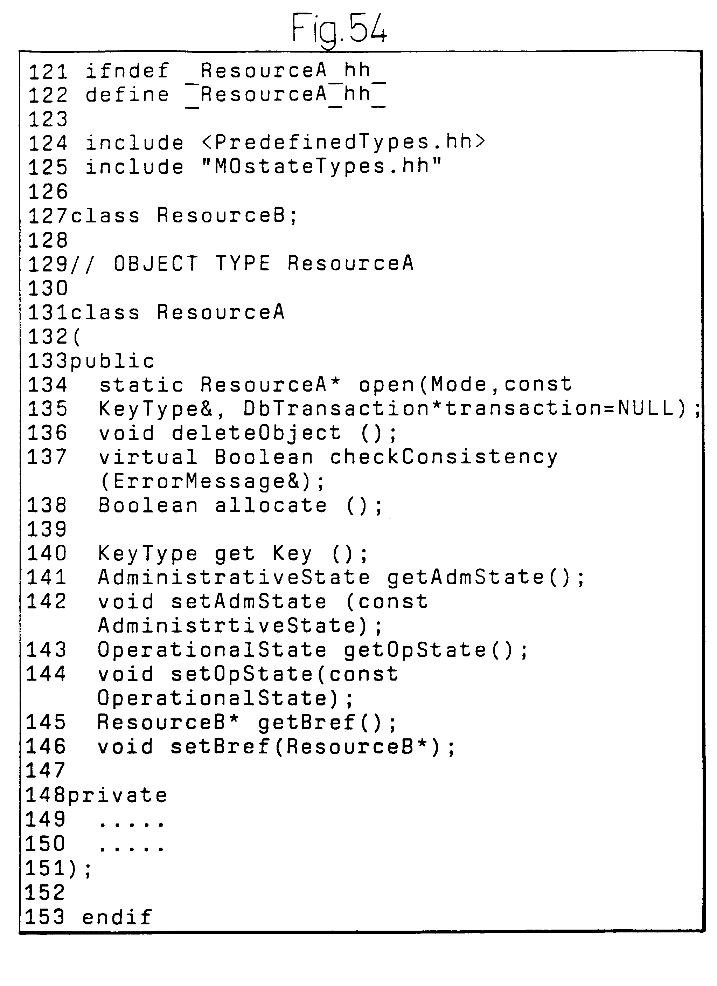

Figure 54 shows the public part of a declaration file, which is obtained at compilation of the object types according to Figure 46 to a class in C++ code,

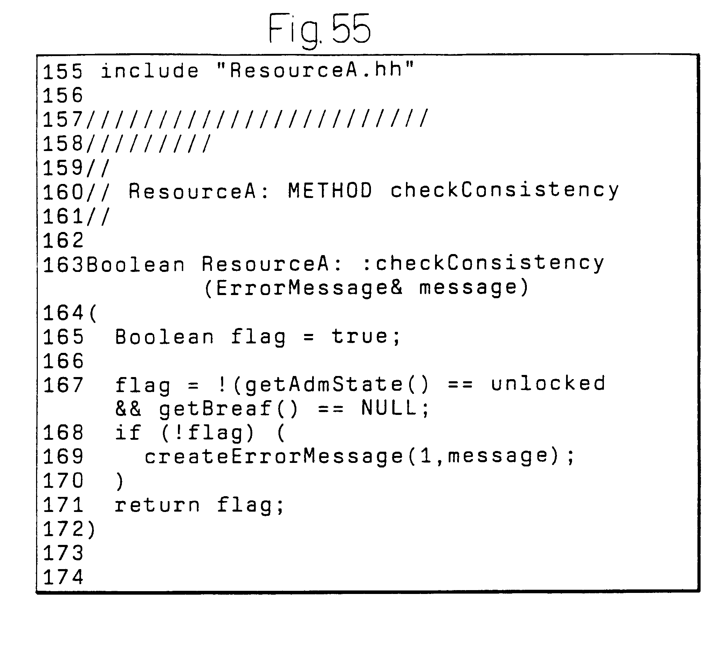

Figure 55 shows likewise in C++ the implementation of a method, which is incorporated in the file according to Figure 54,

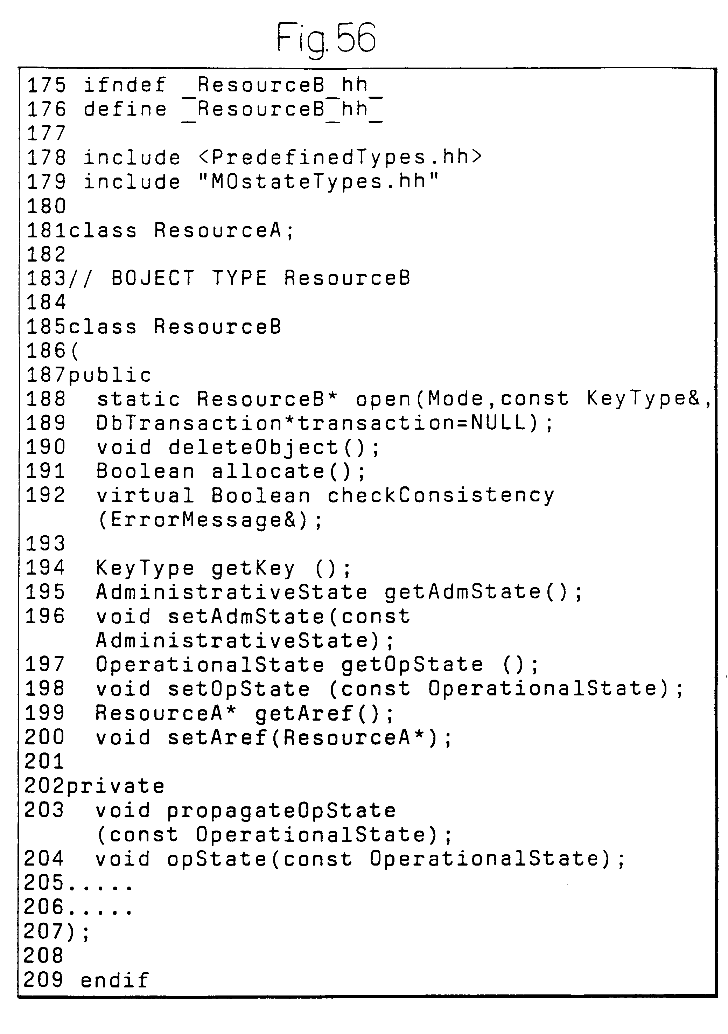

Figure 56 shows in C++ the declaration file, which is generated from the specifications according to Figure 47 and 50,

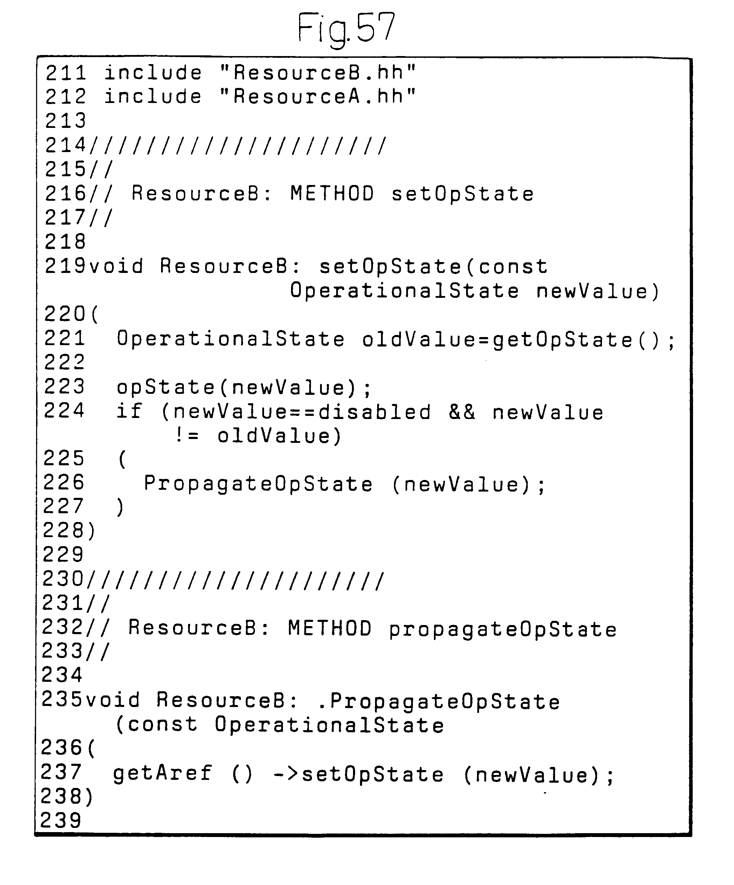

Figure 57 shows in C++ the implementation of two methods of the object in the declaration file according to Figure 56,

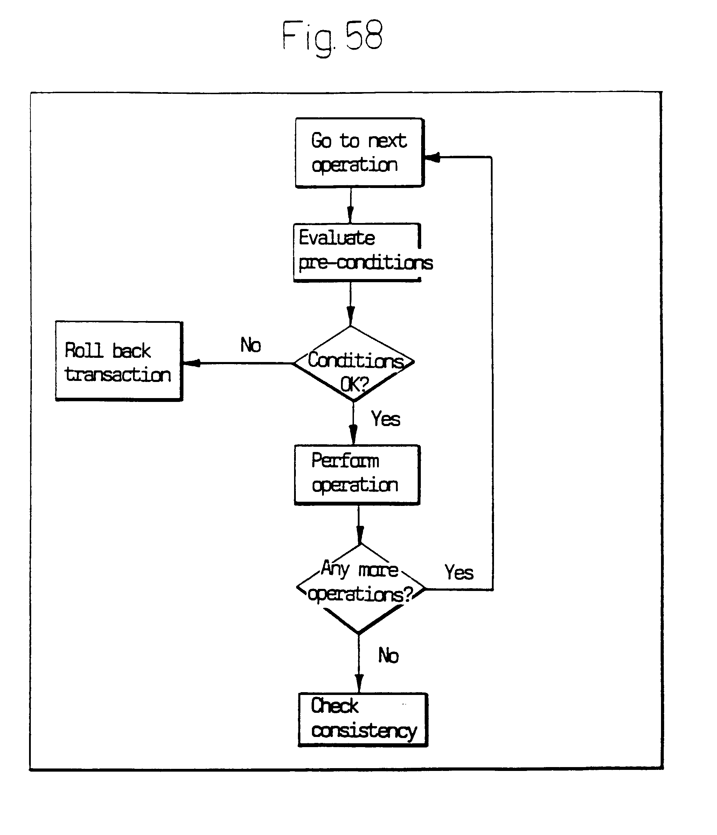

Figure 58 shows in a flow chart form the algorithm for the execution of operations of a transaction, in which a check of preconditions is included,

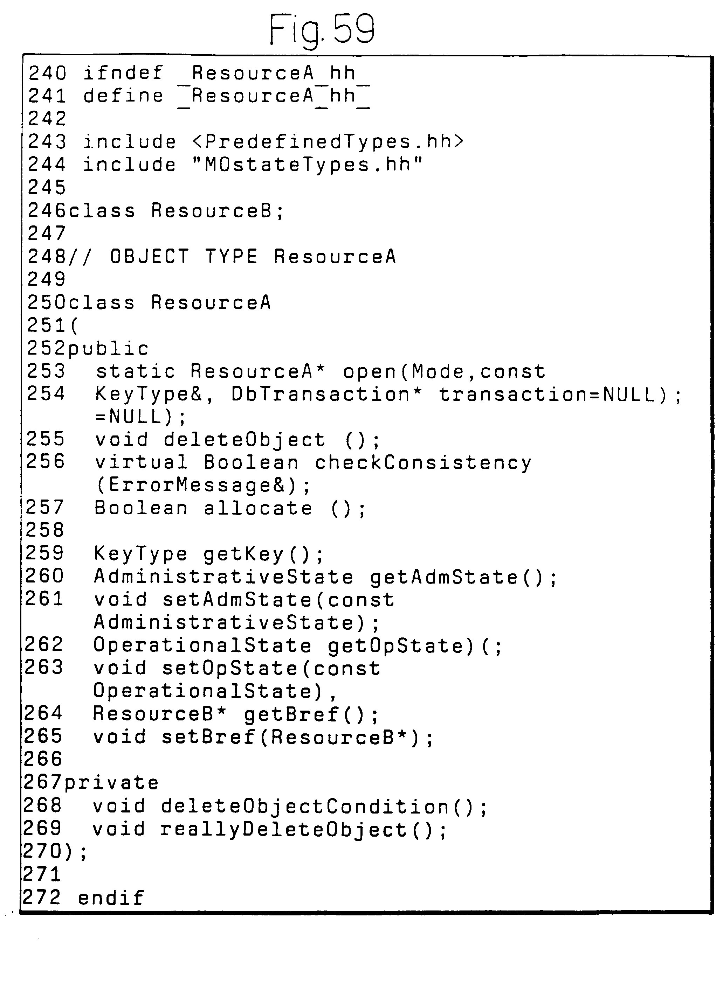

Figure 59 shows in C++ an extension of the statement file according to Figure 54 by a method to check the precondition for removal of an object,

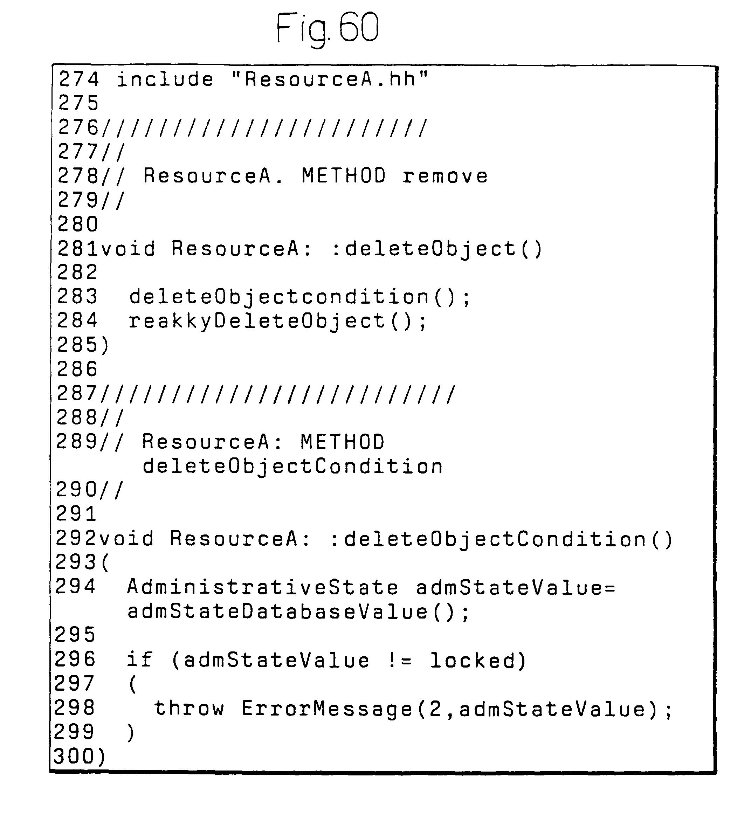

Figure 60 shows in C++ implementation of two methods of the object according to Figure 54,

### Description of embodiments

According to one of the characteristics of the invention a separation is made of the managing system into a generic manager and a representation of an information model of a managed system.

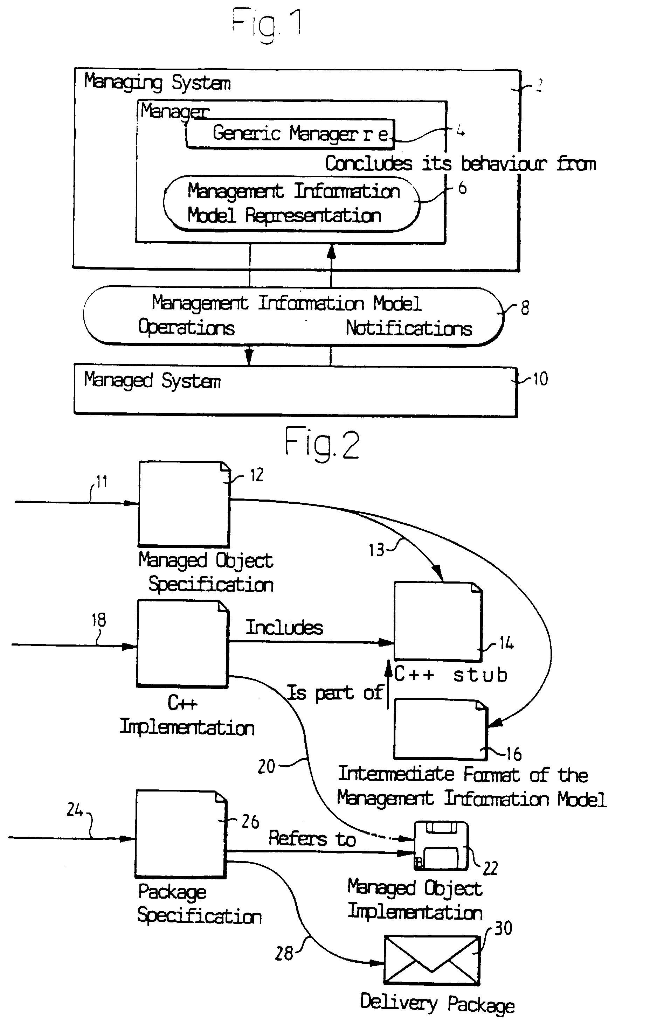

In Figure 1 this is illustratated schematically. The managing system is there denoted by 2. The performance of the generic manager 4 is determined by the representation 6 of the information model 8. From the model representation 6 the generic manager can in other words make decisions related to which operations, that should be made towards a managed system 10, and can decide which operations, that are required to achieve a desired state of this. The model representation 6 is also used for the correct interpretation och packeting of data from and to, respectively, the managed system 10.

When new resources are introduced in the managed system 10 it is only required to change the model representation 6.

According to another characteristic of the invention a representation of the information model is introduced (stored) in the managed system.

For the specification and implementation of managed objects in the system a machine interpretable language is used. In this language the specifications are written for the the managed objects. These specifications of managed objects form together the specification of the management information model.

This specification is conveyed to a compiler, which generates implementation stub code and intermediate format for the management information model.

The implementation stub code is then possibly refined manually and is compiled to implement the managed system. This implementation is then packeted together with the intermediate format of the management information model to loading packages. This loading package is then loaded into the target system, i.e. the managed system. During this loading process the intermediate format of the management information model is used to create a representation of the management information model.

In the managed system the representation of the management information model is implemented as instances of a specific class of managed objects. This class is below denoted MIM-server (Management Information Model Server). For each class of managed objects an instance is created of the MIM-Server class.

The creation of loading packages appears schematically from Figure 2.

According to Figure 2 a specification 12 of the managed object is written at a first step 11. At the next step 13 this specification is compiled to an implementation stub code 14 in C++ and to an intermediate format 16 of the object specification. For a detailed description of the language C++ references are made to Margaret A Ellis, Bjarne Stroustrup: "The annotated C++ Reference Manual".

According to step 18 the managed object is implemented in C++. This implementation comprises the created stubcode, which comprises the intermediate format of the specification. In step 20 the C++ implementation is compiled to 22.

At loading of a package 30 in the managed system, a new instance of the MIM-server class is created for each class of managed objects, which is implemented by loading packages.

According to a further characteristic of the invention the management information model specification is performed as a decidable representation of the management information model.

The management information model states
- which states the managed system can assume (states of interest from a management point of view),
- which operations that can be directed towards the managed system,
- which operations that can be directed towards a managed system in a specific state, and finally
- which state the managed system achieves when it is subjected to a specific operation .

With a decidable representation of the management information model we mean here that these definitions should be able to be expressed in a machine interpretable language, leading to the above properties being determinable from the specification.

The block diagram in Figure 3 shows the basic design blocks of the architecture of the management function.

In the managing system, here denoted 40, the generic manager 42 is included with a user interface 44. In this interface all managed objects of the managed system can be inspected and modified.

DCF-Data Communication Function 46, which also has been mentioned by way of introduction, is a protocol implementation, which carries a management protocol as CMIP or similar. This communication function is not a part of the invention.

In the managed system denoted 48 a generic agent 50 is included, which terminates the management protocol.

A number of resource agents 52 are represented for the classes of managed objects in the managed system. For each class of managed objects there is a resource agent. The termination of the management protocol which is unique for the class of managed objects is terminated in the resource agent.

The MIM-server 54, which likewise has been mentioned above, generally is a resource agent for the class MIM-server of managed objects. The MIM-server is a supplier of the representation of the real management information model of the managed system.

The data base management function 56 (DBMS - Data Base Managing system) is an object oriented data base server. It can store, access and update object structured persistent data.

The auxiliary interface 58 for managed objects (MOSI - Managed Object Service Interface) is a general interface, which is supplied by all resource agents. The operations in this interface are create, erase, write, read and method. The operations in MOSI are always directed towards a specific instance of a specific class of managed objects.

The data management interface 60 (DMI - Data Managing Interface) is the interface towards DBMS. It has operations for creation, erasing, reading and updating of object structured persistent data.

The MOSI-interface specification is given below:

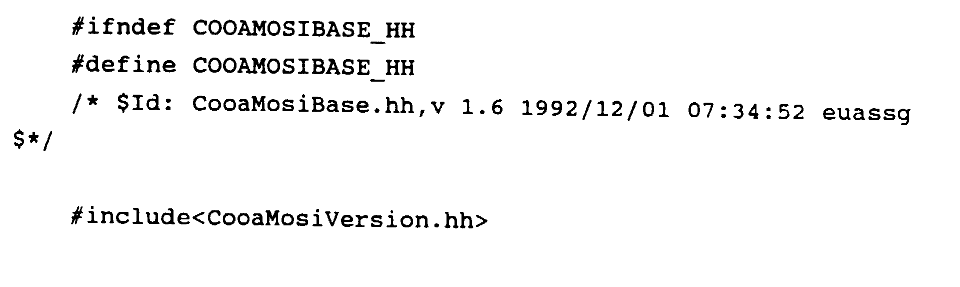

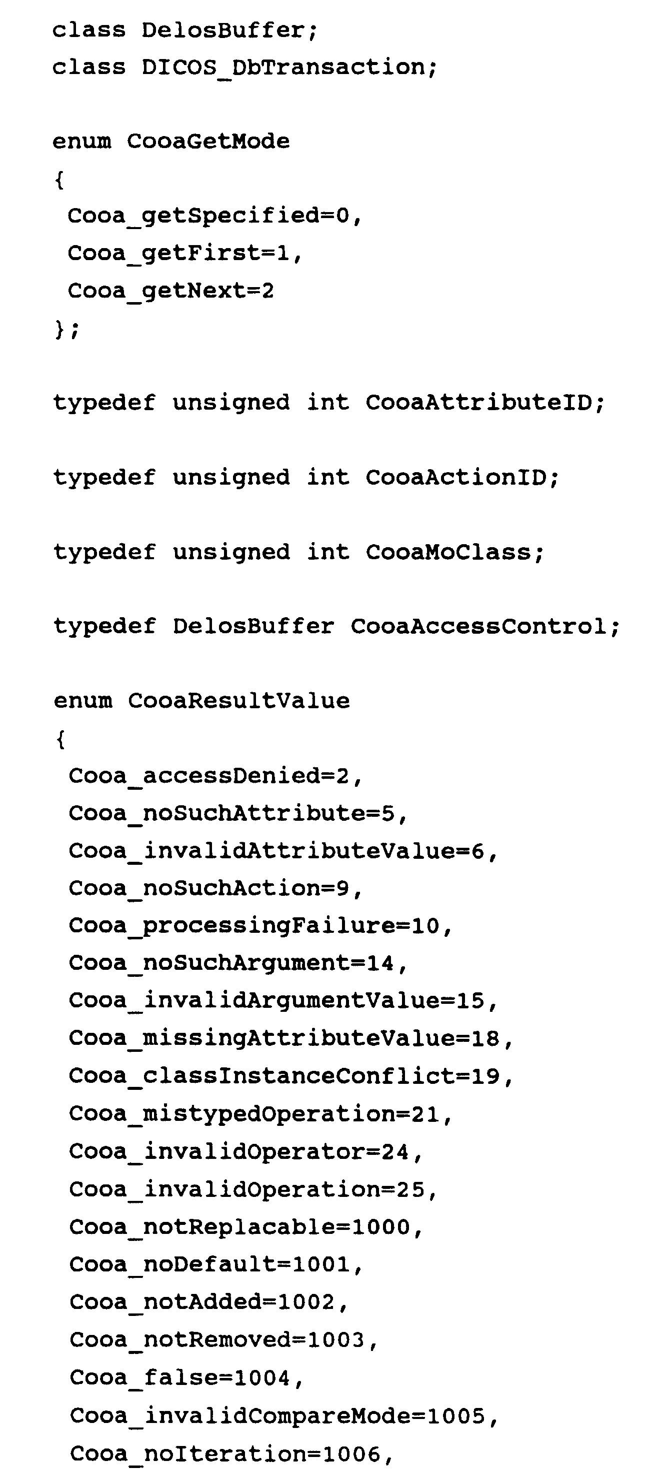

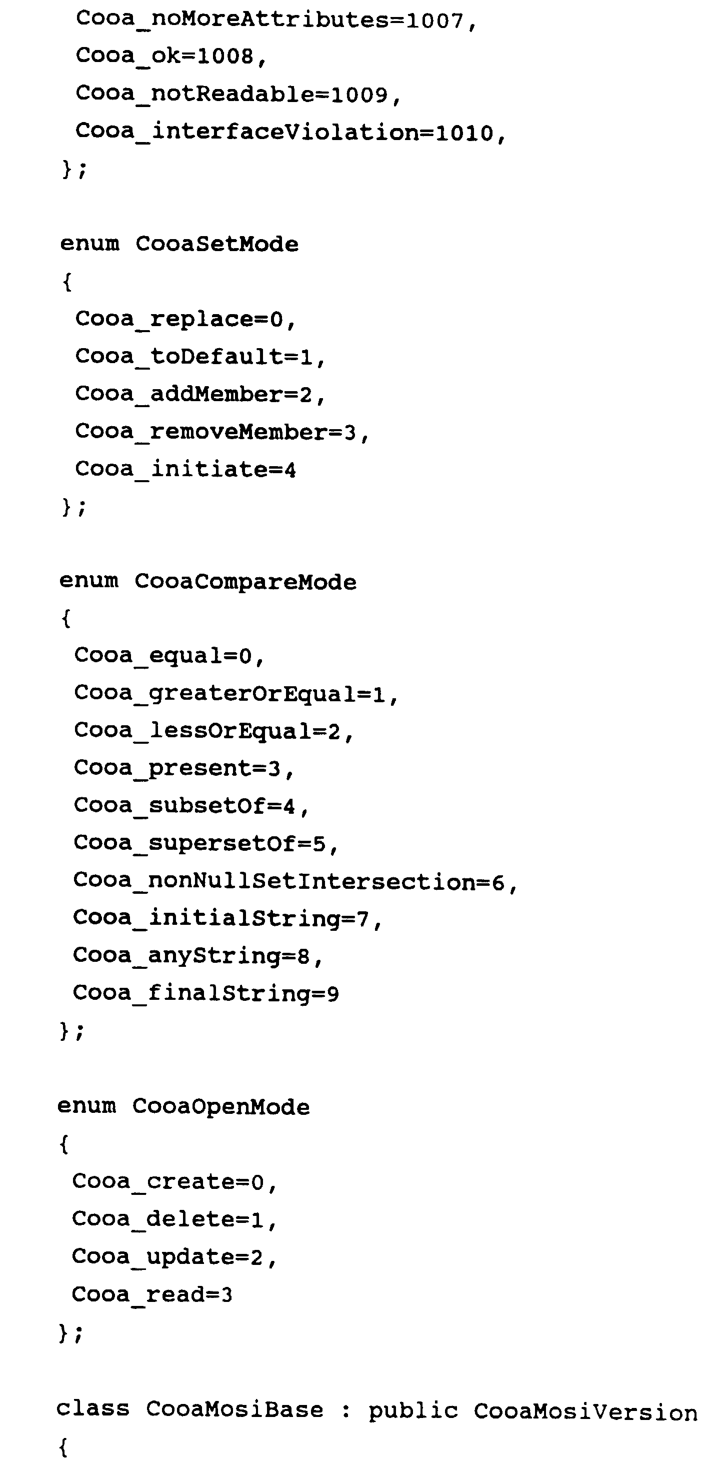

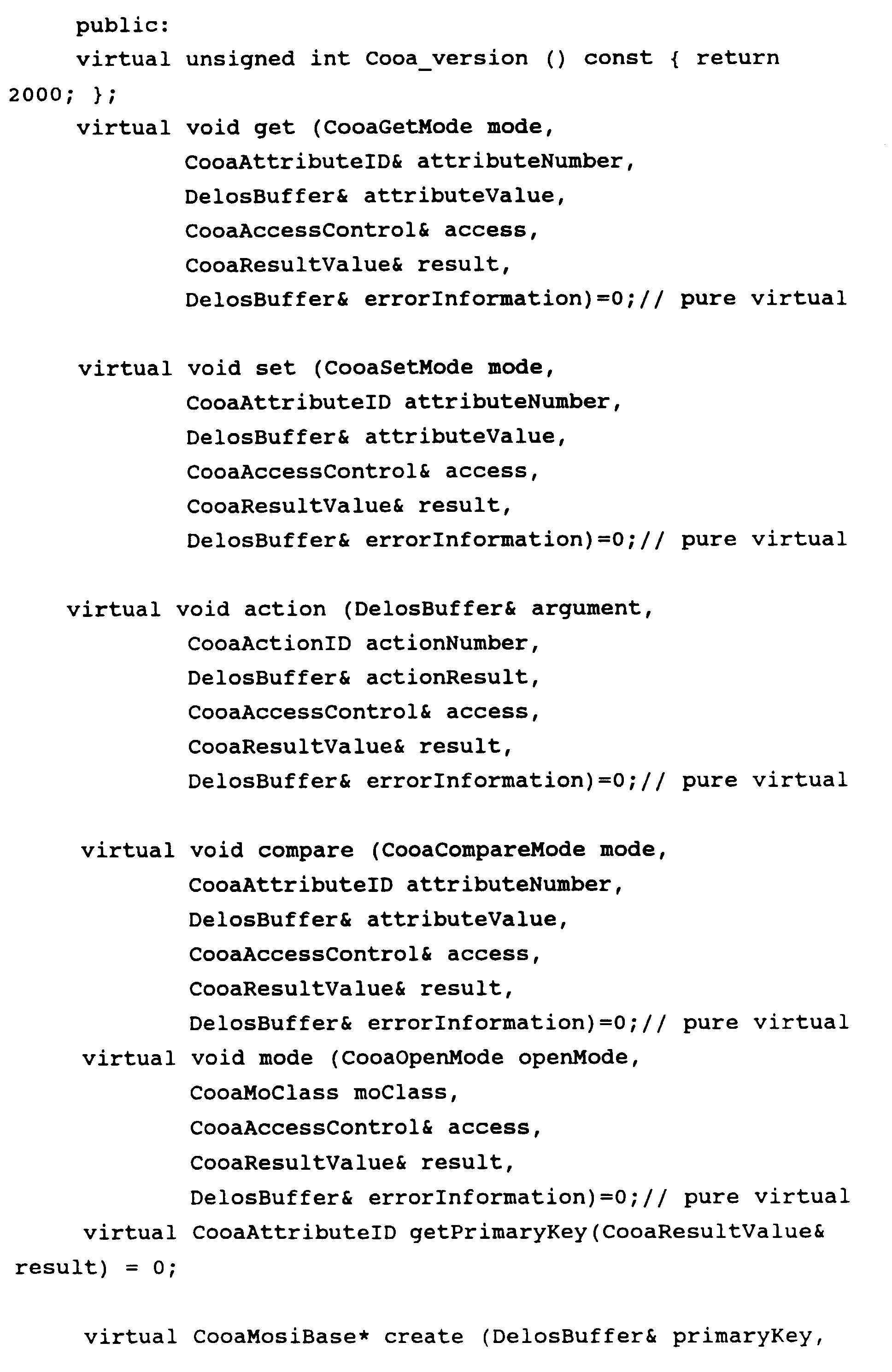

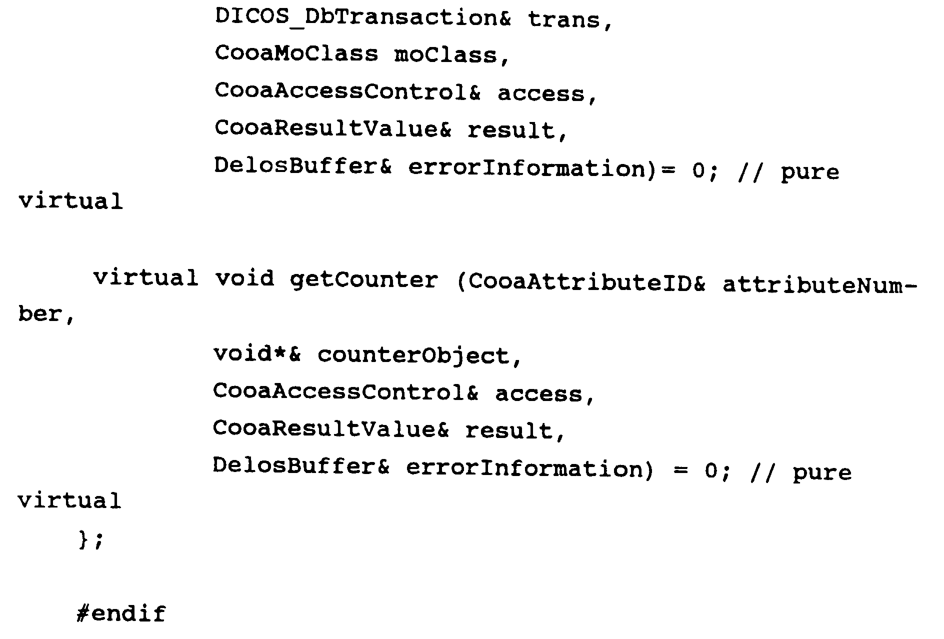

The general object manager 42 knows the interface of the MIM-server. It reads data from the MIM-server and confirms which classes of managed objects that are in the managed system.

In the user interface 44 can e.g. a request be made that the general object manager shows all instances of a specific class of managed objects. The general object manager can read the definition of the selected class from the MIM-server 54. It knows how this class is accessed via DCF to the generic agent. It knows also how data from the generic agent should be interpreted.

With reference to Figure 4 the resource agent consists of three parts, viz. a MOSI-subagent 61, data object logic 62 (DOL - Data Object Logic), and complementary logic 64 (CL - Complementary Logic). It further provides the external interface 58, MOSI, and has two internal interfaces, viz. a data object interface 66 (DOI -Data Object Interface) and a complementary logic interface 68 (CLI - Complementary Logic Interface).

Here a general description will now be made in greater detail for the principle described with reference to Figure 1 to seperate the managing system in a generic manager and a representation of the model of the managed system. This separation is also called separation model for the purpose of reference.

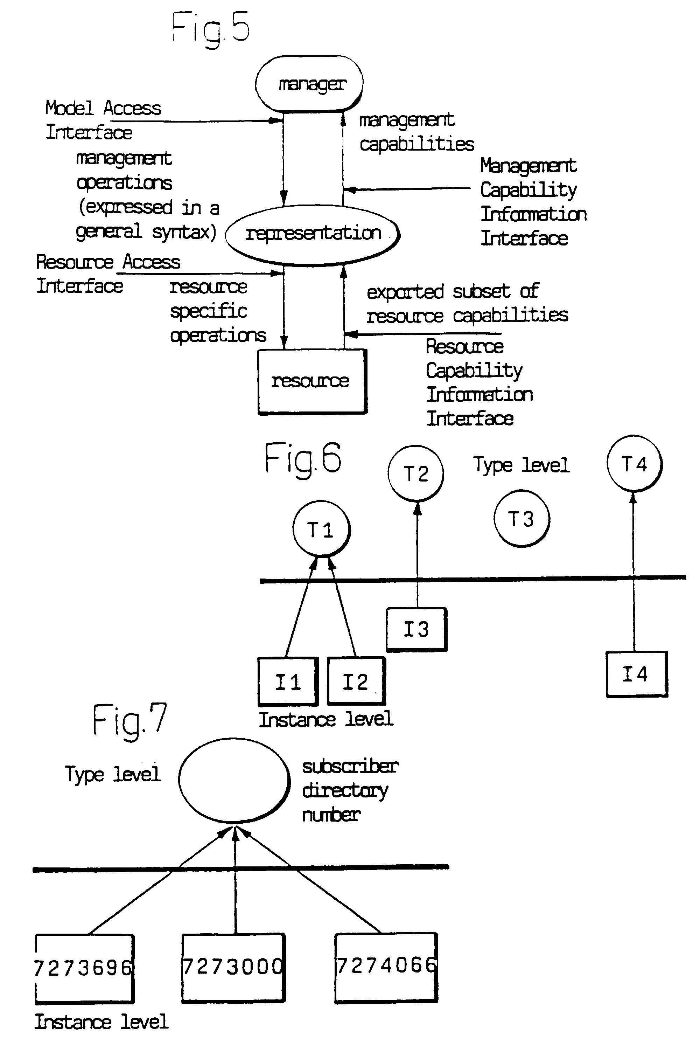

For management of resources in a system there must exist knowledge with respect to what should obtain management and how it should be performed. For this there are three main functions required, viz. a controlling part of the managing system, below simply called "controlling manager", a resource representation, and the resource. Figure 5 describes in greater detail the relations between the three functions. A problem is to give the controlling manager a general possibility to manage a specific resource. It is therefore necessary to implement a framework which admits the design of applications, which can manage resources without knowing the internal structure of a resource and its possibilibinds. More exactly, new resources should be able to be added and old should be able to be liquidated or be changed without influencing the controlling manager.

Such a framework can be applied to each domain, where it exists a relation between controlling manager and managed system.

It is essential to state that the resource representation always is expressed as statements on a type level. This implies that all instances of a specific type share the same resource representation. In Figure 6 it may be seen that the units T1-T4 on type level exist on their own and that they can be shared between the units I1-I4 on instance level. In a specific example the scheme according to Figure 7 can be valid. The type subscriber number holds information, which describes how instances should be interpreted (e.g. the format of a subscriber number and which kind of data structure, that is used to hold the telephone number).

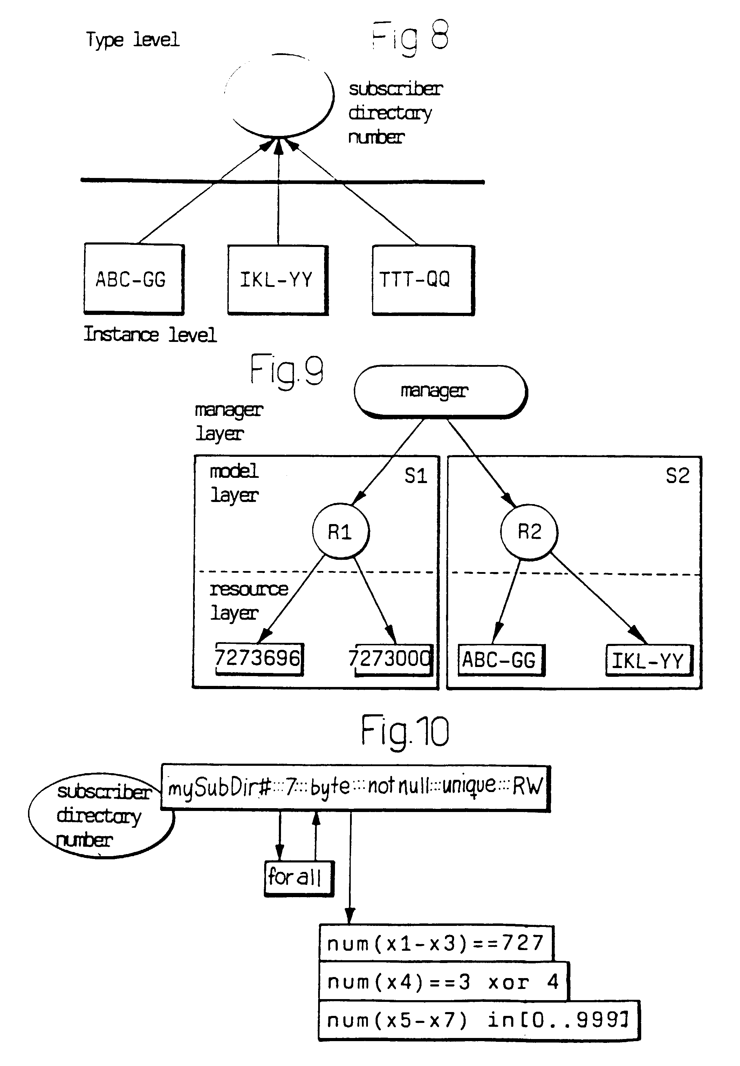

This structuring technique admits the use of a generic manager. If the scheme in Figure 7 is valid for a system S1 and the scheme in Figure 8 is valid for a system S2 the same generic manager can be used for management of both system S1 and system S2.

The manager view of the two systems is shown in Figure 9. It is the same generic manager which is used and it interprets the model representations in system S1 and system S2. The management information model of the subscriber number of the systems S1 and S2 are different.

In Figure 9 the manager directs its operations towards resources which should be managed in the system S1 and the system S2. To get the correct syntax and data format the manager interprets the model representations R1 and R2. From the point of view of a user the management framework is the same, i.e. the same concept, metaphores and tools can be used, through which means are obtained for effective and easy management of resources independent of their real implementation.

What is aimed at is now to implement a framework, which can be used for designing generic managers, which manage physical and/or logical resources. The framework is performed trough a rigorous and formal seperation of the resource representation (the model) and the real resource. The resource representation is interpreted by a software unit called controlling manager.

The manager should not need any specific resource information beforehand, i.e. before it has started to work. This means that the manager unit is capable to be adapted to any possible resource representation, which is expressed in such a way that it is interpretable by the manager. The main advantage is that it is possible to introduce new types of resources without updating of the manager.

As an example it is possible with a given resource, such as a subscriber, to introduce new possibilities in the subscriber, and still be able to manage both the new and the old subscriber representation with the same manager.

As another example one can, at implemenation of a totally new type of resource, introduce this in the manager system and manage the new resource with existing managers.

Here a description in greater detail will now be given for the interfaces illustrated in Figure 5.

### Access interface for model

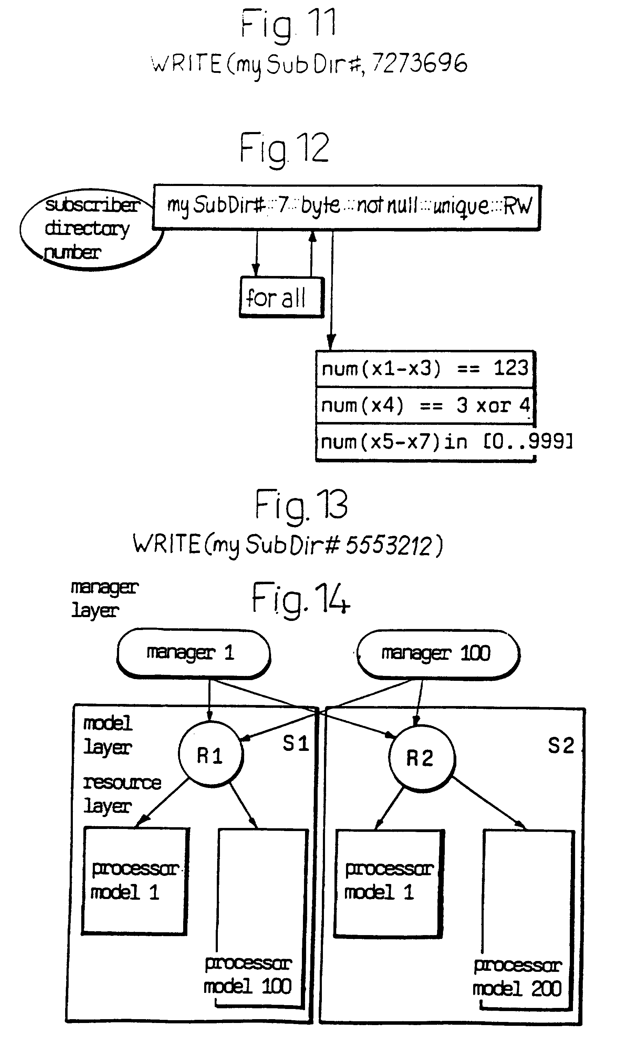

This interface is used by the controlling manager to connect to a resource representation and collect information from it. This information is used at the performance of the general management operations towards a resource. An example appears from Figure 10. By interpreting the resource representation the manager can e.g. perform the operation in Figure 11 on the subscriber instance I1 and be sure that the syntax and semantics are valid with respect to the model.

It is essential to see that the same manager is capable to manage the updating/change of information in the resource representation in Figure 10, which is shown in Figure 12, without the need for being recompiled or reconfigured.

In none of the cases the operation shown in Figure 13 should need to be transmitted to the resource. Faulty operations will thus not at all be transmitted to the resource.

The interface in question has the following operations.
1 - connect_to_representation
2 - interpret_the representation

### Access interface for resource.

This interface is used at the performance of management operations towards the real interface. Operations in this interface are often implementation dependent.

### Operations:

1 - perform_operation (open/read/write/search etc.)
2 - transform_event.

### Information interface for management ability

This interface states which possibilities a specific manager can use at management of the resource. This interface can limit what the manager can do in the access interface for model representation.

### Operations:

1 - check_access
2 - limit_access

### Information interface for resource ability

This interface states what ability of the resource that will be exported and be shown in its resource representation. Some forms of ability in the real resource can be multiplexed and be stated as one single ability within the resource representation.

### Operations:

1 - export_possibility
2 - multiplex_possibility.

### The controlling manager

A controlling manager in the framework in question is a software unit capable of interpreting model representations expressed in a machine interpretable way. These representations state the protocol for possible cooperation between manager and the managed resource. The representation states also data structures which are used to represent a concept in the managed resource. Many controlling managers may use one representation and a controlling manager may use many representations.

### The representation

A representation of a resource is in the present context a view of some or all aspects "within" a resource. There can be many views of a resource. In the representation the information is structured in such a way that it is possible to interpret it to make transformations to other representations, which are more suitable for e.g. cooperation with man. The representation can be used to feed more or less intelligent software with necessary information for the performance of management operations.

The main advantage with the separation model described above is that it provides means for introduction and updating of resources and services within a management domain without influencing those units, which manage the resources and the services. Further, the units which manage the real resource can be substituted/updated without influencing the units which are being managed. When new technology is available it can thus be introduced at a time which is suitable for the management domain.

Old and new technology can coexist in the management domain. In e.g. a telecom network can equipment (resource units and management units) be introduced in one or several discreet activities.

In Figure 14 a management domain is shown, which consists of two systems with different versions of the units. The versions differ within each system and between the both systems. In this connection the following is valid:
1 - "Old" managers of the type 1 can manage resources of the types 1, 100 and 200.
2 - "New" managers of the type 100 can manage resources of the types 1, 100 and 200.
3 - There are no managers which have been developed to the type 200.
4 - Resources of all types are managed by managers of all types.

In Figure 14 one has a working domain where the technological developement has occurrerd in an uncoordinated way. What we see is that in each layer (horisontally) modifications have been done without influencing the unit from the manager point of view (vertically).

Here it will now be described how the separation model described above is used in connection with designing controlling management units.

The controlling manager responsible for the management operations towards a resource obtains the necessary knowledge within the separation model framework from a model representation, which includes model information of a resource.

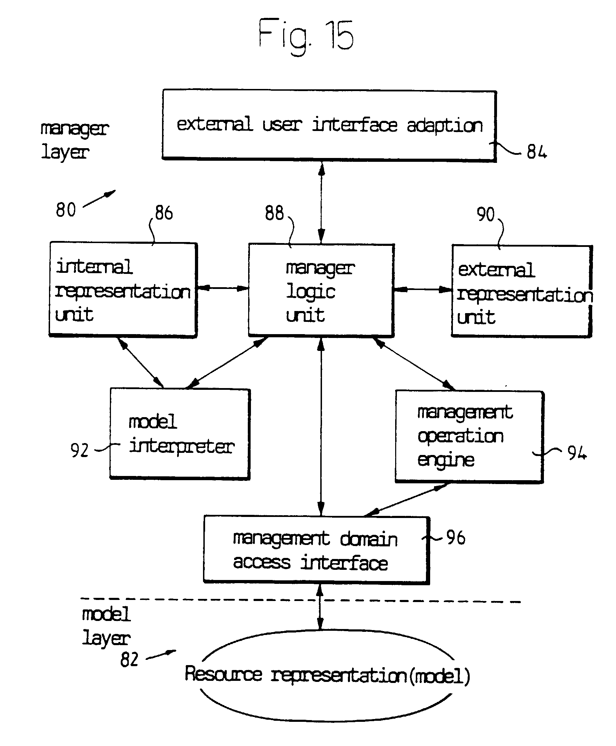

The manager is built on the framework which is provided by the separation model, in which the generic manager in this framework is designed according to Figure 15.

The design includes a number of units in a manager layer 80, the denomination of which are apparent from the Figure, and in a model layer 82 a resource representation.

The unit for adapting external user interfaces, at 80, is used in connection with adapting the manager to an external unit. Examples of this are:
- Window systems. This enables a human user to co-operate with the resources by manipulating reproducible representations, as forms, menues and graphical representations.
- Other computers/computer systems.
- Data bases.
- A unit in the management domain itself. The manager can in other words be used as a controlling and decision making unit.

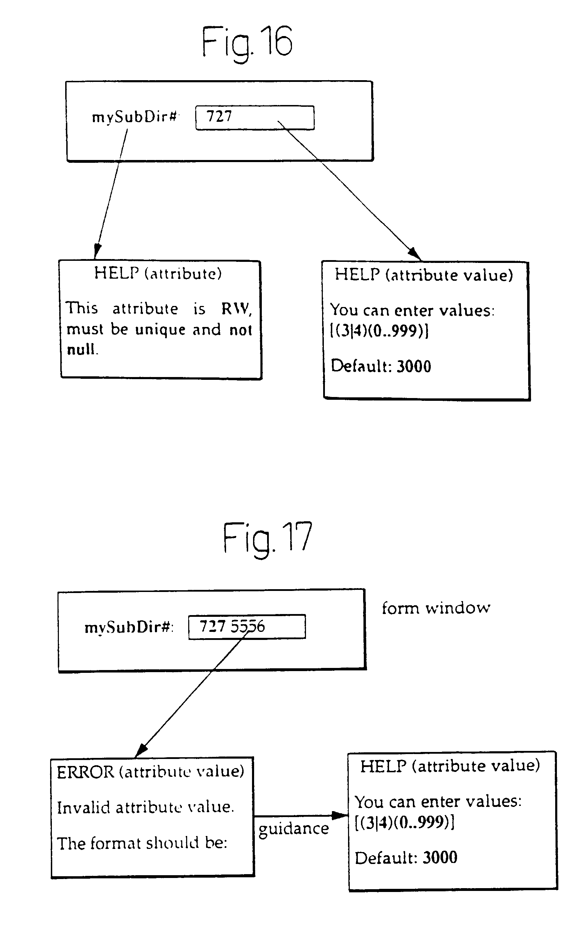

As an example of a representation, with which a human user co-operates, one can consider Figure 16, which shows how a window is related to a management information model according to Figure 10.

This information is also used in connection with verifying that the input signal is correct according to the model. In the example above the user would not be capable to introduce a telephone number, which is not adapted to the resource representation in Figure 10. The manager can use the knowledge to lead the user or suggest what should be done. The user co-operation which is invalid according to Figure 10, and shown in Figure 12, would not be possible to transform to management operations and be transmitted to the resource. The performance described in Figure 17 constitutes the result of the model interpretation ability of a manager, which uses the separation model frame work.

The real managed resource (mySubDir) is still in a valid state and no attempt has been made to perform an invalid operation.

With the type of manager described here, a number of checks are delegated to the user of the model, i.e. the generic manager, instead of being performed by the resource itself. This implies that a resource is capable to fulfill wishes in various user cases. The user cases will probably be differently timed. In a traditional implementation it would be necessary to predict possible future user cases, while in the present framework it is only needed to to make another model representation.

As an example of a more traditional way a "subscriber number resource" could implement the rules described in Figure 10 as C++ statements in the code representing the resource. The use of the resource would then be limited to a context where a telephone number could only start with 727.

The internal representation unit 86 transforms the model representation to a representation, which is suitable for the use by a controlling manager. Abstract data structures etc. in the model are in other words mapped to data structures, which can be used at the working of the manager.

The internal representation unit creates a structure, which is used for storing the resource representations. There is at least one such structure for each manager domain. From the beginning the structure is empty but is later filled with resource representations. The structure can be created in a number of ways (primary memory, object data base, etc.).

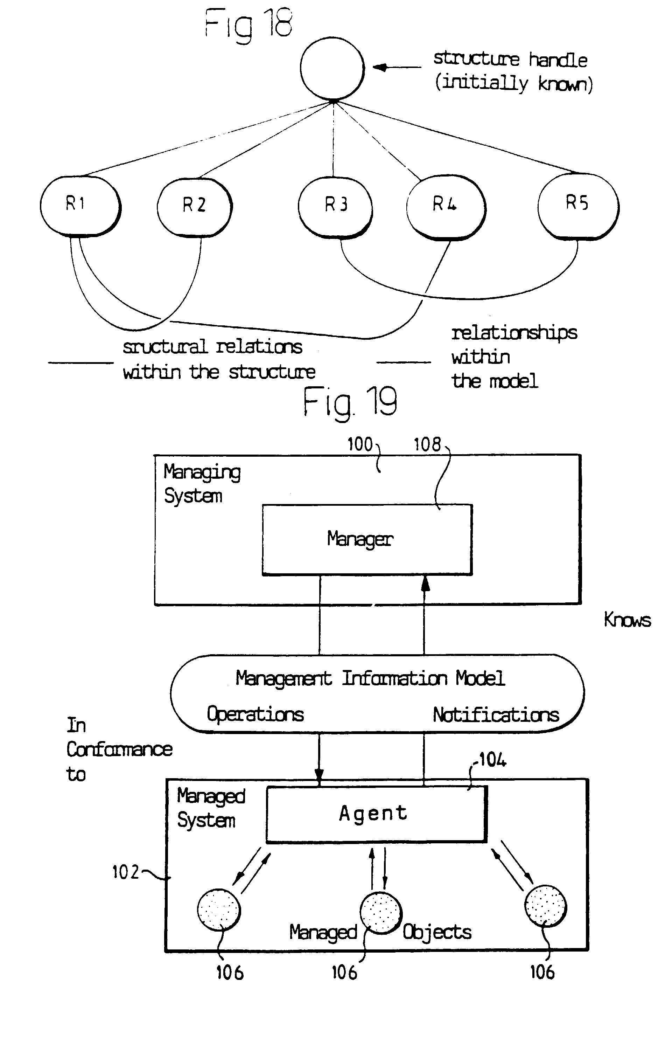

Fig. 18 shows how the resource representations R1-R5 are organized in a data structure used by the manager to get access to said representations. Straight and curved lines indicate relations within the model and the structure, respectively.

As can be seen, also the resource representations have relations. Such relations constitute part of the model of the manager domain (a subscriber catalogue number has e.g. a relation to LIC).

The generic manager internal representation of the management information model is used by the manager to keep the consistency of the managed system and to decide about the state of the managed system after certain operations have been performed. The operations can e.g. lead to a consistency violation, but it will be detected before the operations are applied to the managed system.

The knowledge, which is obtained by the interpretation of the model, can be used by the manager in different ways, such as:
- automatic solution of the consistency violations and creation of a set of management operations, which do not violate the model,
- guiding of an interactive user to the correct set of operations,
- performance of "what if" analysis.

The generic manager logical unit 88 controls the activity of other units. It makes also decisions based upon events, which are reported from other units. Events can also be reported from units external to the manager, the events of which are always transformed to representations and structures, which can be managed by the manager.

The external representation unit 90 manages transformation of internal representations in the manager to representations, which can lead to and be understood by a unit, which is connected to the unit "adapting of external user interfaces" at 80. Examples of such a representation is a structure representing a window, which can be reproduced in an X-Windows device.

The unit "Machine" for management operations, at 94, creates real management operations, which should be guided further to a resource in the manager domain. The operation is created as a result of external or internal (or both) corperations/manipulations of a representation controlled by one of the logical units 88 of the manager. A window representing a form is e.g. a representation, which is controlled by the manager. The window can show user alternatives to the user. Some of the activities may result in one or more management operations being transmitted to the managed resource.

The unit access interface for the managing system domain, at 96, is responsible for transmission of the management operations to the controlled unit. The access interface in question can be adapted to various management protocols.

The unit model interpreter at 92 is responsible for interpretation of the resource representations expressed in the models. The model interpreter reads the resource representations and assigns them to the unit described above for internal representation.

The model interpreter interprets the representation of a resource. The representation is expressed in an agreed format. It is the format of the model representation which is used.

For performing a management operation, e.g. to change a subscriber number, the following steps are executed:
1. A connection to the management domain is established.
2. The user (presumably external to the unit for external representation) adresses the resource to be managed (e.g. a subscriber).
3. The manager logical unit checks via the unit for internal representation if there already is an internal representation of the resource intended for management.
4. If such a representation does not exist, the manager logical unit orders "the machine" for management operations to perform management operations via the access interface for the management domain for collecting a resource representation from the managed system. (Otherwise everything continues with step 7 below).
5. The collected resource representation is transferred to the unit for internal representation, which transforms it to a format suitable for the manager.
6. The unit for internal representation locates the representation in a structure, which represents the sum of the resource representations in the management domain.
7. If such a representation exists the manager logical unit transforms the internal representation to a suitable external representation using the external representation unit.
8. The external representation is guided further to the interface adaption for external users, where the representation can be used by the user (by manipulating a form, which is shown as an X window).
9. The external user changes the value of the subscriber number attribute (the user inputs e.g. a value into a device designated for this).
10. The model interpreter checks if the inputted value violates anything in the resource representation or in the context where the resource representation is present (this implies that a number of management operations may need to be performed towards the managed system).
11. If a violation is detected the user is notified in a suitable way (suggestion, note etc.).

The main advantage of a manager designed as indicated in Figure 15 and used in the separation model context is that it will be capable to manage resource units in a changing environment without need for updating the management units and resource units coordinated with therewith. When developing management and resource units separately the best available technology can be used.

Here a description will now be made of an embodiment, which relates to how the model representation in the above described separation model can be stored in the managed system. The technical problem is how to always keep a managing system with correct management information model related to a certain managed system, which can be changing with time.

In Figure 19 a mangement system 100 model driven according to the separation model is shown, which system can manipulate objects in another system. The managing system communicates with the managed system 102 via an agent 104. To be able to manipulate the object 106 the managing system needs information, which describes the managed system. The question is how the manager 108 in the managing system obtains this information.

If the managing system can be made to read management information when need arises the managing system becomes more independent of the managed system. If the only dependences between the managing system and the managed system is the way in which the management information is structured, it will be possible to develop the two systems independently. To solve these problems a new object is introduced in the managed system. As the managing system can read data from each managed system at each time the best way to store data about the managed system is to store it in the managed system itself. To use this new kind of objects creates new problems, such as with respect to how they are structured and how they should be installed in the system, at what time etc.

To store information in a managed system, which describes other objects in the managed system, is a way to let the managing system be capable to read such information at any time. To be able to use a common object to describe all kind of objects it is however required that an analysis is made of what kind of information a mangement system needs for performing its tasks.

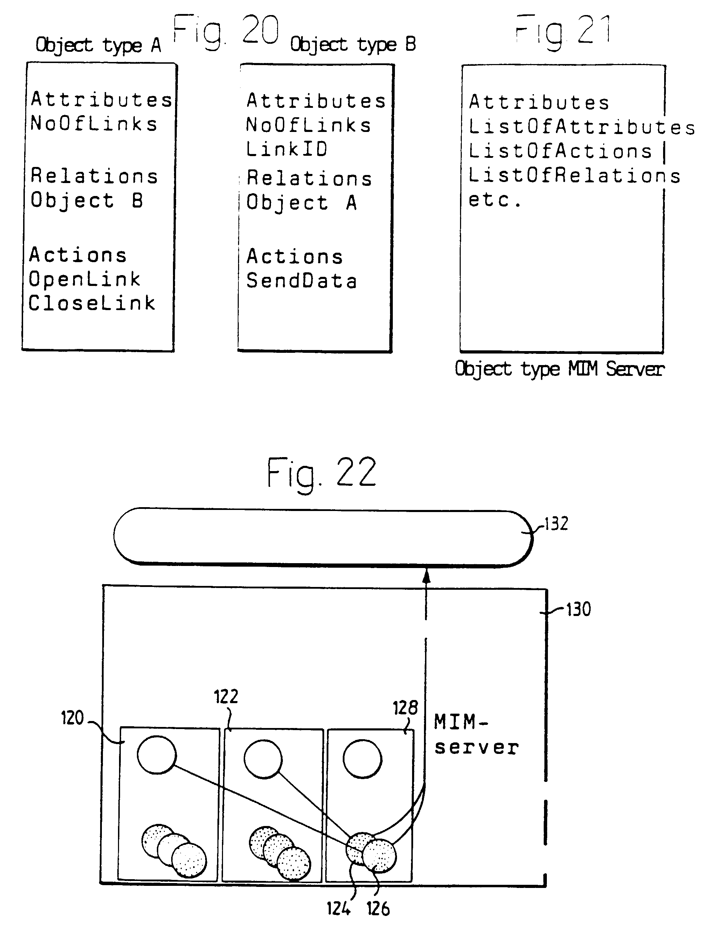

When structuring all objects in a managed system it can be found that it is the information which describes the classes of managed objects, which needs to be included in the new object. If one e.g. compares the two managed objects of different classes, which are appear in Figure 20, one will see that both object types have attributes, relations and methods. What differs are the names of the attributes etc., and the number of attributes or relations or methods. With the use of this information one can form a template, which describes managed objects in general. This template is included in the managed object MIM-server, which has been mentioned before, and which is shown in Figure 21. By the use of the template one can describe each managed object, which can be used in the managed system. If one installs an MIM-server-object including information which describes an object type, which we install simultaneously in the managed system, and the managing system can interpret the MIM-server object type, it will become possible for the managing system to collect information about objects in the managed system at any time.

The limitation of what mangement information the MIM-server-object can include, only depends upon how expressivly a managed system can be specified, as the managed objects in question are automatically generated and are filled by data which originate from the object specification itself.

An example of how the structure of the MIM-server-class could look like is shown below. The example is made so that it should be easily readable, but could be specified in an arbitrary language. Some of the abbreviations need an explanation:
- ADT (AbstractDataType) =abstract data type
- DD (DataDomain) = data type;
- Persistent = should be stored in a data base

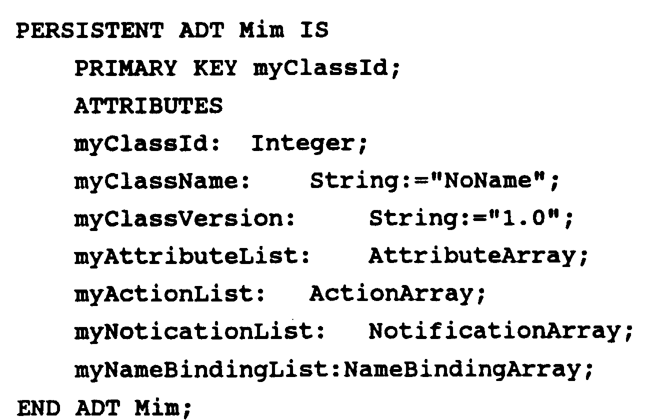

It is found that the list of attributes (myAttributeList) is specified as a field of attributes (AttributeArray). In fact the field is a dynamic field, which means that it has no predertermined size, but instead grows for each element which is added.

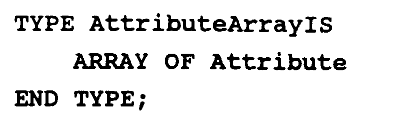

The field includes elements the names of which are "Attribute", as each element in the crowd will describe properties of a real attribute in a MO-specification. At a closer investigation of the attribute specification it is found that there are attributes as myName etc., which all describe attribute properties:

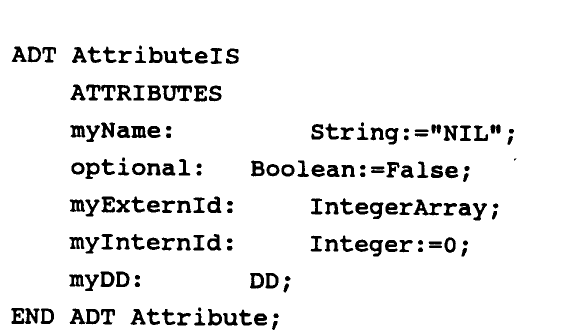

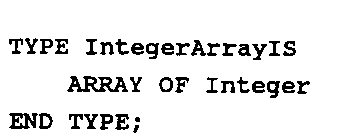

When considering myDD it can be found that it is defined as DD, i.e. type. This is further explained in the next specification.

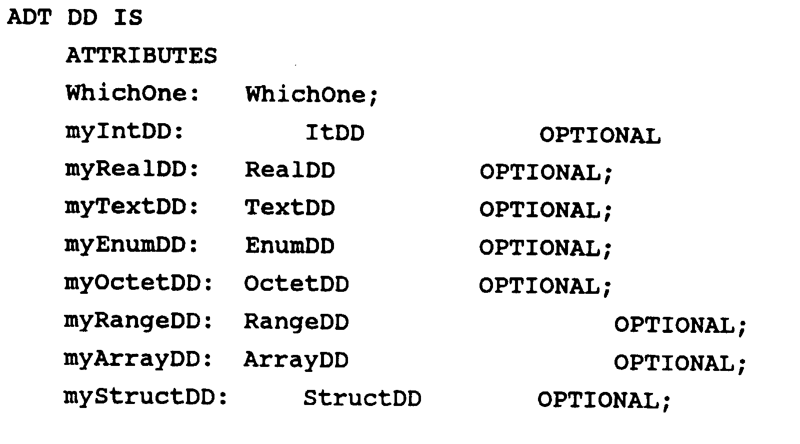

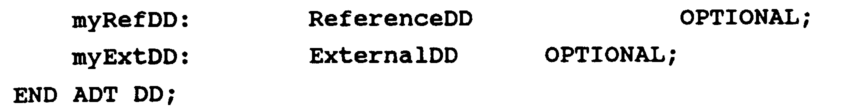

Since an attribute is of a type such as an integer, real, string etc., this information is essential. The problem is that an attribute can not be all types at the same time but only one type, why it is necessary to select some various types and to supply more information. This is done by the type WhichOne:

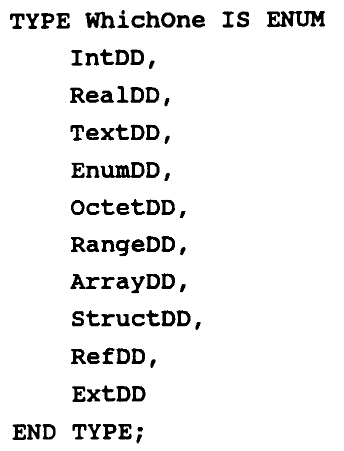

Regular types of attributes are, of cource, integer, decimal or text string, and they could be specified approximatewly as:

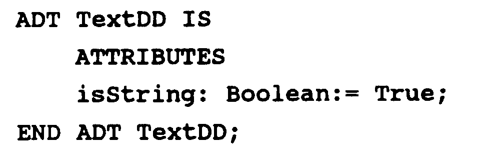

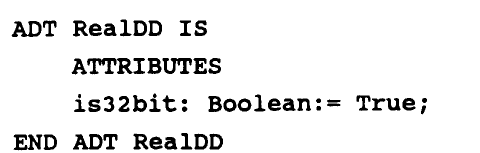

There are furthermore certain other common types, which should not be forgotten, such as octet string and enumerated:

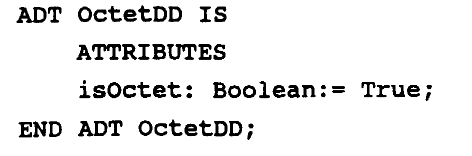

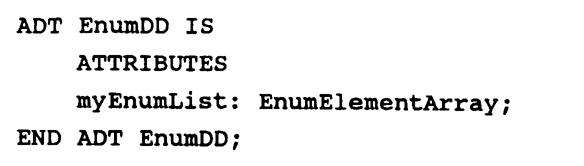

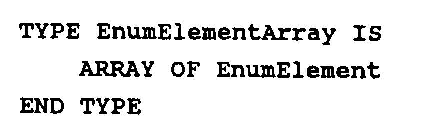

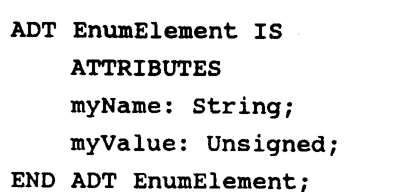

There are also other types, which are not as usual, but are anyway necessary to enable complete description of an attribute, such as structural type and field type (struct and array). It is also possible to specifiy own types. Range is one type which could be of this category:

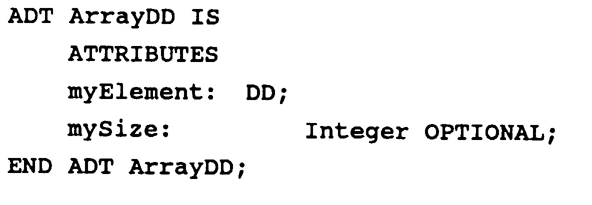

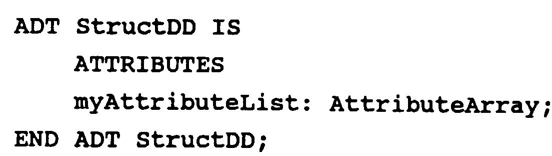

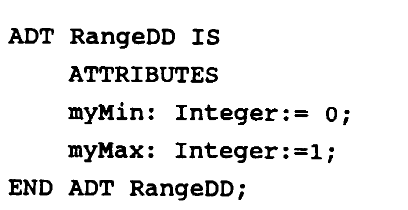

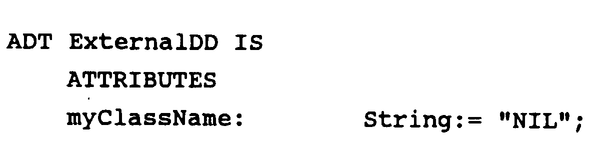

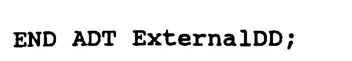

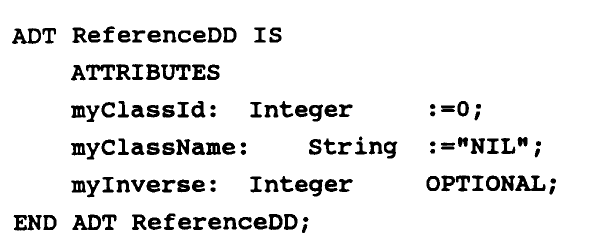

An attribute can also have a default value. To be able to include this information a special "default"-type is specified. This type uses also the type WhichOne to state what default value is concerned.

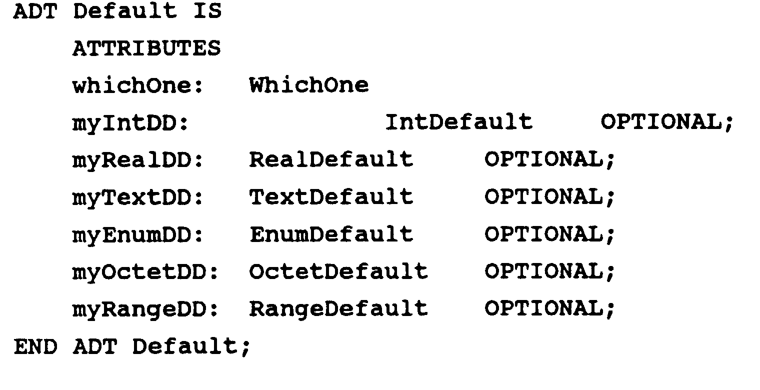

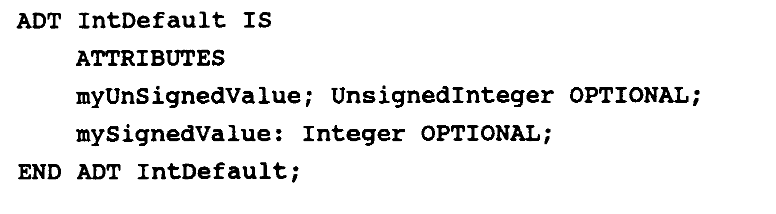

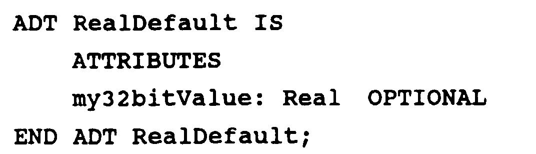

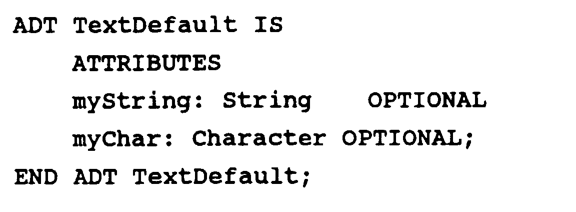

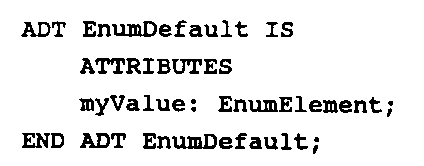

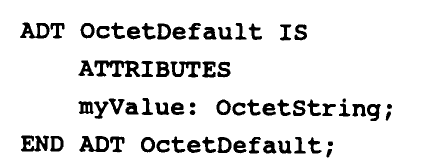

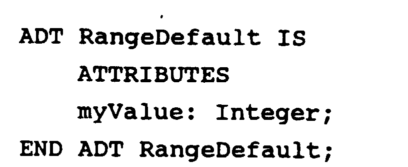

A managed system can be specified by both attribute, methods, notifications etc. By use of this technique for specification of information everything can suit the MIM-server-class. Below follows a list of various other types of information which should be stored:

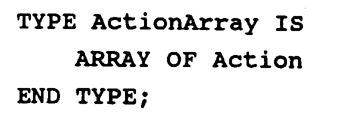

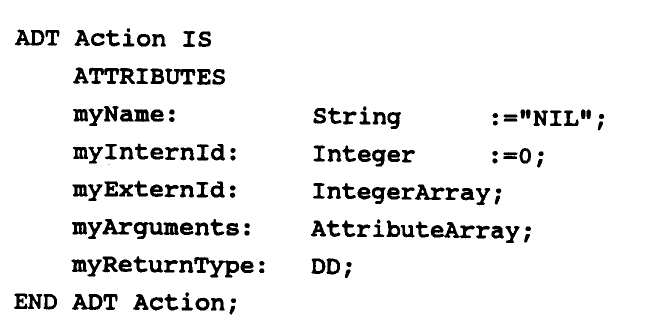

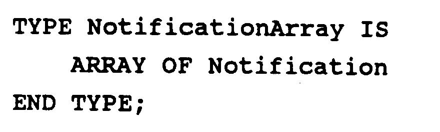

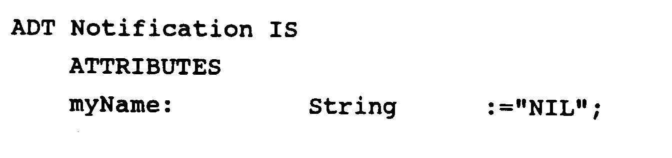

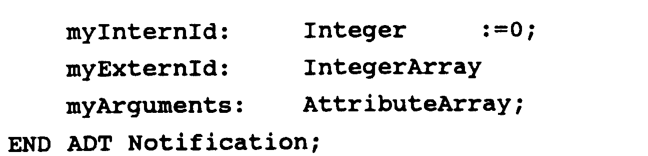

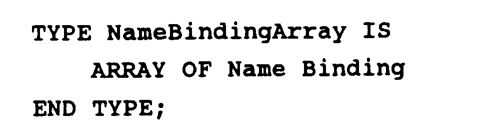

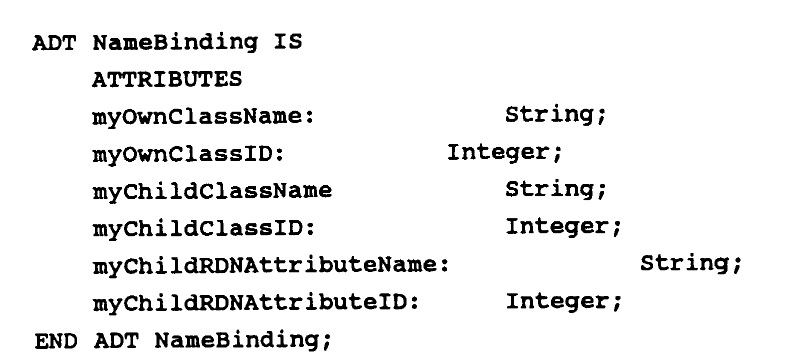

All MIM-server-objects together constitute the complete model of the managed system. By means of this type of object it will be possible for the managing system to get information of the managed system piece by piece. It will also be possible to change the managed system (i.e. the model) during operation and let the managing system update its view of the managed system without recompiling, by reading information in the MIM-server-objects, which have been installed in the managed system.

Figure 22 illustrates the relation between the MIM-server-instances and the classes of managed objects. For each class 120 and 122, respectively, of "normal" managed objects there is an instance 124 resp. 126 of a class 128 of "special" managed objects in the managed system 130. These "special" managed objects constitute the representation of the management information model 132 of the managed system.

For updating of the managed system only a new MIM-server-object needs to be installed to reflect the new object type in the managed system. The managing system can collect it in the same way as has been done with all other MIM-server-objects, and there will now be an updated view of the managed system without recompiling of the code. This makes the managing system very stable and the managed system can be updated often without worrying about updating of the managing system.

As an introduction to a description in greater detail below of an example of an embodiment of MIM server code generation, a short summary of what has been earlier described will here first be given with reference to Figure 2.

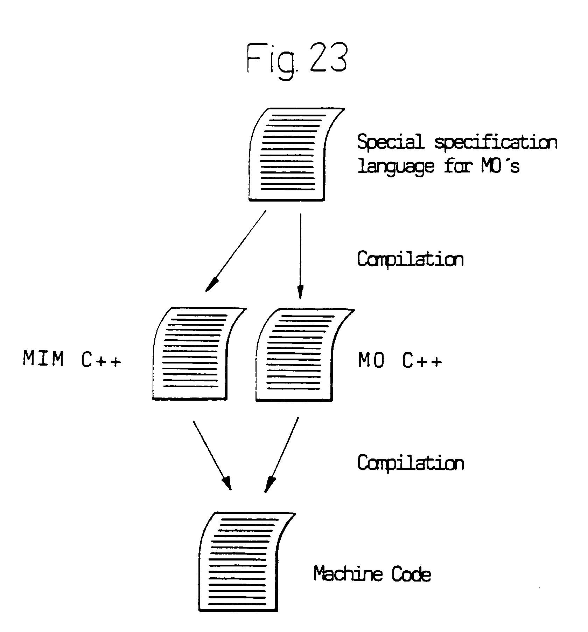

The generation of MIM-server and MO code is a chain which starts with the specification of MO, compare Figure 23. At first the designer specifies MO by use of a special specification language, and compiles then the code by means of a specific compiler. The compiler creates source codes in a standard programming language such as C or C++. The main target code is of course the executable code for the managed system, but this is also the perfect time for generation of intermediate format of the managed object part of the management information model. To be able to do this the compiler must have knowledge of the structure of the MIM-server class. The compiler considers the MO-specification and counts the number of attributes, methods, etc. and uses this information to design a MIM-server instance. All this information is introduced in a "Class method" in the source code of the managed system and can be freely executed after installation in the managed system.

The use of the described technique guarantees that the model agrees with the object it describes, as the generation of MIM-server information and of object code originates from the same MO-specification. It makes it also easier for the MO-designer, who has as his duty to generate model information. The highly automatized chain of information generation makes it really not only easy to design managed objects but it can also be done quickly and realiably.

An example of MIM-sever-code-generation is now given here:

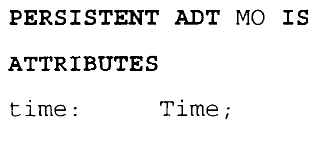

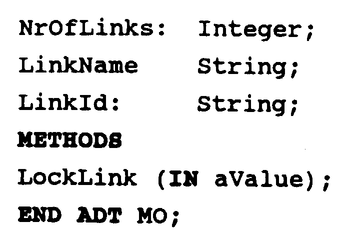

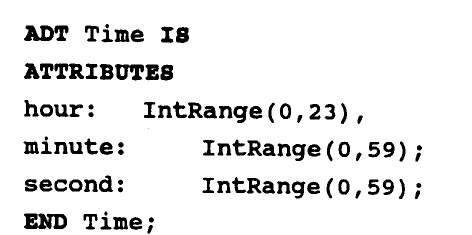

The compiler will create source code for the object. In C++ it could look approximately as according to the following (Observe that the code is not exact but has only been made as an example, in which only declaration files are shown for the class MO):

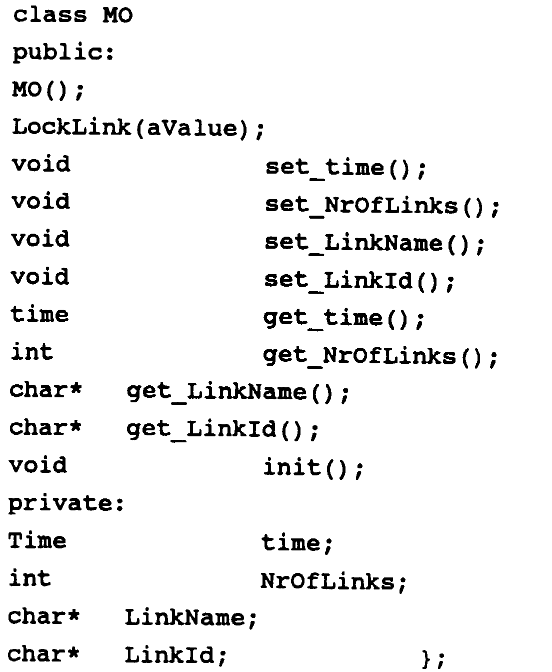

Since time was a complex type it will also be a separate class:

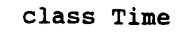

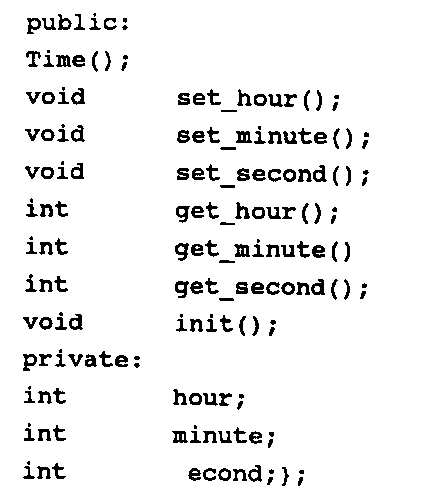

Now the MIM-server-information can be generated. The compiler will go through the MO-specification and design the MIM-server-instance piece by piece. The information will be collected under a class method, here denoted mimInit: void

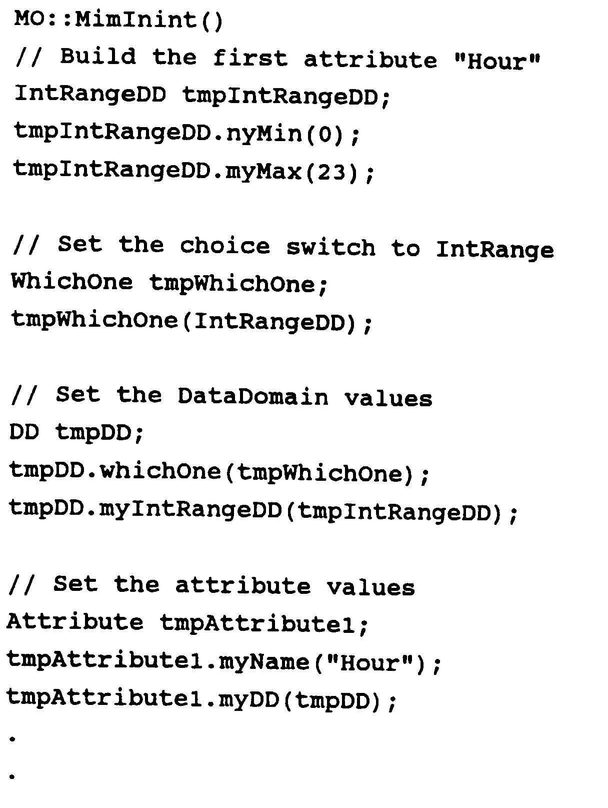

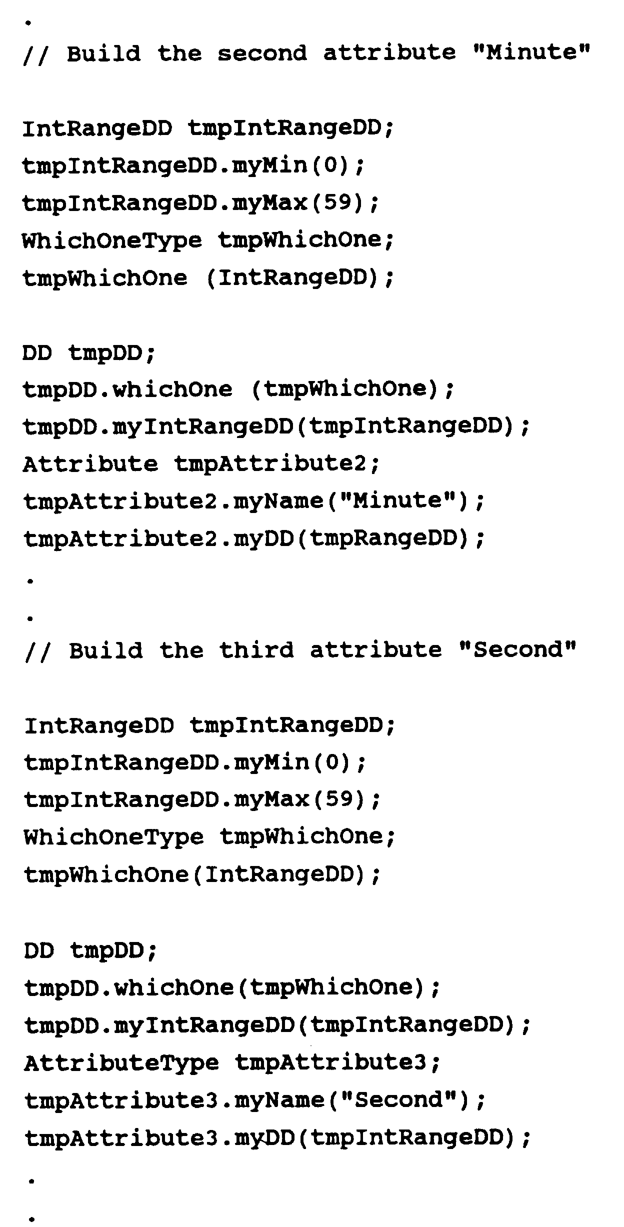

Up to now only those attributes have been created, of which Time is constituted, why also the time attributes itself now must be created, and assign the other attributes thereto.

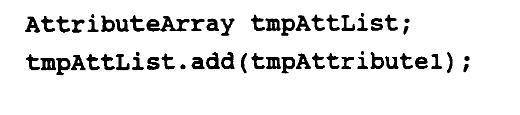

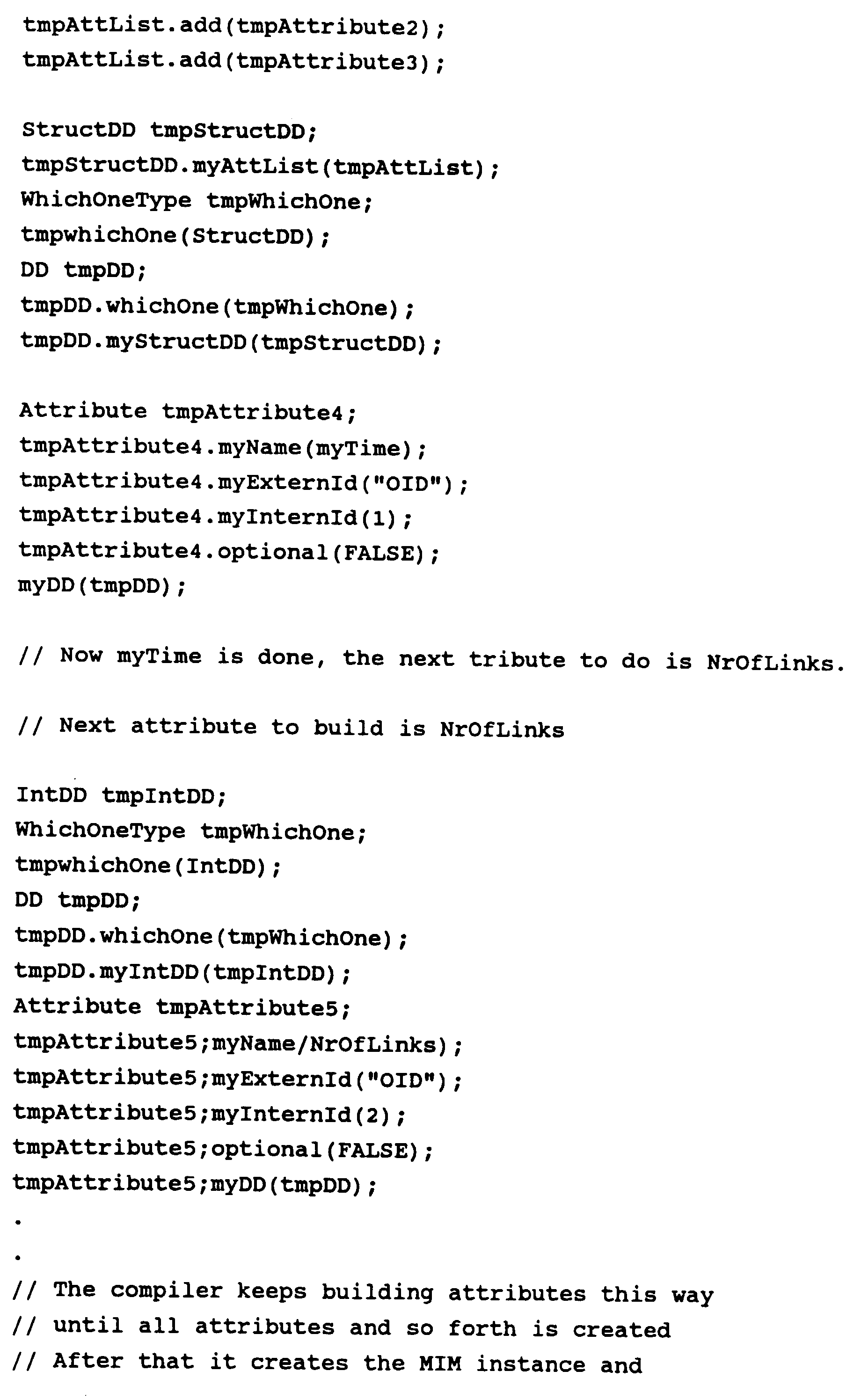

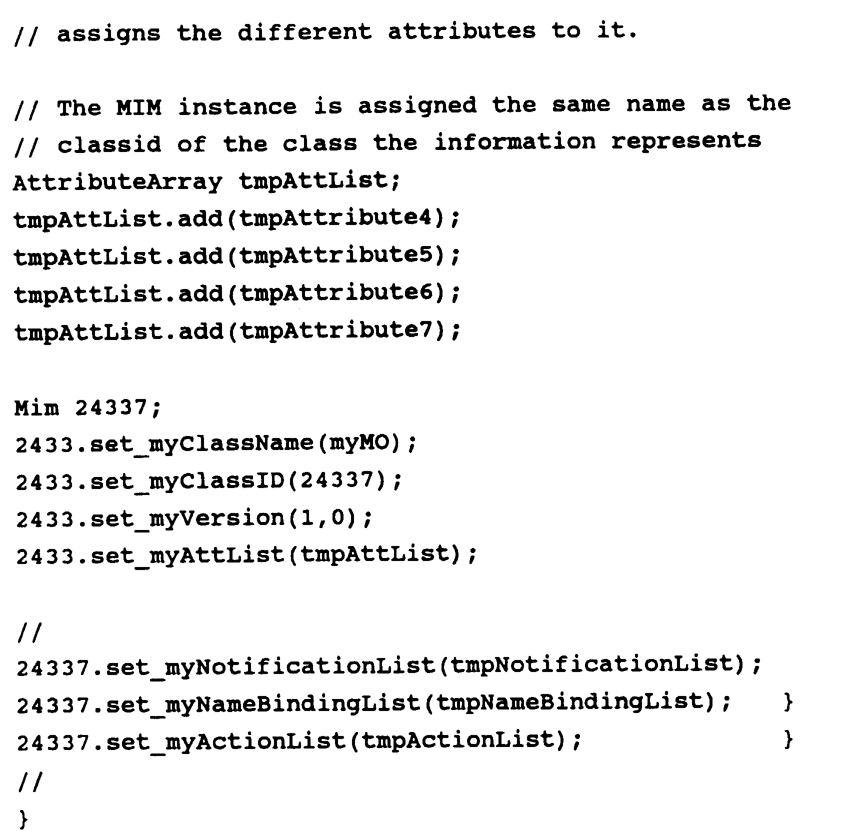

The class is now ready to be compiled by an ordinary C++ compiler, whereupon it can be installed in the managed system. The method MimInit is now ready for execution and a MIM-server-instance will be created with all introduced information. As has been described earlier the software is first tested and then installed in the managed system.

To be able to execute a method which makes an instance of the MIM-server-class, it is of course necessary that the MIM-server-class already has been installed in the managed system. The MIM-server-class should thus be the first class which is installed in the managed system.

The method MimInit is a class method and is only intended to be executed once, and is thus no general method which a managing system can execute.

When it has been decided that a managed system should be updated with new classes the software must be carefully tested before use. When everything has been done and the classes should be cleared the managed system software executes the MimInit method in each class for updating. As each class has its own MimInit method, one instance in each class will be installed in the data base. After each MIM; class has been made an instance a note is transmitted which describes which class which has been installed. The managing system, which is a subscriber to these notes, obtains of course the note and decides what should be done, renewal of old MIM-server-information or disregard of the note.

To have a representation of the model of a managed system in the managed system itself instead of having it coded in the managing system has the advantage that it always is in accordance with the managed system which it describes. Likewise can a mangement system be connected to an arbitrary managed system, read its model representation and be capable to manage it. It is also possible to let the managed system have an MIM-server-class describing the MIM-server-class itself, as it is a class similar to each other class, which is installed in the managed system . This could lead to a manager which first would read the MIM-server-class-instance which describes the MIM-server-class, its version etc., and with this information decides how the MIM-server-class-instances in the system should be interpreted.

Here will now be described how a managing system accesses and interprets model information stored in a managed system.

To be able to transmit data between tne managing system and the managed system and clear the information to its original form it is required that the receiving system either knows exactly what is transmitted and in which sequence, or that the information can identify itself, usually by labels or in other words by identifying elements. What method however which is used, some common information or rules, often called a protocol, is required to do this.

As different data types are coded with different number of bits, or even the same number of bits, it is important to know exactly how many bits which are included in each data type, when the received bit string is interpreted. This is usually a problem in this context and a number of different protocols are available. To select between the different means to transmit and recreate data it is necessary to take into account that the information can be rather complex, and when once the information is in the receiving system, it must be restructured in a usable way.

The model information should therefore be represented in a structure, which is known by both communicating parties. For coding and decoding of simple data types to bit strings the same coding and decoding system, which is used in the managed system for its internal commnuication, is used in the embodiment here described. This coding and decoding system must be known to both parties of the link to avoid corruption of data.

For transmission of simple data types to communicable bit strings it is fundamental to have a strategy concerning the coding and decoding of these bit strings. The method used here is to let an integer type use 32 bits to represent its value. A string is coded by the use of 32 bits integers representing the number of characters in the string and each character is represented by 8 bits.

For coding of simple data types to communicable bit strings each data type has a shift method, which simply illustrates what happens:

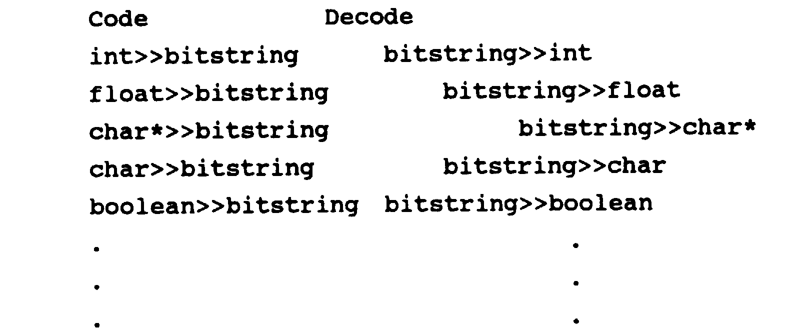

By use of the coding and decoding principles for simple data types it is possible to create coding and decoding methods for more complex data structures. This is done simply by implementing the method as a serie of simple coding or decoding methods:

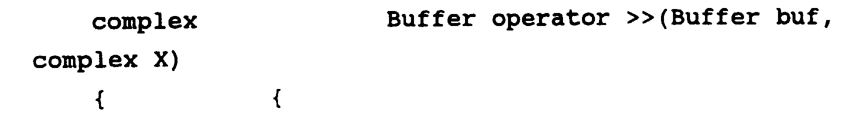

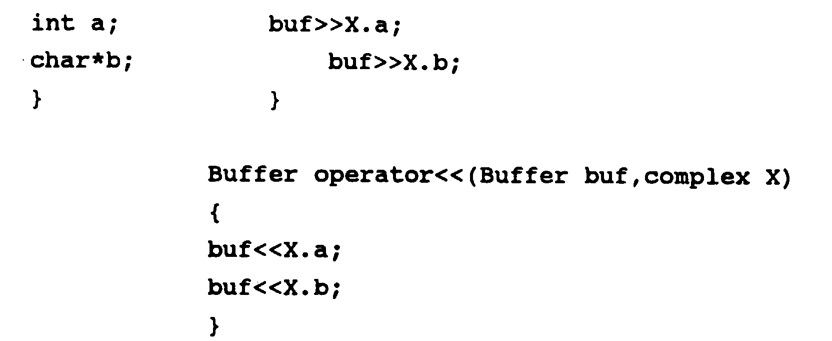

By using this technique for designing coding and decoding methods for complex data structures it is now possible to design almost any kind of coding or decoding method.

When a managing system initiates a read operation towards an instance in the managed system it must state which attribute it wants to read. The data in the attribute is coded by use of earlier described methods, is transmitted to the managing system and is then decoded. If the receiving system has the same coding and decoding methods as the transmitting system and the receiver knows which method which is used for coding of this information, it will not be any problem to read complex information.

To enable interpretation of the MIM-information the MIM-server-class coding and decoding routines are incorporated in the manager. By this the information, which is received from the managed system, can be interpreted by an instance being made of the MIM-server-class, and thereupon bits are shifted out from the data buffer into the MIM-server-instance.

The mangement system includes the MIM-server-class in its interpretation part model interpreter in Figure 15, and when it reads the attribute values from an MIM-server-instance in the managed system and receives a buffer with coded data, the data are easily decoded by shifting out the bits from the buffer into an empty local instance of the MIM-server-class. As the MIM-server-class has methods for shifting of data to and from buffers this will become an easy task. The main problem appears at the interpretation of other classes than the MIM-serve. In this case it is necessary to use MIM-server-information for decoding of information.

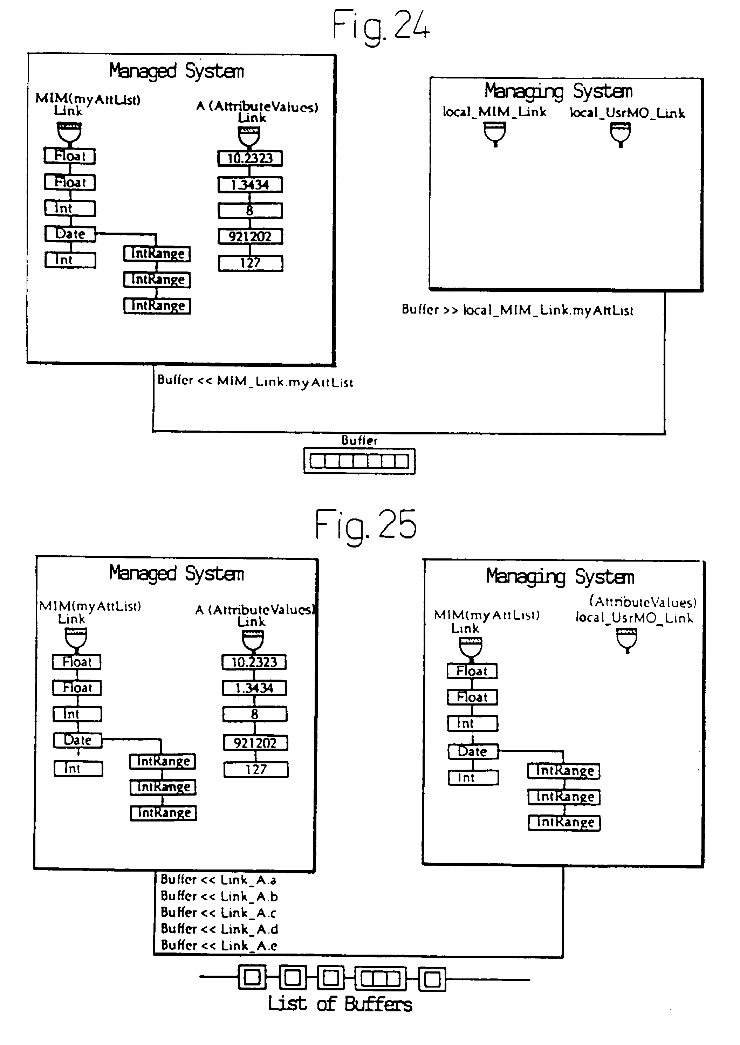

Further explanation can be collected from the embodiment which will now be now described below with reference to Figure 24-28.

To interpret attribute values, which are read from a usual MO, the managing system requires MIM-server-information, which describes the MO-class. It starts with the creation of en empty instance of a MIM-server and a handle (UsrMO) for the attribute values read from the usual MO read attribute values.
1. MIM local_MIM_Link;//creates a MIM-serverinstance.
2. UsrMO local_UsrMO_Link;//creates a UsrMO instance.
3. get (MIM,Link,myAttList);reads model information. The above three steps are illustrated in Figure24.
4. Buffer>>local_MIM_Link.myAttList;//the copy is filled with information.

The managing system can now look into the locally represented MIM-server and investigate the class Link. Next step is to deduce the instance data from the MO-object, which it was interested in. This procedure is somewhat more complicated, but can be effected in the following step.

In Figure 25 it is illustrated how the managing system deduces instance data from link A.
5. get(Link, A,all); read all attribute values.

Now instance data from A is waiting in a list of buffers for decoding. The managing system will now use shift operations to obtain the correct amount of bits and decode these to the correct data type.

By looking into the local MIM-server to decide which data type the first attribute is, the first attribute can be obtained and decoded from the buffer.

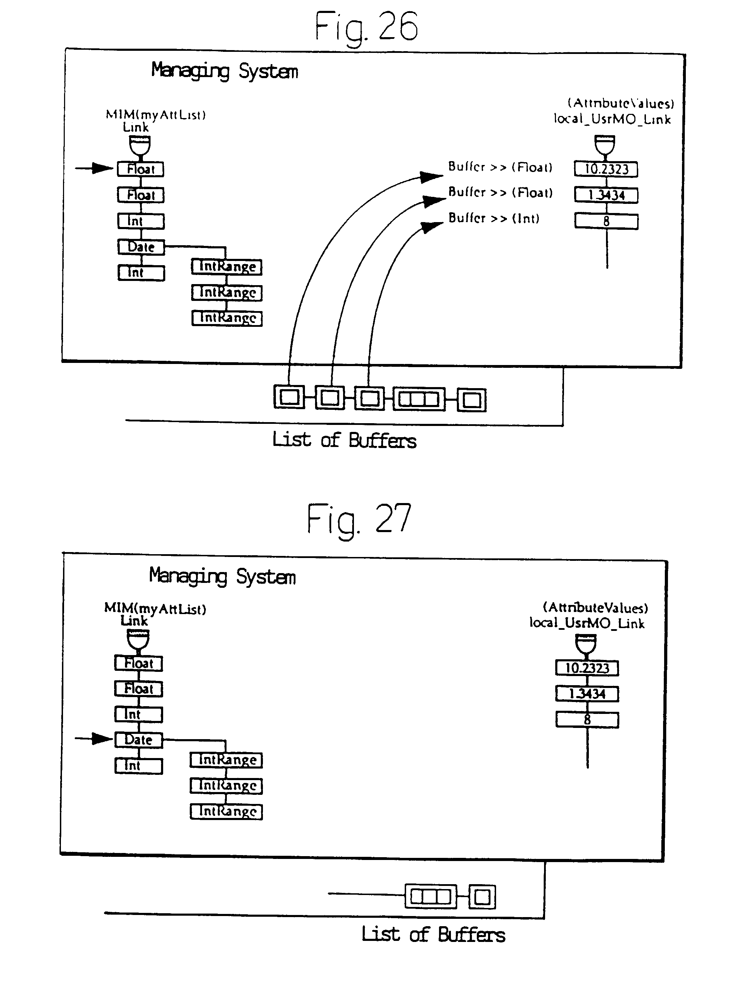

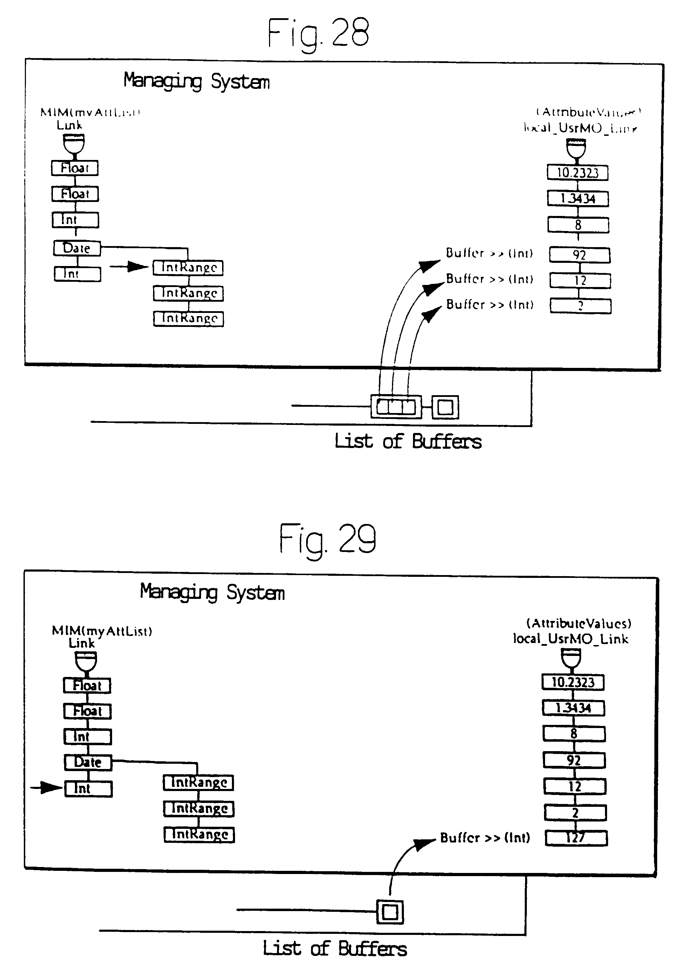

Figure 26 illustrates how the local MIM-server, representing the MO-class, is used to build the first local representation of the MO-instance.
6. When the managing system comes to the data type Date, it will find that it is structured and needs to go down in the structure for further investigation. This is illustrated in Figure 27.
7. The interpreter looks into the structure "date" and looks through its list of attributes to search for the attribute types. By use of this information the next buffer can be interpreted. This is illustrated in Figure 28.
8. The interpretation is executed and the managing system is capable of presenting the attribute values to an external user. Figure 29 shows how the data is interpreted and the next attribute type is read from the local MIM-server representation.

Here will now be described how the management information model discussed earlier above can be made decidable. With this we mean here that it should be possible for a computer programme to read its specification and interpret:
- which states the managed system can take (states which are of interest from the managing system point of view)
- which operations can be directed towards the managed system.
- which operations can be directed towards a managed system in a specific state and finally
- which state the managed system gets into when a specific operation is directed towards it.

To be able to be called decidable the management information model must be able to be expressed in a machine interpretable language. Within conventional technology natural language is most often used to express which operations can be directed towards a managed system and which state the managed system gets into when a specific operation is directed towards it.

By making the specification decidable a number of advantages are achieved:
- A generic manager can be made more powerful, since it can predict the new state of the managed system after a specific operation, and it can also propose such operations which are allowed in a specific state and/or lead to a desired state.
- The implementation and verification of the managed systems as well as (not general) management applications are simplified as the expected performance is well specified. It will also be possible to generate a large part of the implementation code from the specification.
- The robustness under operation is improved as only operations, which lead to allowed state transitions in the managed systems are accepted.
- Early emulation and evaluation of the management information model is simplified, which makes the specification task simpler.
- The management model can be modelled to be both robust and easy to use, by admitting a rather free sequence of operations but still guaranteeing a complete configuration of the managed system before the configuration is cancelled in an active state.

Here will now first possible states be defined.

The state of a managed system in a specific moment is indicated by which instances of managed objects and which attribute values these instances have in the managed system in this moment.

To define the state a specific managed system can take a definition must be given of:
- which instances of managed objects, which can exist and
- which attributes they have and
- which values these attributes can have.

From the specification given in Figure 30, line 1, it is appearent that there could be managed objects of the class Subscriber. Managed objects of this class have the attributes, lines 3-8:
- Number which states the subscriber number,
- AdmState, which states administrative state,
- OpState, which states operational state,
- UsageState, which states usage state,
- Line, which gives reference to a line driver unit for the subscriber physical terminal.

The possible state space for a managed system is enlarged by this specification. The new state space consists of new potential subscribers with all possible combinations of attribute values.

The potential attribute values are determined by the attribute types according to Figure 31, lines 24, 28, 32, 37, 41.

Here a description of how possible operations are defined now follows.

Operations directed towards the managed system create, erase, manipulate and inspect instances of managed objects and can thus change the state of the managed system.

The create operation creates a new instance of a stated class of managed objects.

The erase operation cancels managed objects.

The write operation changes the value of an attribute of an instance of a class of managed objects.

The method operation calls a method of an instance for a class of managed objects.

The read operation returns the value of an attribute of an instance.

Read, write, create and erase operations are general and have the same syntax and semantic rules for all classes of managed objects. The create and erase operations are specified as possible, or not possible for a given class of managed objects.

The read operations are always possible for each attribute of a class of managed objects and are thus specified implicitly at the definition of the attribute and its type.

The write operation is always free of choice and is specified as defining an attribute as being able to be updated.

The method operation is an escape route to an operation specific for a class of managed objects. These operations are performed as methods. Each method is defined as a method towards instances of the class of controlled objets. Each method receives a list of parameters as input data and returns a result.

Figure 32 defines operations. On lines 61-64 the following operations are defined:
- Read operations of attribute Line, Number, AdmState, OpState, UsageState, lines 62-63,
- Write operation of attribute Line, line 61,
- The method LockRequest, line 64.

This managed object is defined as not having any erase or crerate operation, line 65.

Here follows now a description of how allowed combinations of operation/state can be specified.

Dependending on which instances of managed objects, which are in a managed system and their attribute values, there is a unique set of allowed operations in a specific state. One example is that an instance can not be erased if it is in use (which is stated by an attribute). Another example is that it is not allowed to create a tenth instance of some class of managed objects, as there is an implementation dependent limitation, which states that there must only be nine instances.

Generally, there are two ways to specifiy these combinations of operation/state, viz. by preconditions and/or by end conditions.

A precondition states which conditions must be fulfilled in order for an operation to be approved. In the present case it is stated for each operation which state the managed system must be in order to accept the instruction. The precondition constitutes a logical part of the class of managed objects.

In our example with the object class Subscriber, we want to prevent that the attribute Line is emptied (is set to NULL) before the subscriber is deblocked (this is stated by the attribute AdmState=unlocked). As mentioned the Line attribute is a reference to the line drive unit of the subscriber physical terminal. It is desirable that this reference exists when Subscriber is used.

The lines 79 and 80 in Figure 33 show how this can be expressed.

An end condition states which conditions must be fullfilled after an updating transaction. In the present case it is possible, for each class of managed objects, to state which state the instances of the class must have to be in a consistent state. The end conditions are logically a part of a class of managed objects or a group of such classes. The latter is valid for dependences between objects.

In the present example with the object class Subscriber we want to prevent that the attribute Adm state is unblocked if the attribute Line is emptied. We want to secure that the latter reference exists when the subscriber is used. In Figure 34 this is expressed on the lines 106 and 107.

An end condition can be fullfilled in one of two ways. The managing system updates the managed system in such a way that the end conditions are satisfied. In this case the manager has responsibility to fulfill the condition. If the manager ignores this responsibility it will reject the updating transaction of the managed system. The other way to fullfill the end condition is to let the managed system maintain the limitations by automaticly accomplishing the necessary updatings.

In the first case the strategy of the manager is determined from the management information model specification, from which it is determinable which operations are allowed in the the present state. In the other case follow up operations are automatically performed by the managed system.

In the example according to Figure 34 either of these strategies can be considered. If the attribute Line is emptied and AdmState=unlocked AdmState could be set to locked. The end condition in this example prevents however this second strategy. The first strategy must therefore be selected. The end condition is checked before the updating transaction of the managed system is committed and the managing system may thus take over the responsibility to fullfill the condition. Lines 124, 125 in Figure 35 show how this can be expressed.

Line 134 in Figure 36 shows how the second strategy could be specified so that the managed system maintains its consistency.

Thus far only end conditions which regulate the consistency limitations in an object have been discussed. It must however also be possible to state end conditions which specify the consistency limitations between objects.

In Figure 37 the object LineDriver is specified. This object has a relation to the object subscriber in Figure 33. An end condition which regulates the consistency limitation between the two objects must now be able to be specified. On line 118 in Figure 34 and line 163 in Figure 37 it is specified that the two objects constitute a part of the same dependency scheme LineAndSubscriber. This dependency scheme is shown in Figure 38. The dependency scheme in Figure 38, lines 169-171 state that if Subscriber is locked must Line Driver also be locked.

Here follows now a description in greater detail how definition of a state obtained after an operation is made.

Part of the solution to the problem to enable the determination of the new state of a managed system after the accomplishment of an operation consists of the use of end conditions, described above, together with the rules for strategies to maintain these conditions.

One problem remains however, viz. how to determine the consequences of methods and create operations. For this purpose the concept end conditions are expanded and somewhat changed by enabling connection of the end conditions to methods and create operations.

In the present example, with the subscriber, a precondition has been defined, which states that AdmState must be locked as a prerequisite for accepting that the manager empties the attribute Line. The manager should be able to know how AdmState should be made locked, as the attribute AdmState is only read. The method LockRequest is, in fact, the method which should be used to achieve the desired effect.

Figure 39 shows how this is specified on the lines 176-178.

The difference between these end conditions and the end conditions, which are bound to the classes of managed objects - individual or in groups - is that the condition always is maintained by the managed system.

In Figure 40 another case is shown where it is specified that after the object is created the attribute Line is not equal to NULL. Since the attribute Line is a reference attribute to another object, it is decidable from the specification that the subscriber object itself - creates or finds in another way - an object LineDriver and lets the attribute Line refer to this object.

Here follows now a description in greater detail of how to decide and implement a determinable management model. In this connection, the language C++ already mentioned in another context will come to use.

A management model includes objects and relations. This is illustrated by Figure 41, where four object types are shown, which are related to each other either directly or indirectly. In such a model there are often consistency limitations and dependences between the objects. In Figure 41 are e.g. a Trunk object 200 dependent on the state of its related Port object 202 in order to be operable. Thus when an attribute (opState) of the operational state in a Port object is deactivated a Trunk object should also be deactivated. Besides there is a similar dependence between administrative state, attribute admstate in the Trunk and Port objects. Similar dependences can be applicated also on other relations in Figure 41.

To be able to make a management information model decidable it should be possible to clearly state such dependences. Then a managing system can predict the consequences of a specific updating operation in a managed system.

Implementation of such dependences in the different applications, which access the data base, leads to difficulties in maintaining the applications and can not guarantee the consistency of the data base. Therefore mechanisms for maintaining of dependencies and consistency limitations should be implemented in the data base system. The logic to maintain the consistency rules related to information stored in the data base should thus constitute part of the logic of the data base rather than the applications accessing the data base. In this way each rule is specified and implemented in just one place.

By way of introduction a recapitulation will now be made of applicable parts of what has been earlier described with respect to the invention and its various aspects, compare specifically Figure 3 and 4 and the corresponding text, with reference to the block diagrams and functional diagrams and shown in Figures 42-44.

The management information model of a managed system 204 consists of a set of managed objects 206 with attributes, methods, relations and consistency rules. Most of these objects are implemented among other things by DOL-logic (Database Object Logic) and persistent data base objects. Many managed objects (such as those representing a hardware resource) include also a static process 208, compare Figure 42, for accessing and receiving signals from the physical device the object is representing.

The data base objects can however include data, which are accessed from traffic applications and are not visible in the managing system view of the object. The managed objects are really not implemented as real objects, but rather they constitute just views 210 of real implemented objects. The real objects 206 can be considered as resource objects. A resource object is thus an object which includes functionality for both management and traffic management, compare Figure 42.

Each resource object 206 includes a set of operations, which constitute a management view of the object. The generic agent 212 accesses the management view of the respective object. These management views constitute together the management information model 214. This model 214 is thus a view of the underlying complete information model 216.

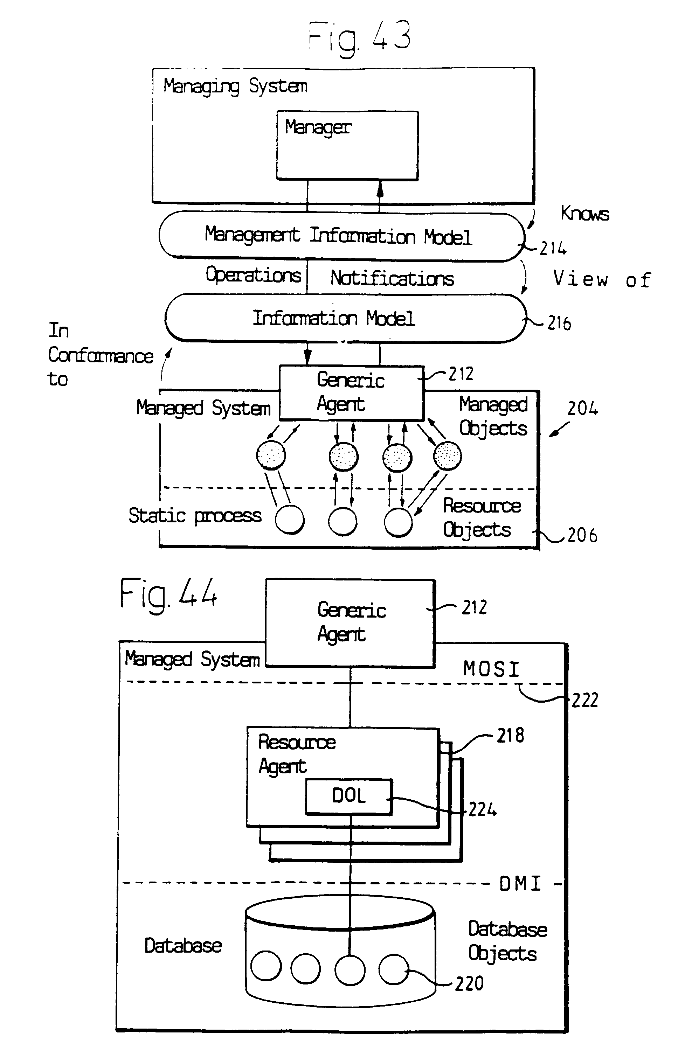

Each managed object is of a special type. The object types define common properties for all objects of this type, i.e. attributes, methods, relations and consistency rules. For each object type there is a resource agent 218 (Figure 44) which includes the logic for this object type. Each instance of an object type is represented by a data base object 220, which includes the persistent data values of the instance. For each managed object there is thus a resource agent 218 and a data base object 220 (together with among other things static processes).

This appears from Figure 44. The generic agent 212 accesses the resource agent 218 via the MOSI interface 222 (Managed Object Service Interface). This interface terminates operations defined in the management information model. The resource agent 218 is made an object instance. The resource agent DOL logic 224 accesses the instance data base object via a DMI interface 226 (Database Management Interface).

The solution involves a certain machine interpretable language for specifiying persistent objects with properties - established within the areas of conceptual modelling and object orientation - as attributes, methods and relations, and includes also the above described pre and end conditions.

In the description below and the explanation in greater detail of the pre and end conditions syntax i.a. are used which do not constitute part of an existing language but are only used here to clarify the principles by means of examples. Here used pseudo syntax appear from the earlier described Figures 30-40 and from Figure 45. The description below repeats partly what has been said above with reference to Figure 30-40, although more generalised.

The example in Figure 45 specifies an object type denominated AnObject, line 1. It includes three persistent attributes: attrl, attr2 and attr3 (i.e. attributes the values of which are stored in a data base). The types of values which these attributes can accept are Atype, Integer and Integer, 4-6, respectively. Further AnObject includes two methods, denominated ml and m2. These methods have each an argument of the types ArgType and AnotherArgType, respectively, lines 9-10. The method m2 returns a value of the type AreturnType, line 10.

Further AnObject in Figure 45 has a precondition which specifies that the value of attr2 must equal the value of attr3 when the method should be executed, line 13. The end condition states that the value of attr2 always must be greater than or equal to the value of attr3, line 16. This is a limitation which must not be violated when a transaction is performed on the data base.

The object type AnObject in Figure 45 shows simple examples of pre and end conditions. Slightly more complicated examples on end conditions are present when the condition relates to more related object types. This can be illustrated with an example, which inco-operates two object types: ResourceA and ResourceB (dependences between these two objects are largly similar to dependences between Trunk and Port in Figure 41.)

Wtih reference to Figure 46, which shows the specification of ResourceA, this object type includes two state attributes: admState and opState. The attribute admState states if an object is in operation or not, line 23, while opState on the other side states if the object is operative or not, line 24. There is also a so called reference attribute Bref. Such reference attributes implement data base relations between objects. All instances of ResourceA in the data base will include a reference to its related ResourceB instance in the attribute Bref, line 25.

The precondition in Figure 46 states that for removing an instance of ResorceA, admState must equal locked (which means that the object must not be used), line 32. The end condition in Figure 46 states that an instance of ResourceA can only be in operation (admState = unlocked) if it is related to a resourceB object, line 35.

The specification of resourceB is found in Figure 47. It includes, i.a., a reference attribute, Aref, which constitutes the inverse of Bref in resourceA, line 45. As appears from Figure 47 ResourceB has the same preconditions as ResourceA, line 52.

As has been mentioned above there are end conditions which relate both to ResourceA and ResourceB. These end conditions can be considered as dependences between the two object types. One such dependence relates to a subsystem including several object types.

In Figure 48 a dependence scheme is specified, which specifies end conditions related to ResourceA and ResourceB. The first condition states that an object of type ResourceA can not be "unlocked" if its related ResourceB object is "locked", lines 62 and 63. The second condition states that if the value of opState in a ResourceB object is deactivated the value of opState in the corresponding ResourceA object must not be activated, lines 65 and 66.

In Figure 49 a conception model is shown, which illustrates relations between end/preconditions and those concepts on which they are applicable. Figure 49 should speak for itself without a more detailed explanation of the separate blocks.

The semantics of pre and end conditions must be clear and unambiguous. Here the exact definitions of these concepts will now be given. An end condition is specified in a management information model. The end condition states a static consistency rule, which must not be violated in a managed system, which is adapted to the management information model. More exactly an end condition is applicable to the data base of the managed system. An end condition relates to object instances and their attribute values, which are stored in the data base, compare Figure 49.

As has been mentioned earlier an end condition can for example state a dependence between attribute values. Another example is the cardinality between attributes and data base relations, i.e. limitations related to the number of values of an attribute. It can also be limitations related to the number of instances of an object type.

A data base which must be adapted to a specific end condition, which states a certain limitation, may thus never pass into a state, which violates this limitation. State transitions of data bases appear when operations update stored information.

Updating operations are performed in transactions. A transaction consists of a sequence of operations. The transaction can however be considered as being atomic, in a way that either all operations are performed or none. This is achieved by commit and back rolling operations. The transaction is only performed if each operation is successful. If anything goes wrong during the transaction it is rolled back (i.e. all operations are unmade).

It must thus be guaranteed that the data base takes a consistent state when a transaction is finished. A transaction treats only copies of the data objects and the real objects are not updated before the transaction is committed. This means that the consistency rules may be violated temporarily during the transaction. When the transaction is to be committed no violation of limitations must, however, occur.

A precondition states a rule which must be fullfilled when a specific operation shall be performed, compare Figure 49. More exactly, the data base must be in a state where the rule is fullfilled before the transaction starts.

Preconditions can e.g. be used to limit the sequence of operations on the data base. Limitations of state transitions can also be expressed.

Here follows now a description in greater detail of how implementation mechanisms can be specified.

As concerns end conditions, there are, as has been described earlier, two alternative principles for implementation. One alternative is consistency checks in transactions, which are executed before the transaction is committed. Only if no end condition is violated is the transaction committed, otherwise it is rolled back.

The other alternative solution is automatic correction measures. This can be performed with triggered operations. More exactly, the operations are triggered at specific occasions, e.g. when a specific attribute has been updated.

The specifications in Figure 50 illustrate how these alternative implementation mechanisms can be specified. The first end condition - related to the attribute admState in respective object - is specified for implementation with consistency checks before the transactions are committed, lines 73-77.

The second end condition is specified to be partly performed with automatic corrections. When deactivated is assigned to opState in ResourceB the operation is propagated to opState in ResourceA. When activated is assigned to opState in ResourceB a consistency check must however be made, lines 79-79.

If a completely automatic implementation of the end conditions in Figure 50 is desired the implementation is somewhat more complicated. The attribute opState in ResourceA can be considered as a deriveable attribute, which depends both of the internal state of resourceA and the state of ResourceB. Figure 51 illustrates how opState in ResourceA can be specified as a derived attribute, lines 92-95. The value of opState is calculated from the values of two other attributes: internalOpState and ResourceBstate. The attribute ResourceBstate is a mapping of opState in ResourceB. Each time the value of opState in ResourceB object is changed it should thus be propagated along to ResourceBstate in the related ResourceA object, lines 117, 118. This can be specified in the dependence scheme of ResourceAandB shown in Figure 52.

Here follows now a description in greater detail of how the mechanisms for maintenance of the end and preconditions can be implemented in C++. The implementation can be generated automatically from the above just described specifications for implementation mechanisms.

First the end conditions will be treated.

The implementation of consistency checks is compiled in the respective object type. This means that each object is capable to check all limitations related to objects. The consistency checks of an object should be performed each time a transaction has manipulated the object, before the transaction is committed.

In Figure 53 the steps of the transaction are shown. First all operations are performed according to 250. Then all objects which have been manipulated must perform a consistency check, according to 252. If no cosistency limitation is violated the transaction is finished, 254, otherwise it is rolled back, 256. All updating operations must be made before the consistency checks are performed.

For showing the automatically generated implementation of the consistency checks the example in Figure 46 can be used. If no rules for maintenance of a specific end condition is specified the implementation should at default perform a consistency check. The end condition in ResourceA in Figure 46 should thus be implemented with a consistency check. The automatically generated implementation code is shown in C++. The object type ResourceA is thus compiled to a class in C++. The declaration file for this class is shown in Figure 54.

The class in Figure 54 is, in fact, an implementation of a resource agent. By calling the static method open (line 134), with a value of the main key as parameter, this resource agent can be instanciated to a data base object. For each persistent attribute in the resource object (admState, opState and Bref), there are both a write and a read method to write and read the values of the attribute in the data base object, to which the resource agent has been instanciated.

That of interest in Figure 54 in this context is the method in line 137. This is a method called before the transaction is committed for checking the consistency rules. The implementation of this method is found in Figure 55. When end conditions related to several related objects are concerned (as in Figure 48), the consistency check must be performed in each object.

Triggered operations and propagations will now be described.

To illustrate how the implementation of automatic corrections can be generated we can use the specification in Figure 50. Line 82 states that the value of opState in ResourceB should be propagated to opState in ResourceA when deactivated is assigned to opState. The declaration file of ResourceB is found in Figure 56. That mainly of interest are the methods setOpState and propagateOpState, lines 198 and 203 respectively. Figure 57 shows the implementation of these methods.

As appears from Figure 57 the method propagateOpState in the method setOpState is called when the attribute opState is changed from activated to deactivated. This implies that propagateOpState is triggered at state transitions from activated to deactivated. This triggered operation transfers the new value of OpState to the related ResourceA object.

A precondition is a condition which must ve valid when a specific operation should be performed. Opposite to end conditions preconditions must be determined before the operation in question is performed in the transaction. Preconditions can thus hardly be maintained with automatic correction measures, and thus they can only be implemented with consistency checks. Another difference in relation to end conditions is that preconditions must access the original attribute values stored in the data base, instead of the copy in the transaction.

In Figure 58 the algorithm at the performance of the operations in a transaction is illustrated. As appears from Figure 58 at 260, the transaction is rolled back when a precondition is violated.

In Figure 59 a declaration file is shown generated from the specification in Figure 46. The specification in Figure 59 includes a method for evaluation of the precondition related to the deleteObject operation (line 268). This method should be triggered when the deleteObject operation is to be performed.

Figure 60 shows the automatically generated implementation of the methods deleteObject and deleteObjectCondition in ResourceA. In deleteObject the method deleteObjectCondition is called before the object really is removed. The method deleteObjectCondition reads the value of admState stored in the data base with the method admStateDatabaseValue. If the condition is that admState must be locked an exception is thrown. When the exception is catched the transaction is rolled back. If, on the other hand, the condition is valid the object instance is erased from the data base by the method reallyDelete, which is called in deleteObject.

The advantages of described above are the following.

The implementation code can be generated automatically (compiled) from the same clarifying specification, which is interpreted by the managing system. Modifications of the specification of the model will automatically update both the view of the operator of the information base and the implementation of the same. The managed system can therefore be guaranteed to perform in the way predicted by the managing system.

Each consistency limitation needs only be specified once. The implementation is encapsulated together with the attributes included in the consistency limitation. No consistency checks need to be implemented in those applications which access the data. The maintenance of the code is therefore greatly simplified.

All consistency limitations in a system are implemented in a uniform way. Reliable code is generated automatically.

The implementation strategy is decentralised in such a way that dependences.are kept by communication between the included objects. There is no centralised functionality, which must be modified at the introduction of new object types - with new dependences - to a managed system.

The objects included in a transaction can temporarily - before the performance of the consistency checks - be in an inconsistent state. This simplifies the management of the data base in such a way that the order of operations in a transaction is of less importance.

The solution described here facilitates the implementation of dependences between system components, which are developed uncoordinatedly. It is even possible to apply the solution on system components compiled and loaded separately.

## Claims

1. A management network with at least one managing system (2) and at least one managed system (10) for telecom or open systems, in which said managed system includes physical and/or logical resources, which by the managing system (2) are considered and managed as managed objects in the form of data images of the resources, and in which the managing system (2) for its operations directed towards the managed system utilizes an information model (8) of the managed system, which includes a description of all managed objects adapted to the mode of operation of the managing system, characterized by the management network including, besides the managed system, a generic manager (4) and a representation (6) of the management information model, where the performance of the generic manager (4) during operation is determined by this model representation (6).

2. A management network according to claim 1, characterized by the representation (6) of the management information model being introduced into the managed system (10) and being available for the generic manager.

3. A management network according to claim 1 or 2, characterized in that the generic manager is able to make decisions from the model representation (6) with respect to which operations that can be made towards a managed system (10), and to decide which operations that are required to achieve a desired state of the managed system.

4. A management network according to any of the preceding claims, characterized by the representation of the management information model (132) being implemented in the managed system as instances of a special class (128) of managed objects (124,126), and an instance of this special class being created for each class (120,122) of managed objects.

5. A management network according to claim 4, characterized by the generic manager (42) knowing the interface of said special object class (128), which constitutes a representation of the management information model.

6. A management network according to claim 4, characterized by the generic manager (42) having a user interface (44), which is generated during operation based upon the representation of the information model, and in which all managed objects of the managed system can be inspected and modified.

7. A management network according to claim 5, characterized by the generic manager (42) during operation managing changes in the management information model of the managed system by transforming a representation of the management information model of the managed system to a representation internal for the generic manager.

8. A management network according to any of the preceding claims, characterized in that for each class of managed objects there is a resource agent (52) in which termination of the protocol of the managing system (40) unique for the class of managed objects is performed, said resource agent (52) including three parts, namely
a subagent (61) of an auxiliary interface (58) for managed objects, which is a generic interface provided by all subagents, and the operations of which are create, erase, write, read and method, and in which operations always are directed towards a specific instance of a class of managed objects,
a data object logic (62), and/or
a complimentary logic (64),
the resource agent (52) further providing the auxiliary interface (58) for managed objects as external interfaces, and has two internal interfaces, viz. one interface for data objects and one interface (66) for the complimentary logic (64).

9. A management network according to claim 8, characterized by the resource agent (52) definition including the specification of managed objects, which has been obtained by definition of the properties of the managed objects in a machine interpretable language, and defines the properties of the resource agent constituting the managed object.

10. A management network according to claim 9, characterized by the implementation of the auxiliary interface (58) being generated from the managed object specification.

11. A management network with at least one managing system and at least one managed system (10) for telecom or open systems, in which said managed system includes physical and/or logical resources, which by the managing system (2) are considered and managed as managed objects in the form of data images of the resources, and in which the managing system (2) for its operations directed towards the managed system utilizes an information model (8) of the managed system, which includes a description of all managed objects adapted to the mode of operation of the managing system, characterized in that a representation of the management information model (132) is implemented in the managed system (10) as instances of a special class (128) of managed objects.

12. A management network with at least one managing system (2) and at least one managed system (10) for telecom or open systems, in which said managed system includes physical and/or logical resources, which by the managing system (2) are considered and managed as managed objects in the form of data images of the resources, and in which the managing system (2) for its operations directed towards the managed system utilizes an information model (8) of the managed system, which includes a description of all managed objects adapted to the mode of operation of the managing system, characterized by a generic manager (4;Fig.15), which includes functions which enable an external user to interact with the managed system (10) by manipulating representations (6) of the management information model (8) of the managed system.

13. A management network according to any of claims 1-12, characterized by the representation (6) of the management information model being used for interpreting and packing of data structures from and to the managed system (10), respectively.

14. A management network according to any of claims 1-13, characterized by the management information model and the implementation of managed objects being made with the same specification in a machine interpretable language, the specifications of the managed objects in this language together forming the specification of the management information model.

15. A management network according to claim 14, characterized by the specification of a managed object being transferred to a compiler, from which implementation code and an arbitrary intermediate format for representation of the management information model of the managed object is generated.

16. A management network according to claim 15, characterized by the implementation being packed together with the intermediate format to a load package, which is loaded into the managed system, the intermediate format being used during this loading process for adding the management information model of the managed object to the system management information model.

17. A management network according to claim 16, characterized in that for installation of objects of said special class in the managed system an installation method is executed in the implementation code of managed objects which involves that an instance of said special class is installed.

18. A management network according to any of claims 1-11 or 13-17, characterized in that a generic manager by means of a representation of the management information model may interact with a managed system in such a way that concepts in the management information model are transformed to representations and structures suitable for use by an external user, such as a window managing system, a data base manager etc.

19. A management network according to claim 18, characterized in that the generic manager, on a software basis, creates an internal representation of the management information model of the managed system by interpreting and presenting it for an external user which in this way can interact with the managed system.

20. A management network according to claim 19, characterized by the generic manager using the internal representation of the management information model of the managed system to maintain the model consistency by analysing the interactive pattern of an external user and to take or suggest operations towards the managed system.

21. A management network according to claim 19 or 20, characterized in that the generic manager by interpreting the internal representation of the management information model of the managed system is able to conduct/suggest operations according to consistency rules, for an interactive user of the generic manager.

22. A management network according to any of claims 1-11 or 18-21, characterized by the generic manager including functions which enable an external user to interact with the managed system by manipulating representations of the management information model of the managed system.

23. A management network according to claim 12 or 22, characterized by the generic manager (88) including an external representation unit (90) which transforms representations internal to the generic manager to representations adapted to a user external with respect to the generic manager, e.g. an external user of a window managing system, a data base manager etc.

24. A management network according to any of claims 12, 22 or 23, characterized by the generic manager (88) including a model interpreter (92) which can interpret the generic representation of the management information model of the managed system.

25. A management network according to any of claims 12, 22-24, characterized by the generic manager including a function which by interpreting an internal representation of the management information model can create one or several syntactically and semantically correct operations which can be directed towards the managed system.

26. A management network according to any of claims 12, 22-25, characterized by the generic manager including access interfaces to the managed system which are used for receiving events in the managed system and for directing operations to the same, and for transferring and accessing the representation of the management information model stored in the managed system.

27. A management network according to any of claims 12, 22-26, characterized by the generic manager including access interfaces, which enable the same generic representations of the management information model of the managed system to be transmitted over different types of communication networks.

28. A management network according to any of claims 12, 22-27, characterized by the generic manager being implemented according to a model, which includes functionality to enable the use of the representation of the management information model of the managed system and to make transformations to representations suitable for an external user without supplying any extra/new information to the representation of the management information model beyond that specified and stored in the managed system.

29. A management network with at least one managing system and at least one managed system for telecom or open systems, in which said managed system includes physical and/or logical resources, which by the managing system are considered and managed as managed objects in the form of data images of the resources, and in which the managing system for its operations directed towards the managed system utilizes an information model of the managed system, which includes a description of all managed objects, adapted to the mode of operation of the managing system,
characterized in that
the management information model has a specification in the form of a decidable representation of the management information model, said management information model defining
- which states of interest from a management point of view the managed system can assume,
- which operations that can be accepted by the managed system,
- which operations that can be directed towards a managed system in a specific state,
- which state the managed system achieves when it is subjected to a specific operation,
wherein by a decidable representation is meant that the above definitions are expressed in a machine interpretable language, allowing the above properties of them to be decided from the specification, and in that,
for defining the state of a certain managed system, there are defined
- instances of managed objects able to exist,
- attributes of these objects and
- possible values of these attributes.

30. A management network according to claim 29, characterized in that a unique set of allowed operations in a specific state of said managed system is specified by means of preconditions and/or end conditions, which constitute a logical part of the class of managed objects, or a group of such classes, where a precondition states in which state the managed system must be in order for an operation to be accepted, and an end condition states in which state the managed system should be after an updating transaction.

31. A management network according to claim 30, characterized in that end conditions are defined so as to be satisfied according to either of two strategies, namely:
- the managing system updates the managed system in such a way that the end conditions are maintained, in which case a manager has the responsibility for the condition being satisfied, and if the manager ignores this responsibility, the managed system rejects the updating transaction, or
- the managed system maintains the set limitations by automatically carrying through necessary secondary updates in order to satisfy the end condition.

32. A management network according to claim 30 or 31, characterized in that binding of the end conditions may be made to methods and create-operations.

33. A management network according to any of claims 30-32, characterized by end conditions being specified in a management information model of a managed system, in which the end condition states a static consistency limitation, which must not be violated in the managed system, the end condition being applicable to a data base in the managed system and relates to object instances and their attribute values, which are being stored in the data base.

34. A management network according to any of claims 30-33, characterized by end conditions being able to state
dependences between attribute values,
cardinality of attributes and data base relationships, i.e. limitations relating to the number of values of an attribute,
limitations related to the number of instances of an object type.

35. A management network according to any of claims 30-34, characterized by preconditions stating a limitation of the state of a data base of the managed system, which limitation must be fulfilled before a transaction with a specific operation in the data base starts.

36. A management network according to any of claims 31-35, characterized in that at use
of the first strategy consistency controls are performed in the transaction before it is committed, the transaction being carried through only if no end conditions are violated, otherwise it is rolled back,
of the second strategy, automatic correction measures are taken in the transaction before it is committed, as e.g. when a specific attribute has been updated.

## Patentansprüche

1. Managementnetz mit wenigstens einem Managingsystem (2) und wenigstens einem gemanagten System (10) für Telecom oder offene Systeme, in dem das gemanagte System physikalische und/oder logische Ressourcen umfaßt, die von dem Managingsystem (2) als gemanagte Objekte in der Form von Datenabbildungen der Ressourcen betrachtet und gemanagt werden, und in dem das Managingsystem (2) für seine an das gemanagte System hin gerichtete Operationen ein Informationsmodell (8) des gemanagten Systems verwendet, das eine Beschreibung von sämtlichen gemanagten Objekten ausgelegt auf den Betriebsmodus des Managingsystems umfaßt, dadurch gekennzeichnet, daß das Managementnetz abgesehen von dem gemanagten System einen generischen Manager (4) und eine Darstellung (6) des Managementinformationsmodells umfaßt, wobei das Betriebsverhalten des generischen Managers (4) während eines Betriebs durch diese Modelldarstellung (6) bestimmt wird.

2. Managementnetz nach Anspruch 1, dadurch gekennzeichnet, daß die Darstellung (6) des Managementinformationsmodells in das gemanagte System (10) eingeführt und für den generischen Manager verfügbar ist.

3. Managementnetz nach Anspruch 1 oder 2, dadurch gekennzeichnet, daß der generische Manager aus der Modelldarstellung (6) Entscheidungen dahingehend treffen kann, welche Operationen in Richtung auf ein gemanagtes System (10) hin durchgeführt werden können, und bestimmen kann, welche Operationen zur Erreichung eines gewünschten Zustands des gemanagten Systems benötigt werden.

4. Managementnetz nach einem der vorangehenden Ansprüche, dadurch gekennzeichnet, daß die Darstellung des Managementinformationsmodells (132) in dem gemanagten System als Exemplare einer speziellen Klasse (128) von gemanagten Objekten (124, 126) implementiert wird und ein Exemplar dieser speziellen Klasse für jede Klasse (120, 122) von gemanagten Objekten erzeugt wird.

5. Managementnetz nach Anspruch 4, dadurch gekennzeichnet, daß der generische Manager (42) die Schnittstelle der speziellen Objektklasse (128), die eine Darstellung des Managementinformationsmodells bildet, kennt.

6. Managementnetz nach Anspruch 4, dadurch gekennzeichnet, daß der generische Manager (42) eine Benutzerschnittstelle (44) aufweist, die während eines Betriebs auf Grundlage der Darstellung des Informationsmodells erzeugt wird und in der sämtliche gemanagten Objekte des gemanagten Systems untersucht und modifiziert werden können.

7. Managementnetz nach Anspruch 5, dadurch gekennzeichnet, daß der generische Manager (42) während eines Betriebs Änderungen in dem Managementinformationsmodell des gemanagten Systems managt, indem eine Darstellung des Managementinformationsmodells des gemanagten Systems in eine für den generischen Manager interne Darstellung transformiert wird.

8. Managementnetz nach einem der vorangehenden Ansprüche, dadurch gekennzeichnet, daß für jede Klasse von gemanagten Objekten ein Ressourcenagent (52) vorhanden ist, in dem ein Abschluß des Protokolls des Managementsystems (40) einzigartig für die Klasse von gemanagten Objekten ausgeführt wird, wobei der Ressourcenagent (52) drei Teile umfaßt, nämlich:
einen Unteragenten (61) einer Hilfsschnittstelle (58) für gemanagte Objekte, die eine von allen Unteragenten bereitgestellte generische Schnittstelle ist und deren Operationen ein Erzeugen, ein Löschen, ein Schreiben, ein Lesen und ein Verfahren sind, und in der Operationen immer in Richtung auf ein spezifisches Exemplar einer Klasse von gemanagten Objekten gerichtet werden;
eine Datenobjektlogik (62); und/oder
eine komplementäre Logik (64);
wobei der Ressourcenagent (52) ferner die Hilfsschnittstelle (58) für gemanagte Objekte als externe Schnittstellen bereitstellt und zwei interne Schnittstellen aufweist, nämlich eine Schnittstelle für Datenobjekte und eine Schnittstelle (66) für die komplementäre Logik (64).

9. Managementnetz nach Anspruch 8, dadurch gekennzeichnet, daß die Definition des Ressourcenagenten (52) die Spezifikation von gemanagten Objekten umfaßt, die durch eine Definition der Eigenschaften der gemanagten Objekte in einer Maschinen-interpretierbaren Sprache erhalten worden ist, und die die Eigenschaften des Ressourcenagenten, der das gemanagte Objekt bildet, definiert.

10. Managementnetz nach Anspruch 9, dadurch gekennzeichnet, daß die Implementierung der Hilfsschnittstelle (58) aus der Spezifikation des gemanagten Objekts erzeugt wird.

11. Managementnetz mit wenigstens einem Managementsystem und wenigstens einem gemanagten System (10) für Telecom oder offene Systeme, in dem das gemanagte System physikalische und/oder logische Ressourcen umfaßt, die von dem Managingsystem (2) als gemanagte Objekte in der Form von Datenabbildungen der Ressourcen betrachtet und gemanagt werden, und in dem das Managingsystem (2) für seine an das gemanagte System hin gerichtete Operationen ein Informationsmodell (8) des gemanagten Systems verwendet, das eine Beschreibung von sämtlichen gemanagten Objekten ausgelegt auf den Betriebsmodus des Managingsystems umfaßt, dadurch gekennzeichnet, daß eine Darstellung des Managementinformationsmodells (132) in dem gemanagten System (10) als Exemplare einer speziellen Klasse (128) von gemanagten Objekten implementiert ist.

12. Managementnetz mit wenigstens einem Managingsystem (2) und wenigstens einem gemanagten System (10) für Telecom oder offene Systeme, in dem das gemanagte System physikalische und/oder logische Ressourcen umfaßt, die von dem Managingsystem (2) als gemanagte Objekte in der Form von Datenabbildungen der Ressourcen betrachtet und gemanagt werden, und in denen das Managingsystem (2) für seine an das gemanagte System hin gerichtete Operationen ein Informationsmodell (8) des gemanagten Systems verwendet, das eine Beschreibung von sämtlichen gemanagten Objekten ausgelegt auf den Betriebsmodus des Managingsystems umfaßt, gekennzeichnet durch einen generischen Manager (4; Fig. 15), der Funktionen umfaßt, die einem externen Benutzer ermöglichen, mit dem gemanagten System 810) in Wechselwirkung zu treten, indem Darstellungen (6) des Managementinformationsmodells (8) des gemanagten Systems manipuliert werden.

13. Managementnetz nach einem der Ansprüche 1-12, dadurch gekennzeichnet, daß die Darstellung (6) des Managementinformationsmodells zum Interpretieren und Verpacken von Datenstrukturen von dem gemanagten bzw. an das gemanagte System (10) verwendet wird.

14. Managementnetz nach einem der Ansprüche 1-13, dadurch gekennzeichnet, daß das Managementinformationsmodell und die Implementierung von gemanagten Objekten mit der gleichen Spezifikation in einer Maschinen-interpretierbaren Sprache gemacht wird, wobei die Spezifikationen der gemanagten Objekte in dieser Sprache zusammen die Spezifikation des Managementinformationsmodells bilden.

15. Managementnetz nach Anspruch 14, dadurch gekennzeichnet, daß die Spezifikation eines gemanagten Objekts an einen Compiler transferiert wird, von dem ein Implementierungscode und ein beliebiges Zwischenformat zur Darstellung des Managementinformationsmodells des gemanagten Objekts erzeugt wird.

16. Managementnetz nach Anspruch 15, dadurch gekennzeichnet, daß die Implementierung zusammen mit dem Zwischenformat in ein Ladepaket verpackt wird, das in das gemanagte System geladen wird, wobei das Zwischenformat während dieses Ladeprozesses zum Hinzufügen des Managementinformationsmodells des gemanagten Objekts zu dem Systemmanagementinformationsmodell verwendet wird.

17. Managementnetz nach Anspruch 16, dadurch gekennzeichnet, daß für eine Installation von Objekten der speziellen Klasse in dem gemanagten System ein Installationsverfahren in dem Implementierungscode von gemanagten Objekten ausgeführt wird, das beinhaltet, daß ein Exemplar der speziellen Klasse installiert wird.

18. Managementnetz nach einem der Ansprüche 1-11 oder 13-17, dadurch gekennzeichnet, daß ein generischer Manager mittels einer Darstellung des Managementinformationsmodells mit einem gemanagten System in solcher Weise in Wechselwirkung treten kann, daß Konzepte in dem Managementinformationsmodell in Darstellungen und Strukturen, die zur Verwendung von einem externen Benutzer, beispielsweise einem Fenstermanagingsystem, einem Datenbankmanager etc., geeignet sind, transformiert werden.

19. Managementnetz nach Anspruch 18, dadurch gekennzeichnet, daß der generische Manager auf einer Softwarebasis eine interne Darstellung des Managementinformationsmodells des gemanagten Systems erzeugt, indem er es für einen externen Benutzer, der in dieser Weise mit dem gemanagten System in Wechselwirkung treten kann, interpretiert und darstellt.

20. Managementnetz nach Anspruch 19, dadurch gekennzeichnet, daß der generische Manager die interne Darstellung des Managementinformationsmodells des gemanagten Systems zur Aufrechterhaltung der Modellkonsistenz verwendet, indem er die interaktiven Muster eines externen Benutzers analysiert und Operationen in Richtung auf das gemanagte System hin vornimmt oder vorschlägt.

21. Managementnetz nach Anspruch 19 oder 20, dadurch gekennzeichnet, daß der generische Manager durch Interpretieren der internen Darstellung des Managementinformationsmodells des gemanagten Systems Operationen in Abhängigkeit von Konsistenzregeln, für einen interaktiven Benutzer des generischen Managers, ausführen/vorschlagen kann.

22. Managementnetz nach einem der Ansprüche 1-11 oder 18-21, dadurch gekennzeichnet, daß der generische Manager Funktionen umfaßt, die einem externen Benutzer ermöglichen, mit dem gemanagten System in Wechselwirkung zu treten, indem Darstellungen des Managementinformationsmodells des gemanagten Systems manipuliert werden.

23. Managementnetz nach Anspruch 12 oder 22, dadurch gekennzeichnet, daß der generische Manager (88) eine externe Darstellungseinheit (90) umfaßt, die Darstellungen, die für den generischen Manager intern vorgesehen sind, in Darstellungen transformiert, die auf einen in bezug zu dem generischen Manager externen Benutzer ausgelegt sind, z.B. einen externen Benutzer eines Fenstermanagingsystems, einen Datenbankmanager etc.

24. Managementnetz nach einem der Ansprüche 12, 22 oder 23, dadurch gekennzeichnet, daß der generische Manager (88) einen Modellinterpretierer (92) umfaßt, der die generische Darstellung des Managementinformationsmodells des gemanagten Systems interpretieren kann.

25. Managementnetz nach einem der Ansprüche 12, 22-24, dadurch gekennzeichnet, daß der generische Manager eine Funktion umfaßt, die durch Interpretieren einer internen Darstellung des Managementinformationsmodells eine oder mehrere syntaktisch und semantisch korrekte Operationen erzeugen kann, die auf das gemanagte System hin gerichtet werden können.

26. Managementnetz nach einem der Ansprüche 12, 22-25, dadurch gekennzeichnet, daß der generische Manager Zugriffschnittstellen auf das gemanagte System umfaßt, die zum Empfangen von Ereignissen in dem gemanagten System und zum Richten von Operationen auf dieses und zum Transferieren der und zum Zugriff auf die Darstellung des in dem gemanagten System gespeicherten Managementinformationsmodells verwendet werden.

27. Managementnetz nach einem der Ansprüche 12, 22-26, dadurch gekennzeichnet, daß der generische Manager Zugriffsschnittstellen umfaßt, die den gleichen generischen Darstellungen des Managementinformationsmodells des gemanagten Systems ermöglichen, über unterschiedliche Typen von Kommunikationsnetzen übertragen zu werden.

28. Managementnetz nach einem der Ansprüche 12, 22-27, dadurch gekennzeichnet, daß der generische Manager gemäß einem Modell implementiert ist, welches eine Funktionalität umfaßt, um die Verwendung der Darstellung des Managementinformationsmodells des gemanagten Systems zu ermöglichen und Transformationen, die für einen externen Benutzer geeignet sind, durchzuführen, ohne irgendwelche zusätzliche/neue Information zu der Darstellung des Managementinformationsmodells über diejenige hinaus, die in dem gemanagten System spezifiziert und gespeichert ist, zuzuführen.

29. Managementnetz mit wenigstens einem Managingsystem und wenigstens einem gemanagten System für Telecom oder offene Systeme, in dem das gemanagte System physikalische und/oder logische Ressourcen umfaßt, die von dem Managingsystem als gemanagte Objekte in der Form von Datenabbildungen der Ressourcen betrachtet und gemanagt werden, und in dem das Managingsystem für seine auf das gemanagte System hin gerichteten Operationen ein Informationsmodell des gemanagten Systems verwendet, das eine Beschreibung von sämtlichen gemanagten Objekten angepaßt auf den Betriebsmodus des Managingsystems umfaßt, dadurch gekennzeichnet, daß das Managementinformationsmodell eine Spezifikation in der Form einer entscheidbaren Darstellung des Managementinformationsmodells aufweist, wobei das Managementinformationsmodell definiert
- welche Zustände von Interesse das gemanagte System von einem Management-Standpunkt her annehmen kann,
- welche Operationen von dem gemanagten System angenommen werden können,
- welche Operationen an ein gemanagtes System in einem spezifischen Zustand gerichtet werden können,
- welchen Zustand das gemanagte System annimmt, wenn es einer spezifischen Operation ausgesetzt wird,
wobei mit einer entscheidbaren Darstellung gemeint ist, daß die obigen Definitionen in einer Maschinen-interpretierbaren Sprache ausgedrückt werden, was ermöglicht, daß deren obige Eigenschaften aus der Spezifikation entschieden werden können, und daß
zum Definieren des Zustands eines bestimmten gemanagten Systems
- Exemplare von gemanagten Objekten, die existieren können,
- Attribute von diesen Objekten, und
- mögliche Werte von diesen Attributen,
definiert werden.

30. Managementnetz nach Anspruch 29, dadurch gekennzeichnet, daß ein einzigartiger Satz von zulässigen Operationen in einem spezifischen Zustand des gemanagten Systems mit Hilfe von Vorbedingungen und/oder Endbedingungen spezifiziert wird, die einen logischen Teil der Klasse von gemanagten Objekten, oder einer Gruppe von derartigen Klassen, bilden, wobei eine Vorbedingung angibt, in welchem Zustand sich das gemanagte System befinden muß, damit eine Operation angenommen werden kann, und wobei eine Endbedingung angibt, in welchem Zustand sich das gemanagte System nach einer aktualisierenden Transaktion befinden sollte.

31. Managementnetz nach Anspruch 30, dadurch gekennzeichnet, daß die Endbedingungen so definiert sind, daß sie von einer von zwei Strategien erfüllt werden, nämlich:
- das Managingsystem aktualisiert das gemanagte System in solcher Weise, daß die Endbedingungen beibehalten werden, wobei in diesem Fall ein Manager die Verantwortung dafür trägt, daß die Bedingung erfüllt wird, und wenn der Manager diese Verantwortung ignoriert, das System die aktualisierende Transaktion zurückweist, oder
- das gemanagte System hält die Satzbeschränkungen aufrecht, indem es automatisch erforderliche sekundäre Aktualisierungen ausführt, um die Endbedingung zu erfüllen.

32. Managementnetz nach Anspruch 30 oder 31, dadurch gekennzeichnet, daß ein Binden der Endbedingungen an Verfahren und Erzeugungs-Operationen durchgeführt werden kann.

33. Managementnetz nach einem der Ansprüche 30-32, dadurch gekennzeichnet, daß Endbedingungen in einem Managementinformationsmodell eines gemanagten Systems spezifiziert werden, in dem die Endbedingung eine statische Konsistenzbeschränkung angibt, die in dem gemanagten System nicht verletzt werden darf, wobei die Endbedingung auf eine Datenbank in dem gemanagten System anwendbar ist und sich auf Objektexemplare und deren Attributwerte bezieht, die in der Datenbank gespeichert sind.

34. Managementnetz nach einem der Ansprüche 30-33, dadurch gekennzeichnet, daß Endbedingungen
Abhängigkeiten zwischen Attributwerten,
eine Kardinalität von Attributen und Datenbank-Beziehungen, d.h. Beschränkungen hinsichtlich der Anzahl von Werten eines Attributs, und
Beschränkungen in bezug auf die Anzahl von Exemplaren eines Objekt-Typs,
angeben können.

35. Managementnetz nach einem der Ansprüche 30-34, dadurch gekennzeichnet, daß Vorbedingungen eine Beschränkung des Zustands einer Datenbank des gemanagten Systems angeben, wobei diese Beschränkung erfüllt sein muß, bevor eine Transaktion mit einer spezifischen Operation in der Datenbank startet.

36. Managementnetz nach einem der Ansprüche 31-35, dadurch gekennzeichnet, daß bei einer Verwendung
der ersten Strategie Konsistenzsteuerungen in der Transaktion ausgeführt werden, bevor sie durchgeführt wird, wobei die Transaktion nur durchgeführt wird, wenn keine Endbedingungen verletzt werden, ansonsten wird sie zurückgerollt,
der zweiten Strategie automatische Korrekturmaßnahmen in der Transaktion vorgenommen werden, bevor sie durchgeführt wird, z.B. wenn ein spezifisches Attribut aktualisiert worden ist.

## Revendications

1. Réseau de gestion comportant au moins un système de gestion (2) et au moins un système géré (10) pour des systèmes de télécommunications ou des systèmes ouverts, dans lequel ledit système géré comprend des ressources physiques et/ou logiques, qui sont considérées et gérées par le système de gestion (2) comme des objets gérés sous la forme d'images de données des ressources, et dans lequel le système de gestion (2) pour ses opérations portant sur le système géré utilise un modèle d'information (8) du système géré, qui comprend une description de tous les objets gérés adaptée au mode de fonctionnement du système de gestion, caractérisé en ce que le réseau de gestion comprend, à côté du système géré, un gestionnaire générique (4) et une représentation (6) du modèle d'information de gestion, la performance, en fonctionnement, du gestionnaire (4) générique étant déterminée par cette représentation (6) de modèle.

2. Réseau de gestion selon la revendication 1, caractérisé en ce que la représentation (6) du modèle d'information de gestion est introduite dans le système géré (10) et est disponible pour le gestionnaire générique.

3. Réseau de gestion selon la revendication 1 ou 2, caractérisé en ce que le gestionnaire générique est capable de prendre des décisions à partir de la représentation (6) de modèle en ce qui concerne celles des opérations qui peuvent porter sur un système géré (10), et de décider quelles sont les opérations qui sont nécessaires pour atteindre un état voulu du système géré.

4. Réseau de gestion selon l'une quelconque des revendications précédentes, caractérisé en ce que la représentation du modèle (132) d'information de gestion est implantée dans le système géré comme des cas particuliers d'une classe spéciale (128) d'objets gérés (124, 126), et en ce qu'un cas particulier de cette classe spéciale est créé pour chaque classe (120, 122) d'objets gérés.

5. Réseau de gestion selon la revendication 4, caractérisé en ce que le gestionnaire générique (42) connaît l'interface de ladite classe spéciale (128) d'objets, qui constitue une représentation du modèle d'information de gestion.

6. Réseau de gestion selon la revendication 4, caractérisé en ce que le gestionnaire générique (42) comporte une interface d'utilisateur (44), qui est engendrée en fonctionnement en se basant sur la représentation du modèle d'information, et en ce que tous les objets gérés du système géré peuvent être examinés et modifiés.

7. Réseau de gestion selon la revendication 5, caractérisé en ce que le gestionnaire générique (42), en fonctionnement, gère des changements dans le modèle d'information de gestion du système géré en transformant une représentation du modèle d'information de gestion du système géré en une représentation interne au gestionnaire générique.

8. Réseau de gestion selon l'une quelconque des revendications précédentes, caractérisé en ce que, pour chaque classe d'objets gérés, il y a un agent (52) de ressources, unique pour la classe d'objets gérés, dans lequel s'effectue la terminaison du protocole du système de gestion (40), ledit agent (52) de ressources comprenant trois éléments, à savoir :
un sous-agent (61) d'une interface auxiliaire (58) pour des objets gérés, qui est une interface générique fournie par tous les sous-agents et dont les opérations sont la création, l'effacement, l'écriture, la lecture et le procédé, et dans lequel des opérations portent toujours sur un cas particulier spécifique d'une classe d'objets gérés ;
une logique (62) d'objet de données ; et/ou
une logique complémentaire (64) ;
l'agent (52) de ressources fournissant en outre l'interface auxiliaire (58) pour des objets gérés, comme des interfaces externes, et comportant deux interfaces internes, à savoir, une interface pour les objets de données et une interface (66) pour la logique complémentaire (64).

9. Réseau de gestion selon la revendication 8, caractérisé en ce que la définition de l'agent (52) de ressources comprend la spécification d'objets gérés, qui a été obtenue par la définition des propriétés des objets gérés dans un langage interprétable en machine, et qui définit les propriétés de l'agent de ressources constituant l'objet géré.

10. Réseau de gestion selon la revendication 9, caractérisé en ce que l'implantation de l'interface auxiliaire (58) est engendrée à partir de la spécification des objets gérés.

11. Réseau de gestion comportant au moins un système de gestion et au moins un système géré (10) pour des systèmes de télécommunications ou des systèmes ouverts, dans lequel ledit système géré comprend des ressources physiques et/ou logiques, qui sont considérées et gérées par le système de gestion (2) comme des objets gérés sous la forme d'images de données des ressources, et dans lequel le système de gestion (2) pour ses opérations portant sur le système géré utilise un modèle d'information (8) du système géré, qui comprend une description de tous les objets gérés adaptée au mode de fonctionnement du système de gestion, caractérisé en ce qu'une représentation du modèle (132) d'information de gestion est implantée dans le système géré (10) comme des cas particuliers d'une classe spéciale (128) d'objets gérés.

12. Réseau de gestion comportant au moins un système de gestion (2) et au moins un système géré (10) pour des systèmes de télécommunications ou des systèmes ouverts, dans lequel ledit système géré comprend des ressources physiques et/ou logiques, qui sont considérées et gérées par le système de gestion (2) comme des objets gérés sous la forme d'images de données des ressources, et dans lequel le système de gestion (2) pour ses opérations portant sur le système géré utilise un modèle (8) d'information du système géré, qui comprend une description de tous les objets gérés adaptée au mode de fonctionnement du système de gestion, caractérisé par un gestionnaire générique (4 ; figure 15), qui comprend des fonctions qui permettent à un utilisateur externe d'interagir avec le système géré (10) par la manipulation de représentations (6) du modèle (8) d'information de gestion du système géré.

13. Réseau de gestion selon l'une quelconque des revendications 1 à 12, caractérisé en ce que l'on utilise la représentation (6) du modèle d'information de gestion pour interpréter et compacter des structures de données, respectivement, provenant du, et destinées au, système géré (10).

14. Réseau de gestion selon l'une quelconque des revendications 1 à 13, caractérisé en ce que le modèle d'information de gestion et l'implantation des objets gérés se font avec la même spécification dans un langage interprétable en machine, les spécifications des objets gérés dans ce langage formant ensemble la spécification du modèle d'information de gestion.

15. Réseau de gestion selon la revendication 14, caractérisé en ce que la spécification d'un objet géré est transférée à un compilateur, à partir duquel on engendre un code d'implantation et un format intermédiaire arbitraire pour la représentation du modèle d'information de gestion de l'objet géré.

16. Réseau de gestion selon la revendication 15, caractérisé en ce que l'implantation est condensée conjointement avec le format intermédiaire en un progiciel chargé, qui est chargé dans le système géré, le format intermédiaire étant utilisé pendant cette opération de chargement pour ajouter le modèle d'information de gestion de l'objet géré au modèle d'information de gestion de système.

17. Réseau de gestion selon la revendication 16, caractérisé en ce que, pour l'installation d'objets de ladite classe spéciale dans le système géré, on met en oeuvre un procédé d'installation dans le code d'implantation des objets gérés, qui implique l'installation d'un cas particulier de ladite classe spéciale.

18. Réseau de gestion selon l'une quelconque des revendications 1 à 11 ou 13 à 17, caractérisé en ce qu'un gestionnaire générique au moyen d'une représentation du modèle d'information de gestion peut interagir avec un système géré, d'une façon telle que des concepts du modèle d'information de gestion soient transformés en des représentations et des structures appropriées pour utilisation par un utilisateur externe, comme un système de gestion à fenêtres, un gestionnaire de base de données, etc.

19. Réseau de gestion selon la revendication 18, caractérisé en ce que le gestionnaire générique, sur une base logicielle, crée une représentation interne du modèle d'information de gestion du système géré, en l'interprétant et le présentant pour un utilisateur externe qui, de cette façon, peut interagir avec le système géré.

20. Réseau de gestion selon la revendication 19, caractérisé en ce que le gestionnaire générique utilise la représentation interne du modèle d'information du système géré pour maintenir la cohérence de modèle en analysant la configuration d'interaction d'un utilisateur externe et pour effectuer ou suggérer des opérations portant sur le système géré.

21. Réseau de gestion selon la revendication 19 ou 20, caractérisé en ce que le gestionnaire générique, en interprétant la représentation interne du modèle d'information de gestion du système géré, est capable de conduire/suggérer des opérations en fonction de règles de cohérence, pour un utilisateur interactif du gestionnaire générique.

22. Réseau de gestion selon l'une quelconque des revendications 1 à 11, ou 18 à 21, caractérisé en ce que le gestionnaire générique inclut des fonctions qui permettent à un utilisateur externe d'interagir avec le système géré en manipulant des représentations du modèle d'information de gestion du système géré.

23. Réseau de gestion selon la revendication 12 ou 22, caractérisé en ce que le gestionnaire générique (88) comprend un module (90) de représentation externe qui transforme des représentations internes au gestionnaire générique en des représentations adaptées à un utilisateur externe par rapport au gestionnaire générique, par exemple, un utilisateur externe d'un système de gestion à fenêtres, un gestionnaire de base de données, etc.

24. Réseau de gestion selon l'une quelconque des revendications 12, 22 ou 23, caractérisé en ce que le gestionnaire générique (88) comprend un interprète (92) de modèle qui peut interpréter la représentation générique du modèle d'information de gestion du système géré.

25. Réseau de gestion selon l'une quelconque des revendications 12, 22 à 24, caractérisé en ce que le gestionnaire générique comprend une fonction qui, en interprétant une représentation interne du modèle d'information de gestion, peut créer une ou plusieurs opérations, correctes du point de vue de la syntaxe et de la sémantique, qui peuvent être portées sur le système géré.

26. Réseau de gestion selon l'une quelconque des revendications 12, 22 à 25, caractérisé en ce que le gestionnaire générique comprend des interfaces d'accès au système géré qui sont utilisées pour recevoir des événements dans le système géré et pour orienter des opérations vers celui-ci, et pour transférer les, et accéder aux, représentations du modèle d'information de gestion mémorisé dans le système géré.

27. Réseau de gestion selon l'une quelconque des revendications 12, 22 à 26, caractérisé en ce que le gestionnaire générique comprend des interfaces d'accès, qui permettent aux mêmes représentations génériques du modèle d'information de gestion du système géré d'être transmises sur des types différents de réseaux de communications.

28. Réseau de gestion selon l'une quelconque des revendications 12, 22 à 27, caractérisé en ce que le gestionnaire générique est implanté selon un modèle, qui comprend une fonctionnalité pour permettre l'utilisation de la représentation du modèle d'information de gestion du système géré, et pour apporter des transformations à des représentations appropriées pour un utilisateur externe sans délivrer aucune information supplémentaire/nouvelle à la représentation du modèle d'information de gestion au-delà de ce qui est spécifié et mémorisé dans le système de gestion.

29. Réseau de gestion comportant au moins un système de gestion et au moins un système géré pour des systèmes de télécommunications ou des systèmes ouverts, dans lequel ledit système géré comprend des ressources physiques et/ou logiques, qui sont considérées et gérées par le système de gestion comme des objets gérés sous la forme d'images de données des ressources, et dans lequel le système de gestion pour ses opérations portant sur le système géré utilise un modèle d'information du système géré, qui comprend une description de tous les objets gérés adaptée au mode de fonctionnement du système de gestion ;
caractérisé en ce que :
le modèle d'information de gestion possède une spécification sous la forme d'une représentation susceptible de décision du modèle d'information de gestion, ledit modèle d'information de gestion définissant :
- quels états, intéressants du point de vue gestion, le système géré peut prendre,
- quelles opérations peuvent être acceptées par le système géré,
- quelles opérations peuvent porter sur un système géré dans un état spécifique,
- quel état le système géré atteint lorsqu'il est soumis à une opération spécifique,
dans lequel, par représentation susceptible de décision, on entend que les définitions ci-dessus sont exprimées dans un langage interprétable en machine, permettant de soumettre à décision leurs propriétés ci-dessus à partir de la spécification ; et
pour définir l'état d'un certain système géré, on définit :
- des cas particuliers d'objets gérés susceptibles d'exister ;
- des attributs de ces objets ; et
- des valeurs possibles de ces attributs.

30. Réseau de gestion selon la revendication 29, caractérisé en ce que l'on spécifie un unique ensemble d'opérations allouées dans un état spécifique dudit système géré, au moyen de conditions préalables et/ou de conditions finales, qui constituent une partie logique de la classe d'objets gérés, ou d'un groupe de telles classes, où des états de conditions préalables dans lesquels l'état du système géré doit se trouver afin qu'une opération soit acceptée, et où des états de conditions finales dans lesquels l'état du système géré se trouverait après une transaction de mise à jour.

31. Réseau de gestion selon la revendication 30, caractérisé en ce que des conditions finales sont définies de manière à être satisfaites suivant l'une ou l'autre de deux stratégies ; à savoir :
- le système de gestion met à jour le système géré de façon telle que les conditions finales soient conservées, auquel cas un gestionnaire a la responsabilité que la condition soit satisfaite, et si le gestionnaire ignore cette responsabilité, le système géré rejette la transaction de mise à jour ; ou bien
- le système géré conserve les limitations fixées en effectuant automatiquement des mises à jour secondaires nécessaires afin de satisfaire la condition finale.

32. Réseau de gestion selon la revendication 30 ou 31, caractérisé en ce que l'on peut lier les conditions finales à des procédés et à des opérations de création.

33. Réseau de gestion selon l'une quelconque des revendications 30 à 32, caractérisé en ce que des conditions finales sont spécifiées dans un modèle d'information de gestion d'un système géré, dans lequel la condition finale fixe une limitation statique de cohérence, qui ne doit pas être violée dans le système géré, la condition finale étant applicable à une base de données du système géré et se rapportant à des cas particuliers d'objets et à leurs valeurs d'attribut, qui sont en cours de mémorisation dans la base de données.

34. Réseau de gestion selon l'une quelconque des revendications 30 à 33, caractérisé en ce que les conditions finales sont capables de fixer :
des dépendances entre des valeurs d'attribut ;
la cardinalité d'attributs et de relations de base de données, c'est-à-dire, des limitations se rapportant au nombre de valeurs d'un attribut ;
des limitations se rapportant au nombre de cas particuliers d'un type d'objet.

35. Réseau de gestion selon l'une quelconque des revendications 30 à 34, caractérisé en ce que des conditions préalables fixent une limitation de l'état d'une base de données du système géré, laquelle limitation doit être satisfaite avant que démarre une transaction avec une opération spécifique dans la base de données.

36. Réseau de gestion selon l'une quelconque des revendications 31 à 35, caractérisé en ce que, lors de l'utilisation :
de la première stratégie, on effectue des commandes de cohérence dans la transaction avant qu'elle soit engagée, la transaction étant exécutée seulement si aucune condition finale n'est violée, autrement, elle est renvoyée en arrière ;
de la seconde stratégie, on prend des mesures de correction automatique dans la transaction avant qu'elle soit engagée, comme par exemple lorsqu'un attribut spécifique a été mis à jour.
